# EUROPEAN PATENT SPECIFICATION

(11) **EP 2 497 061 B1**
(45) Date of publication and mention of the grant of the patent: **27.02.2019**
(21) Application number: 10828394.6
(22) Date of filing: 02.11.2010
(51) Int. Cl.: G06Q 50/00, G06F 21/10, G06Q 30/00

(54) **LICENSE MANAGEMENT SYSTEM, SALES MANAGEMENT APPARATUS, AND LICENSE MANAGEMENT APPARATUS**
LIZENZENVERWALTUNGSSYSTEM, VERTRIEBSVERWALTUNGSVORRICHTUNG UND LIZENZENVERWALTUNGSVORRICHTUNG
SYSTÈME DE GESTION DE LICENCES, APPAREIL DE GESTION DE VENTES, ET APPAREIL DE GESTION DE LICENCES

(30) Priority: 04.11.2009 JP 2009253499
(43) Date of publication of application: 12.09.2012
(73) Proprietor: Ricoh Company, Ltd., Tokyo 143-8555 (JP)
(72) Inventor: ITO, Tatsuo, Tokyo 143-8555 (JP)
(74) Representative: White, Duncan Rohan
(86) International application number: PCT/JP2010/069877
(87) International publication number: WO 2011/055836

(56) References cited:
- JP-A- 2004 234 668
- JP-A- 2006 216 041
- JP-A- 2008 539 503
- JP-A- 2009 251 977
- US-A1- 2002 184 515
- US-A1- 2004 039 916
- US-A1- 2006 170 759
- US-A1- 2009 037 287

## Description

### TECHNICAL FIELD

The present invention relates to a license management system, a sales management system, a license management apparatus, a license management method, and a program. More specifically, the present invention relates to a license management system, a sales management system, a license management apparatus, a license management method, and a program that manage licenses of programs used in apparatuses.

### BACKGROUND ART

Recently, there are some image forming apparatuses mainly called a multi-functional apparatus or a facsimile machine for which new programs can be developed and in which such developed program can be installed. If the installation of such programs or the licenses that allow the use of the programs can be provided for users in accordance with the usage forms of the users, it would become convenient for the users and it would be expected that the suppliers of the programs may improve/create business chances as well.

For example, Patent Document 1 discloses a license management method and the like capable of limiting the image forming apparatus capable of using a program to predetermined image forming apparatuses. According to a technique of Patent Document 1, it is possible to change a billing amount in accordance with the number of apparatuses using the program. Further, it is also possible to prevent an unauthorized use of a program caused by illegal copying of the program.

Another example, patent document US 2004/039916 shows a system and method for multi-tiered license management and distribution using networked clearinghouses

On the other hand, there may be some cases where a group of programs are offered, each of the programs being capable of being distributed separately and the licenses of the programs capable of being managed separately. In such cases, it is general practice that the allowable combinations of the programs are determined in a unified manner.

[Patent Document 1] Japanese Laid-Open Patent Application No. 2008-016013

### DISCLOSURE OF THE INVENTION

### PROBLEMS TO BE SOLVED BY THE INVENTION

However, for example, when a selling area of programs is across the countries in the world or when there are various types of the users, there is a possibility that a set of the programs effective for the users differs depending on the selling areas and types of the users.

The present invention is made in light of the above circumstances, and may provide a license management system, a sales management system, a license management apparatus, a license management method, and a program capable of improving a degree of freedom in combinations of programs as a distribution unit.

### MEANS FOR SOLVING THE PROBLEMS

According to an aspect of the present invention, a license management system includes a sales management apparatus and a license management apparatus that manages a license of a program sold by the sales management apparatus. Further, the sales management apparatus includes a transmission unit that displays a list of information of one or plural programs, and transmits a registration request to the license management apparatus, the registration request including configuration information of a group including a combination of plural the programs selected from the programs on the list of information; a product information storage unit; a product registration unit that receives an input of license information corresponding to the group, associates the license information with the group, and stores the associated license information together with the group into the product information storage unit as product information; and a sales management unit that transmits a list of the product information in response to a reception of a purchase request for purchasing the programs, the product information being stored in the product information storage unit. Further, the license management apparatus includes a group information storage unit that stores the configuration information included in the registration request.

In such a license management apparatus, it may become possible to improve a degree of freedom in combinations of programs as a distribution unit.

### EFFECTS OF THE PRESENT INVENTION

According to an embodiment of the present invention, it may become possible to improve a degree of freedom in combinations of programs as a distribution unit.

### BRIEF DESCRIPTION OF THE DRAWINGS

FIG. 1 is a drawing showing an exemplary configuration of an equipment management system according to a first embodiment of the present invention;
FIG. 2 is a drawing showing an exemplary configuration of a sales package;
FIG. 3 is a drawing showing an exemplary configuration of sales package information;
FIG. 4 is another drawing showing an exemplary configuration of sales package information;
FIG. 5 is a drawing showing an exemplary functional configuration of the equipment management system according to the embodiment of the present invention;
FIG. 6 is a drawing showing an exemplary hardware configuration of a license management server according to an embodiment of the present invention;
FIG. 7 is a drawing showing an exemplary hardware configuration of an image forming apparatus according to an embodiment of the present invention;
FIG. 8 is a sequence diagram illustrating a registration process of product information by a sales server;
FIG. 9 is a drawing showing an exemplary configuration of a sales site master;
FIG. 10 is a drawing showing an exemplary configuration of a product information editing screen;
FIG. 11 is a drawing showing an exemplary configuration of a sales package master;
FIG. 12 is a drawing showing an exemplary configuration of a group ID master;
FIG. 13 is a drawing showing an exemplary configuration of a group name master;
FIG. 14 is a drawing showing an exemplary configuration of a product master in the sales server;
FIG. 15 is a sequence diagram illustrating a processing procedure of a generating-process of generating a group;
FIG. 16 is a drawing showing an example of a group editing screen;
FIG. 17 is a drawing illustrating a processing procedure of a registration process of registering a group;
FIG. 18 is a sequence diagram illustrating a processing procedure when a product is sold;
FIG. 19 is a flowchart illustrating a processing procedure of a product key generating process by a product key issue section;
FIG. 20 is a drawing showing an exemplary configuration of a license management table;
FIG. 21 is a drawing showing an exemplary configuration of a product key;
FIG. 22 is a sequence diagram illustrating a processing procedure when a sales package is installed;
FIG. 23 is a drawing showing a display example of a function expansion setting menu screen;
FIG. 24 is a drawing showing a display example of a product key input screen;
FIG. 25 is a drawing showing a display example of an error screen when a product key is invalid;
FIG. 26 is a drawing showing an exemplary configuration of a component management table;
FIG. 27 is a drawing showing a display example of an installation list screen;
FIG. 28 is a drawing showing an exemplary configuration of an installation information management table;
FIG. 29 is a drawing showing a display example of a confirmation screen when there is no problem in dependence relationship;
FIG. 30 is a drawing showing a display example of the confirmation screen when a dependent package can be simultaneously installed;
FIG. 31 is a drawing showing a display example of the confirmation screen when a dependent package cannot be simultaneously installed;
FIG. 32 is a drawing showing an exemplary configuration of a license file;
FIG. 33 is a flowchart illustrating a processing procedures of a verification process of verifying the dependence relationship by a component server section and a processing procedure of a generating process of generating confirmation screen data;
FIG. 34 is a drawing showing an exemplary configuration of a dependence relationship management table;
FIG. 35 is a flowchart illustrating a processing procedures of a license file generating process by an activation server section;
FIG. 36 is a flowchart illustrating a processing procedure of an installation process of a sales package by the image forming apparatus;
FIG. 37 is a flowchart illustrating a calculation process of a license expiration date (valid period);
FIG. 38 is a sequence diagram illustrating a processing procedure of a license update process;
FIG. 39 is a drawing showing a display example of an expansion function management screen;
FIG. 40 is a drawing showing a display example of a license acquisition/update screen;
FIG. 41 is a sequence diagram illustrating a processing procedure of a sales package update process;
FIG. 42 is a drawing showing a display example of an update list screen;
FIG. 43 is a sequence diagram illustrating a processing procedure of a deactivation process;
FIG. 44 is a flowchart illustrating a processing procedure of an automatic execution process of executing the deactivation in the image forming apparatus;
FIG. 45 is a sequence diagram illustrating a processing procedure of a group editing process;
FIG. 46 is a drawing illustrating a processing procedure of a group modification process;
FIG. 47 is a drawing illustrating a processing procedure of a group deletion process;
FIG. 48 is a drawing showing an exemplary configuration of an equipment management system according to a second embodiment of the present invention;
FIG. 49 is a drawing showing an exemplary functional configuration of an equipment management apparatus according to the second embodiment of the present invention;
FIG. 50 is a sequence diagram illustrating a processing procedure of installation and activation of the sales package according to the second embodiment of the present invention;
FIG. 51 is sequence diagram illustrating a processing procedure of uninstallation and deactivation of the sales package according to the second embodiment of the present invention;
FIG. 52 is a drawing showing an exemplary configuration of an equipment management system according to a third embodiment of the present invention; and
FIG. 53 is a drawing showing an exemplary functional configuration of an equipment management apparatus according to the third embodiment of the present invention.

### DESCRIPTION OF THE REFERENCE NUMERALS

1, 2 EQUIPMENT MANAGEMENT SYSTEM
10 LICENSE MANAGEMENT SERVER
11 ACTIVATION SERVER SECTION
15 COMPONENT SERVER SECTION
20 SALES SERVER
21 PRODUCT REGISTRATION SECTION
22 SALES MANAGEMENT SECTION
23 PRODUCT MASTER
24 PRODUCT KEY TRANSMISSION SECTION
30 DOWNLOAD SERVER
31 DOWNLOAD PROCESSING SECTION
32 SALES PACKAGE MANAGEMENT SECTION
40 IMAGE FORMING APPARATUS
41 CONTROLLER
42 SCANNER
43 PRINTER
44 MODEM
45 OPERATION PANEL
46 NETWORK INTERFACE
47 SD CARD SLOT
50 USER PC
51 WEB BROWSER
60 EQUIPMENT MANAGEMENT APPARATUS
65 WEB CLIENT TERMINAL
100 DRIVE DEVICE
101 RECORDING MEDIUM
102 AUXILIARY STORAGE DEVICE
103 MEMORY DEVICE
104 CPU
105 INTERFACE DEVICE
111 SALES SERVER COOPERATION SECTION
112 PRODUCT KEY ISSUE SECTION
113 PRODUCT KEY VERIFICATION SECTION
115 LICENSE ISSUE SECTION
116 DEACTIVATION SECTION
117 SALES SERVER AUTHENTICATION SECTION
118 SALES SITE MASTER
119 SALES PACKAGE MASTER
120 GROUP ID MASTER
121 LICENSE MANAGEMENT TABLE
122 GROUP NAME MASTER
151 DEPENDENCE RELATIONSHIP DETERMINATION SECTION
152 INSTALLATION SUPPORT SECTION
153 PACKAGE UPDATE SUPPORT SECTION
154 COMPONENT MANAGEMENT SECTION
155 COMPONENT MANAGEMENT TABLE
411 CPU
412 RAM
413 ROM
414 HDD
421 INSTALLATION SECTION
422 LICENSE UPDATE SECTION
423 PACKAGE UPDATE SECTION
424 LICENSE CHECK SECTION
425 DEACTIVATION SECTION
426 UI CONTROL SECTION
427 INSTALLATION INFORMATION MANAGEMENT TABLE
428 WEB SERVER SECTION
611 UI CONTROL SECTION
612 PACKAGE INFORMATION ACQUISITION SECTION
613 EQUIPMENT INFORMATION ACQUISITION SECTION
614 INSTALLATION DESTINATION RECEIVING SECTION
615 VALIDITY CHECK SECTION
616 PACKAGE ACQUISITION SECTION
617 LICENSE ACQUISITION SECTION
618 INSTALLATION CONTROL SECTION
619 UNINSTALLATION DESTINATION DETERMINATION SECTION
620 DEACTIVATION CONTROL SECTION
621 UNINSTALLATION CONTROL SECTION
651 WEB BROWSER
B BUS

### BEST MODE FOR CARRYING OUT THE INVENTION

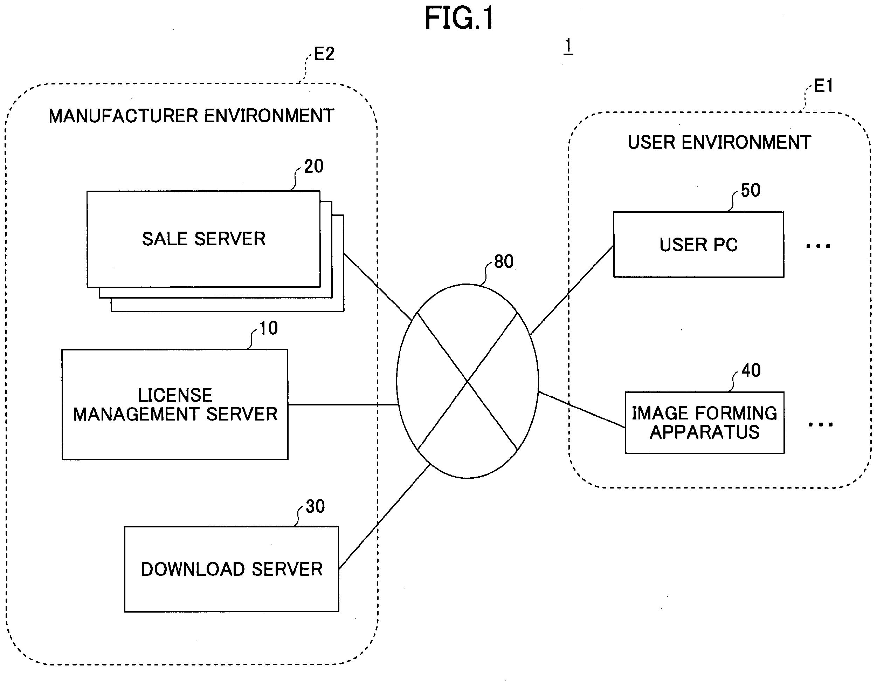

In the following, embodiments of the present invention are described with reference to the accompanying drawings. FIG. 1 illustrates an exemplary configuration of an equipment management system according to a first embodiment of the present invention. As shown in FIG. 1, an equipment management system 1 mainly includes two system environments: a user environment E1 and a manufacturer environment E2. The user environment E1 and the manufacturer environment E2 are connected to each other via a wide area network 80.

The user environment E1 is a system environment for a user (client) of an image forming apparatus 40 as an installation target apparatus. For example, the user environment E1 corresponds to a company or an office of the user of the image forming apparatus 40. The user environment E1 includes one or more image forming apparatuses 40 and one or more user PCs 50. The image forming apparatus 40 is a multi-function apparatus having plural functions as a printer, scanner, copier, facsimile machine and the like in a single chassis of the apparatus. However, the image forming apparatus 40 may have only one of those functions. It is assumed that the function of the image forming apparatus 40 can be expanded or the like by adding or updating a software component (hereinafter may be simplified as a "component"). The user PC 50 is used for performing a purchasing procedure for purchasing a component to be added to the image forming apparatus 40. The user-environment E1 may includes plural user environments depending on the number of users (the number of users per company or office).

On the other hand, the manufacturer environment E2 is a system environment of a seller side who sells a component to be added to the image forming apparatus 40. For example, the manufacturer environment E2 may be managed by the manufacturer of the image forming apparatus 40. The manufacturer environment includes a license management server 10, a sales server 20, and a download server 30. The sales server 20 is a computer that receives a purchase application for purchasing a component from the user environment E1, and corresponds to an example of a sales management apparatus according to this embodiment of the present invention. The sales servers 20 are disposed in each of sale areas (e.g., U.S.A., Europe, Japan, Asia excluding Japan and the like) where the image forming apparatuses 40 are sold, and receive the purchase applications from the user environment E1 belonging to the sales areas in charge of the corresponding sales servers 20.

The download server 30 is a computer that manages an entity of the component. The user environment E1 downloads the entity of the component from the download server 30, the component having been purchase applied (purchased). The license management server 10 is a computer that manages a license (use authority) of the component having been purchased.

According to this embodiment of the present invention, the component is distributed by a unit called a sales package. Namely, each sales package is separately distributed. Further, a set of plural sales packages (i.e., a combination of sales packages) may be a distribution unit as a set. In this embodiment of the present invention, the distribution unit having a set (combination) of plural sales packages is called a "group".

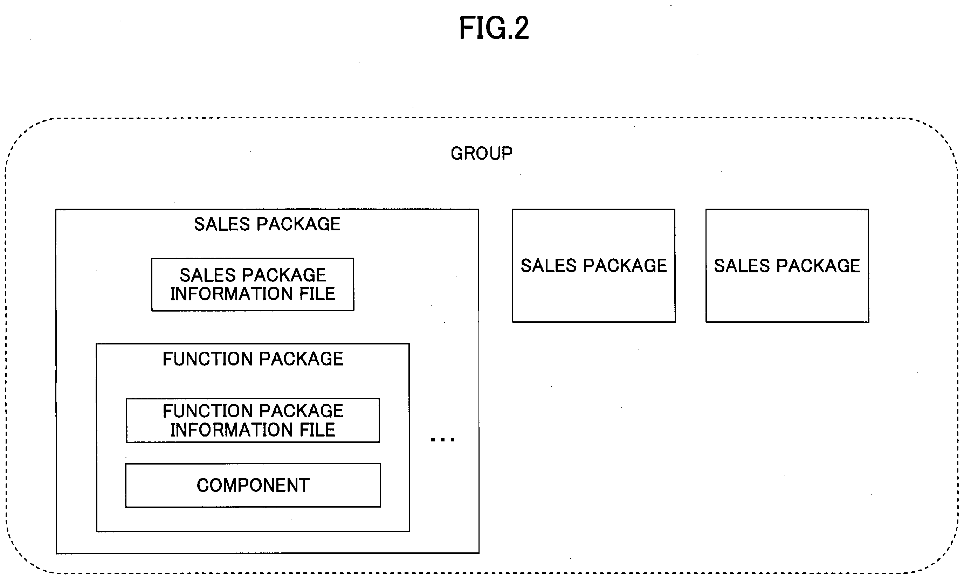

FIG. 2 shows an exemplary configuration of the sales package. As shown in FIG. 2, one sales package is provided as an archive file including one sales package information file and one or more function packages.

The sales package information file is a file storing attribute information of the sales package (sales package information).

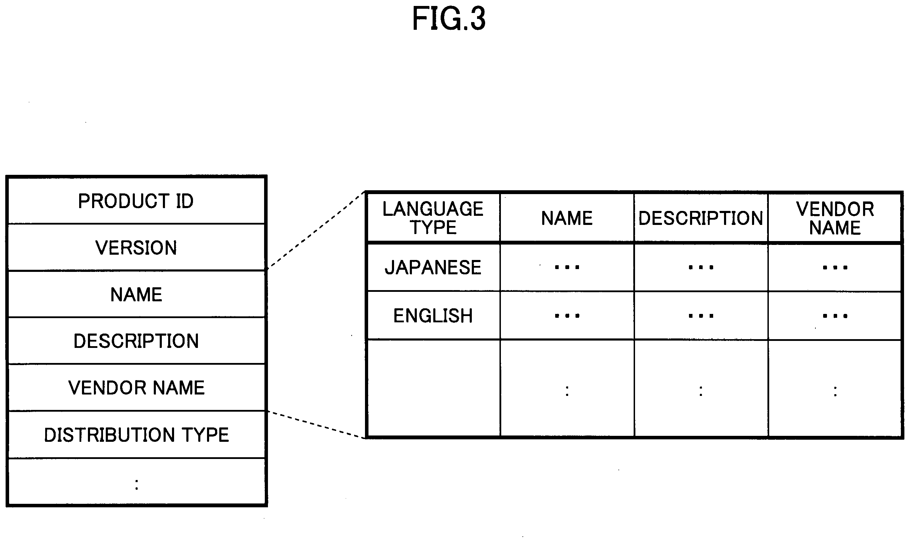

FIG. 3 shows an exemplary configuration of the sales package information. As shown-in FIG. 3, the sales package information includes a product ID, a version, a name, a description, a vendor name, a distribution type and the like.

The product ID refers to an identifier (product identifier) uniquely allocated to each of the sales packages and a function package. The version refers to a version number of the sales package. The description is about the sales package. The vendor name is the name of the vendor (developer) of the sales package. The name refers to the name of the sales package (sales package name). The distribution type refers to an information item indicating whether activation (authentication of the license) is necessary. When the activation is not necessary, the sales package may be used free of charge. Further, the data of the name, the description, and the vendor name are stored for each language type using character codes corresponding the language type. Namely, the data of the name, the description, and the vendors name are provided in many different languages in light of world-wide distribution of the sales packages.

Referring back to FIG. 2, the function package is a software package packaged by the function. One function package is provided as an archive file (e.g., JAR (Java (registered trade mark) Archive) file) including one function package information file and the entity of one component.

The function package information file refers to a file storing attribute information of the function package (function package information).

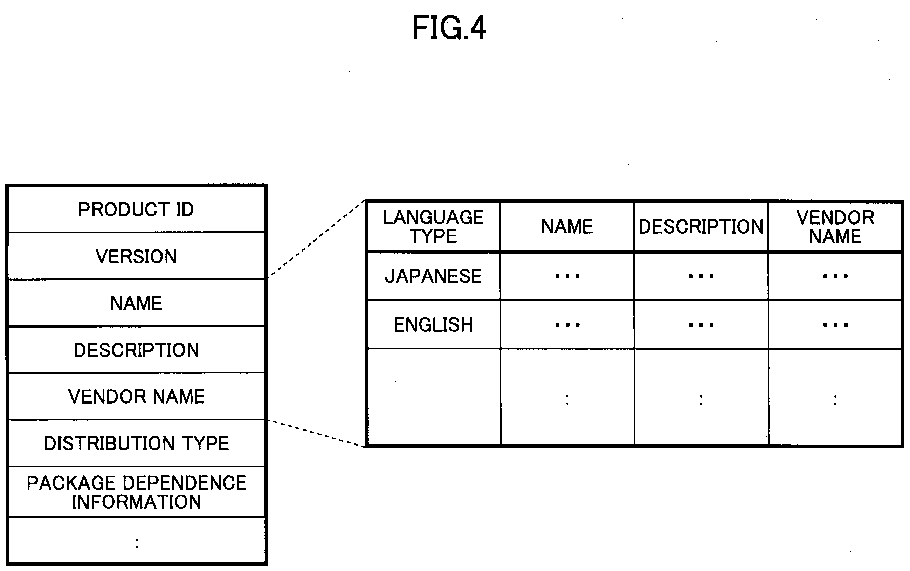

FIG. 4 shows an exemplary configuration of the function package information. As shown in FIG. 4, the function package information includes a product ID, a version, a name, a description, a vendor name, a distribution type, package dependence information and the like.

The product ID is for the function package. The version refers to a version number of the function package. The name refers to the name of the function package (function package name). The description is about the function package. The vendor name refers to the name of the vendor (developer) of the function package. The distribution type is an information item indicating whether the activation is necessary. When the activation is not necessary, the function package can be used free of charge. The package dependence information refers to the product ID of another function package on which the function package (this function package) depends (is used). One function package may depend on other plural function packages. Similar to the sales package information, regarding the function package information, the data of the name, the description, and the vendor name are stored for each language type using character codes corresponding the language type.

In FIG. 2, a case is described where one group consists of three (3) sales packages. Even when a sales package belongs to a group, the sales package may be separately (independently) distributed.

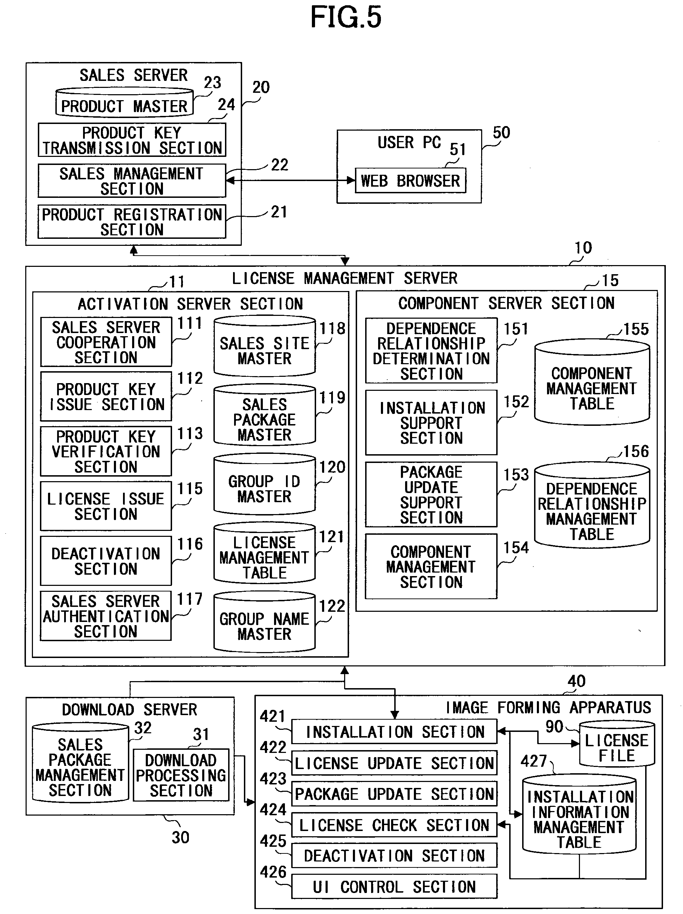

FIG. 5 shows an exemplary functional configuration of an equipment management system according to the first embodiment of the present invention. As shown in FIG. 5, the sales server 20 includes a product registration section 21, a sales management section 22, a product master 23, and a product key transmission section 24.

The product registration section 21 downloads a list of information of the sales packages centrally managed in the license management server 10, and registers product configuration information and the like input by an operator based on the list of information. Further, the product registration section 21 functions as a transmission means to transmit a registration request for registering group configuration information and the like to the license management server 10. From the user PC 50, the sales management section 22 receives a purchase application for purchasing a product having product information registered in the product master 23. Further, the sales management section 22 issues a product key corresponding to the purchase application to the license management server 10. The product key transmission section 24 transmits the issued product key to the user PC 50 as a response to the purchase application.

In this embodiment, the product refers to a concept including the sales package or the group and contents of the relevant license. Because of this feature, even in the same sales packages, if the contents of the license (license contents) (e.g., license type, license expiration date (valid period), and license volume number) differ, the same sales packages may be treated as a different products. In the following, information of the contents of the license is referred to as "license information".

Further, herein, the product key refers to an identifier uniquely issued (or allocated) whenever the product is purchased. The product key is used as the information identifying the license (use authority) for the sales package included in the product, and is also used as the information verifying a rightful purchaser of the product. Further, in this embodiment, the product ID and the product key are explicitly distinguished from each other. Namely, the product ID is used when determining whether the sales package as the product is the same or different, and the product key is used for distinguishing the act of purchasing the product. Therefore, whenever a product is purchased, different product keys are issued for the sales package having the same product ID.

The image forming apparatus 40 includes an installation section 421, a license update section 422, a package update section 423, a license check section 424, a deactivation section 425, a UI control section 426, an installation information management table 427 and the like.

In response to the input of the product key, the installation section 421 controls a series of processes for installing the sales package corresponding to the product key. For example, the installation section 421 sends a request to the license management server 10 so that the license management server 10 determines the validity of the dependence relationship of the function package included in the sales package to be installed. Further, the installation section 421 downloads the sales package to be installed from the download server 30, and acquires a license file 90 from the license management server 10, the license file 90 corresponding to the sales package to be installed.

The license file 90 is a file storing the data certifying the license for the sales package (i.e., the data for allowing the use of the sales package). Namely, the sales package (component) according to this embodiment of the present invention cannot be used in the image forming apparatus 40 simply by acquiring the entity of the sales package (component). The sales package becomes usable when the license file 90 is introduced into the image forming apparatus 40.

The license update section 422 controls a process (license update process) for updating (extending) the expiration date (valid period) of the license for the sales package having been installed in the image forming apparatus 40. The package update section 423 controls a process (sales package update process) for updating the version of the sales package having been installed in the image forming apparatus 40. The license check section 424 determines whether the use of the sales package can be used (continued) based on the license file 90 when the sales package is to be used. The deactivation section 425 performs the deactivation of the sales package having been installed in the image forming apparatus 40. Specifically, for example, the deactivation section 425 deletes the sales package to be deactivated and the license file 90 corresponding to the sales package. The UI control section 426 performs, for example, display control of the operation panel of the image forming apparatus 40. The installation information management table 427 is a table managing information of the sales package having been installed in the image forming apparatus 40, and is stored in a storage device of the image forming apparatus 40.

The license management server 10 includes an activation server section 11 and a component server section 15. The activation server section 11 includes a sales server cooperation section 111, a product key issue section 112, a product key verification section 113, a license issue section 115, a deactivation section 116, a sales server authentication section 117, a sales site master 118, a sales package master 119, a group ID master 120, a license management table 121, a group name master 122 and the like.

The sales server cooperation section 111 performs, for example, a process requested by the sales server 20, and a process corresponding to the information reported from the sales server 20. The product key issue section 112 generates the product key in response to the request from the sales management section 22 of the sales server 20. Further, the product key issue section 112'registers the generated product key and the information of the license identified by the product key in the license management table 121. The product key verification section 113 verifies the effectiveness of the product key input to the image forming apparatus 40 based on the license management table 121 and the like upon the download of the sales package and the like.

The license issue section 115 issues the license for the sales package. With the issue of the license, the license management table 121 is updated and the license file 90 is generated. In response to the deactivation request from the deactivation section 425 of the image forming apparatus 40, the deactivation section 116 releases the license which is the target of the request. The sales server authentication section 117 authenticates the sales server 20 by using the sales site master 118. The sales package master 119 registers the list of information of the sales packages. The group ID master 120 registers the association information (i.e., group configuration information) between the groups and the sales packages. The group name master 122 registers names of the groups (group names). Further, the sales site master 118, sales package master 119, the group ID master 120, the license management table 121, and the group name master 122 are stored in a storage device of the license management server 10.

The component server 15 includes a dependence relationship determination section 151, an installation support section 152, a package update support section 153, a component management section 154, a component management table 155, a dependence relationship management table 156 and the like. The dependence relationship determination section 151 determines, for example, whether the function package, on which the function package included in the sales package to be installed or to be updated depends, has already been installed in the image forming apparatus 40. More specifically, in response to a request from the installation section 421 of the image forming apparatus 40, the dependence relationship determination section 151 determines whether the dependence relationship of the function package included in the sales package to be installed is resolved by, for example, the function package having already been installed in the image forming apparatus 40, by referring to the component management table 155 and the dependence relationship management table 156. The installation support section 152 performs a process of supporting the installation of the sales package to the image forming apparatus 40. For example, the installation support section 152 generates HTML data (installation list screen data) to display a screen so that the sales package to be installed can be selected, and provides the generated installation list screen data to the installation section 421 of the image forming apparatus 40. The package update support section 153 performs a process of supporting the update (version update) of the sales package in the image forming apparatus 40. For example, the package update support section 153 generates HTML data (update list screen data) to display a screen so that the sales package to be updated can be selected, and provides the generated update list screen data to the package update section 423 of the image forming apparatus 40. The component management section 154 periodically acquires the sales package stored in the sales package management section 32 of the download server 30, and registers the configuration information of the sales package and the dependence information of each function package included in the sales package and the like in the component management table 155 or the dependence relationship management table 156. Further, the component management table 155 and the dependence relationship management table 156 are stored in a storage device of the license management server 10.

When each of the function packages has the information of its dependence destination and the license management server 10 registers the dependence relationships between the function packages in the dependence relationship management table 156 based on the information of the dependence destinations of the function packages, it becomes possible to precisely register the information of complicated dependence relationships. For example, when the function package manufactured by the manufacturer of the function package (or a sales package including the function package) is disposed in the download server 30, the license management server 10 acquires the dependence relationship between the function packages from the download server 30, and automatically registers the dependence relationship between the function packages in the dependence relationship management table 156. Therefore, for example, even when the manager of the sales site is different from the manufacturer of the function packages or the like, it may not be necessary for the manager of the sales site to recognize the dependence relationship between the function packages. As a result, for example, it may become possible to promote the manufacture of the function packages by a third party vendor and increase sales chances.

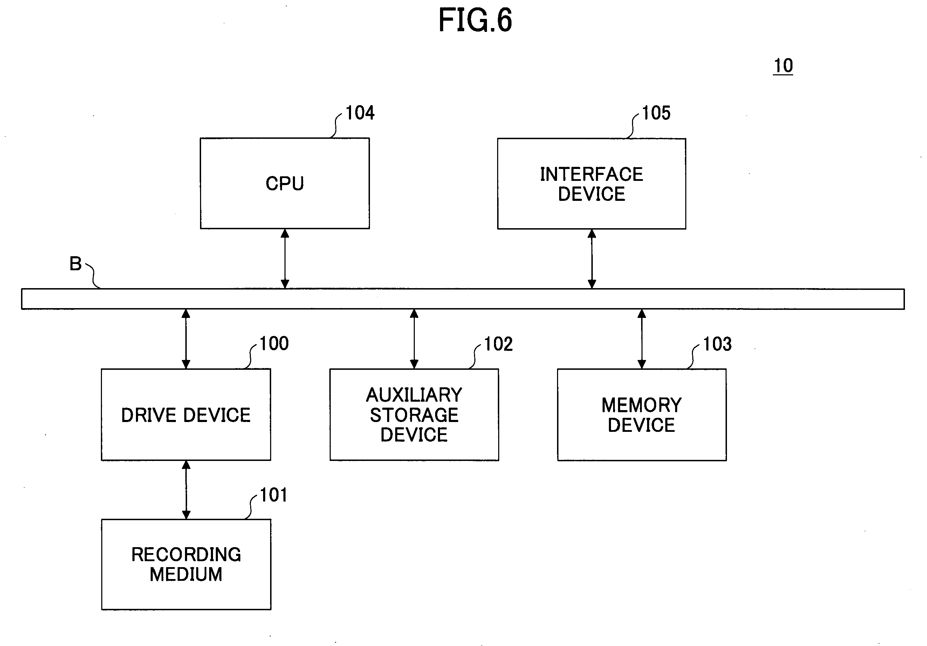

FIG. 6 shows an exemplary hardware configuration of the license management server 10 according to this embodiment of the present invention. As shown in FIG. 6, the license management server 10 includes a drive device 100, an auxiliary storage device 102, a memory device 103, a CPU 104, and an interface device 105, which are connected to each other via a bus B.

A program realizing processes performed by the license management server 10 is provided by using a recording medium 101 such as a CD-ROM. When the recording medium 101 storing the program is set in the drive device 100, the program is installed in the auxiliary storage device 102 from the recording medium 101 via the drive device 100. However, it is not always necessary to install the program using the recording medium 101. For example, the program may be downloaded from another computer via a network. The auxiliary storage device 102 stores not only the program but also other necessary files and data.

When an instruction to start the program is issued, the memory device 103 reads out the program from the auxiliary storage device 102, and stores the program in the memory device 103. The CPU 104 realizes functions (sections in FIG. 5) of the license management server 10 based on executing the program stored in the memory device 103. The interface device 105 is used as an interface to connect to the network.

The license management server 10 may further include a display device such as a liquid crystal display or a CRT display and an input device such as a keyboard and a mouse.

Further, the sales server 20, the download server 30, the user PC 50 and the like may have the hardware configuration similar to that in FIG. 6.

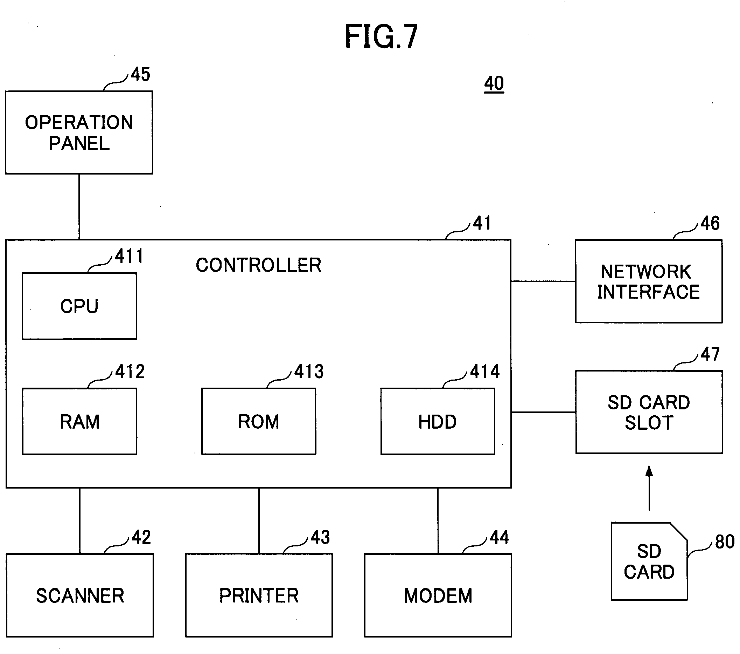

FIG. 7 shows an exemplary hardware configuration of an image forming apparatus according to this embodiment of the present invention. As shown in FIG. 7, the image forming apparatus 40 has hardware including a controller 41, a scanner 42, a printer 43, a modem 44, an operation panel 45, a network interface 46, an SD card slot 47 and the like.

The controller 41 includes a CPU 411, a RAM 412, a ROM 413, an HDD 414 and the like. The ROM 413 stores various programs and data to be used by the programs. The RAM 412 is used as a storage area for loading a program and a working area of the loaded program and the like. The CPU 411 realizes various functions (each section shown in FIG. 5) by processing the program loaded into the RAM 412. The HDD 414 stores a program and various data to be used by the program.

The scanner 42 is a hardware to read image data from a manuscript. The printer 43 is a hardware to print image data on a print sheet. The modem 44 is a hardware to connect to a telephone- line, and is used for transmitting/receiving image data in FAX communications. The operation panel 45 is a hardware including an input means such as buttons to receive input from a user and a display means such as a liquid crystal panel. The network interface 46 is a hardware to connect to a network such as a LAN (wirelessly or via a wired connection). The SD card slot 47 is used to read a program stored in an SD card 80. Namely, in the image forming apparatus 40, not only a program stored in the ROM 413 but also a program stored in the SD card 80 can be loaded to be executed.

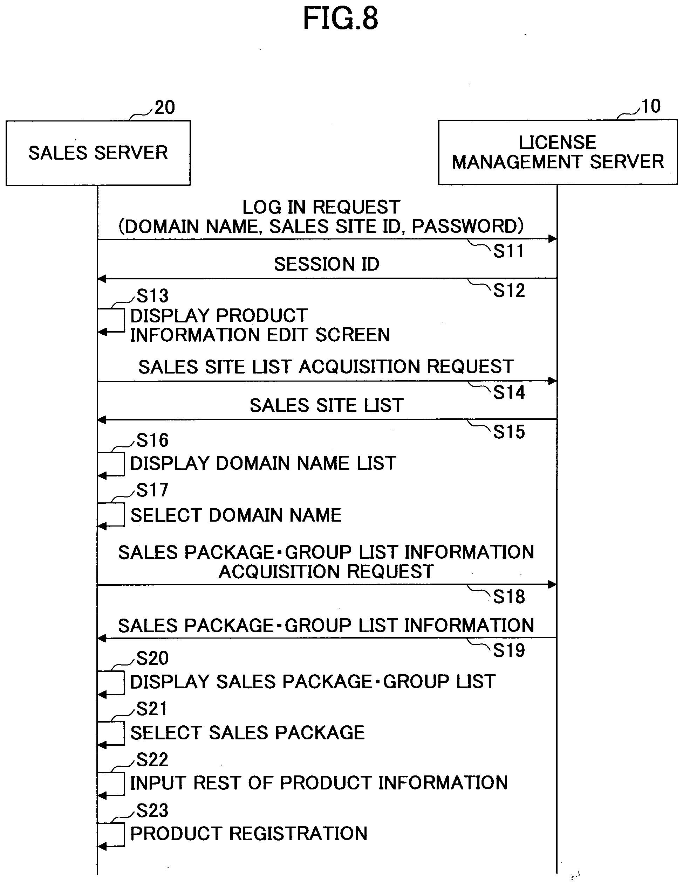

In the following, a processing procedure executed in the equipment management system 1 according to the first embodiment of the present invention is described. FIG. 8 is a sequence diagram illustrating a registration process of product information by the sales server 20. A product configuration to be sold may be determined for each sales area. The processes shown in FIG. 8 are executed when the product configuration to be sold is determined in a certain sales area.

For example, when a registration start instruction to register the product information is input to the sales server 20 by a manager in a sales site, the product registration section of the sales server 20 specifies the domain name, a sales site ID, and a password stored in a storage device in the sales server 20, and transmits an authentication request to the activation server section 11 of the license management server 10 (step S11).

The sales server authentication section 117 having received the authentication request authenticates the sales server 20 based on the information specified in the authentication request and the sales site master 118.

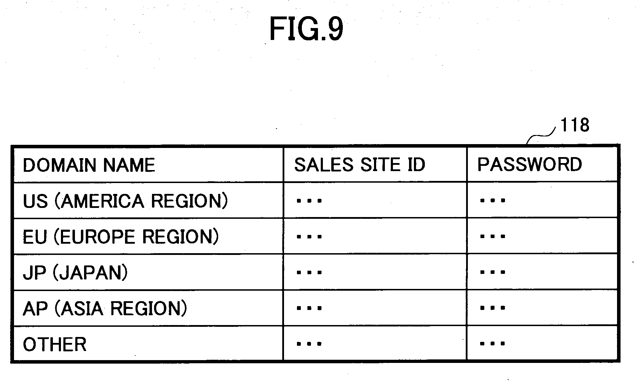

FIG. 9 shows an exemplary configuration of the sales site master 118. As shown in FIG. 9, the sales site master 118 registers the domain name, the sales site ID, and the password for each sales area.

The sales server authentication section 117 authenticates the sale server 20 by checking (comparing) the domain name, the sales site ID, and the password in the authentication request and the domain name, the sales site ID, and the password in the sales site master 118. When the authentication is successful, the sales server authentication section 117 establishes a session, and transmits the session ID to the sales management section 22 (step S12). After that, the communications between the sales management section 22 and the activation server section 11 are performed based on the session ID. When the authentication is successful (i.e., when the session ID is transmitted), the product registration section 21 functions to display a product information edit screen on the display device of the sales server 20 (step S13) .

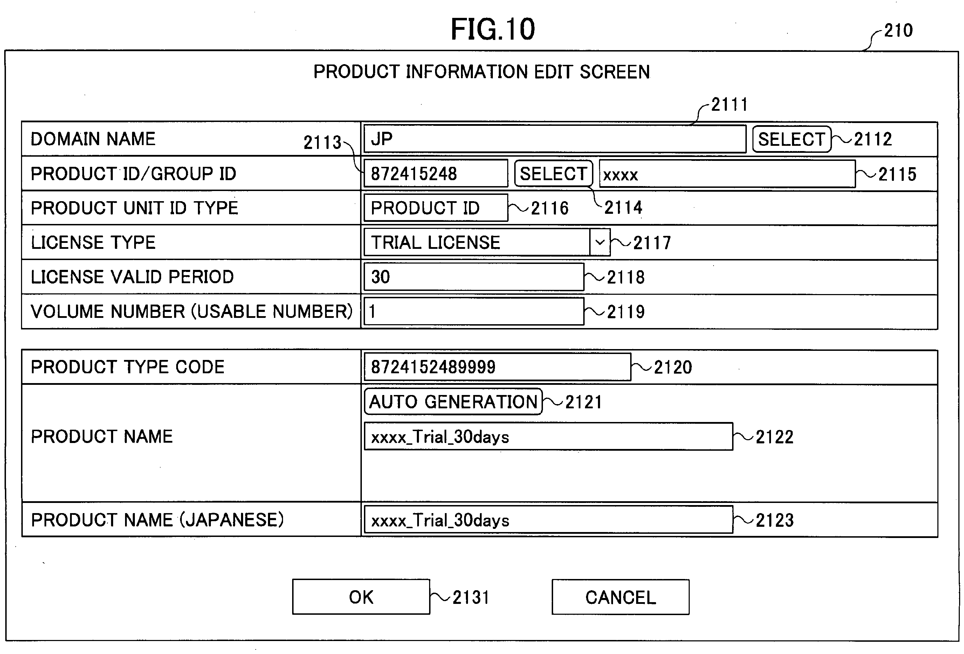

FIG. 10 shows an example of the product information edit screen. Through the product information edit screen 210, the data of the license package can be input such as the domain name, the product ID, the product unit ID type, the license type, the license expiration date (valid period), the volume number, the product type code, the product name and the like.

For example, in the product information edit screen 210, when a select button 2112 is clicked by a manager, the product registration section 21 transmits an acquisition request for acquiring a list of the sales sites to the sales server cooperation section 111 of the activation server section 11 (step S14). In response to the reception of the acquisition request for acquiring the list of the sales sites, the sales server cooperation section 111 acquires a list of the sales sites and the domain names from the sales site master 118, and transmits the list to the product registration section 21 (step S15).

The product registration section 21 functions to display the received list of domain names on the display device of the sales server 20 (step S16). When a domain name is selected in the list, the product registration section 21 functions to display the selected domain name in a text box 2111 on the product information edit screen 210 (step S17).

Next, when a selection button 2114 is clicked by a manager, the product registration section 21 transmits an acquisition request for acquiring the sales packages and a list of information of the group to the sales server cooperation section 111 of the activation server section 11 (step S18). In response to the reception of the acquisition request for acquiring the sales packages and the list of information of the group, the sales server cooperation section 111 acquires the list of information of the sales packages from the sales package master 119, and further acquires the list of information of the group from the group ID master 120, the group name master 122 and the like.

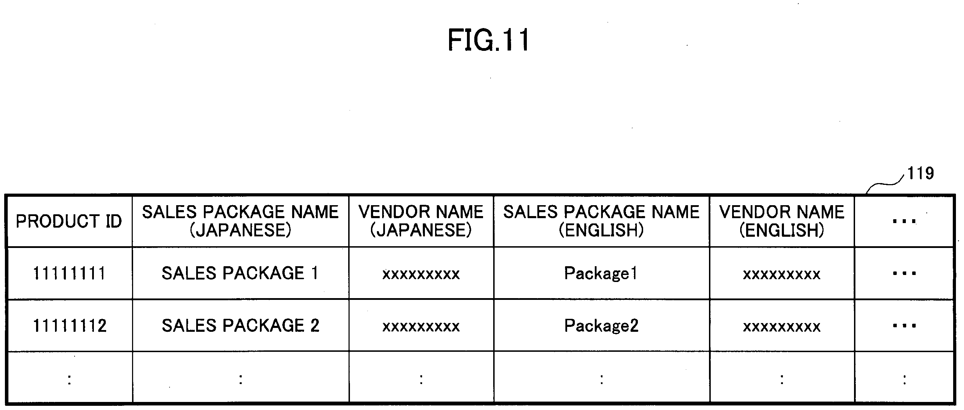

FIG. 11 shows an exemplary configuration of the sales package master 119. As shown in FIG. 11, the sales package master 119 registers the product ID, the sales package name, the vendor name and the like for each sales package. The sales package name and the vendor name are registered for each language type (such as in Japanese and English). The list of information transmitted in step S15 includes those information items for each of the sales packages. However, only the sales package name and the vendor name corresponding to a language environment of the sales server 20 may be transmitted. The language environment of the sales server 20 may be specified in the request in step S14 by the product registration section 21. Otherwise, based on a function of a communication protocol, the language environment of the sales server 20 may be determined. For example, in HTTP communications, a parameter indicating the language environment of the Web browser is reported to the Web server side. When such a communication protocol is used, the language environment of the sales server 20 may be determined based on such a parameter. Further, it is assumed that the registration of the information into the sales package master 119 has been performed by, for example, a manager of the license management server 10 in advance.

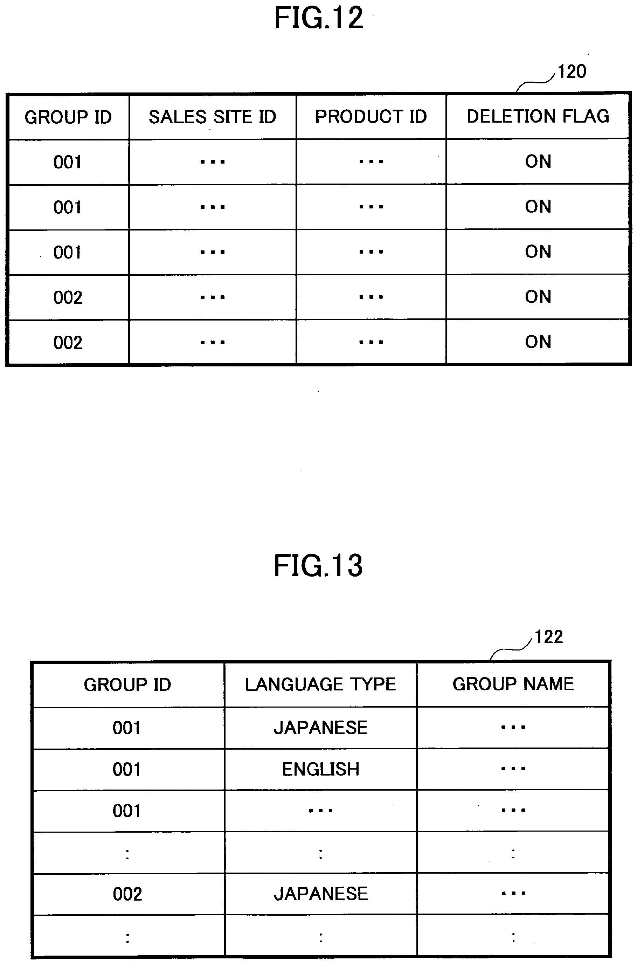

Further, FIG. 12 shows an exemplary configuration of the group ID master 120. As shown in FIG. 12, for each combination of the group ID and the sales site ID, the group ID master 120 registers group configuration information of the group ID, and a deletion flag. The reason why the configuration information and the like are registered for each combination of the group ID and the sales site ID is that the group ID is uniquely assigned for each sales site. As the group configuration information, the product ID of the sales package belonging to (included in) the group for each group ID of the group is registered. The deletion flag is data indicating whether the group ID registered in the group ID master 120 can be deleted (i.e. deletion of the group) or can be allowed. The data has a value of "ON" or "OFF". The value of "ON" indicates that the deletion is possible or allowable. On the other hand, the value of "OFF" indicates that the deletion is not possible or not allowed (prevented). When a product related to a group is purchased, the deletion of the group becomes impossible. Therefore, the initial value of the deletion flag is "ON". This is because when a group is registered, there is no purchased product related to the group.

Further, FIG. 12 shows a case where plural records relevant to the same group ID (such as "001") are registered. This is because, in the group ID master of FIG. 12, one product ID of the sales package is registered in one record. Namely, FIG. 12 shows a case where three sales packages belong to the group having the group ID "001".

Further, FIG. 13 shows an exemplary configuration of the group name master. As shown in FIG. 13, the group name master 122 registers group names for each language type for each of the group IDs. Namely, the group name master 122 registers the group names for each language type for each of the groups.

The sales server cooperation section 111 extracts the group ID relevant to the sales site ID received during the authentication request (step S11) from the group ID master 120 from among the group IDs registered in the group ID master 120. Then, the sales server cooperation section 111 generates group list information by acquiring the group name from the group name master 122, the group name corresponding to the extracted group ID. Further, the group name included in the group list information may be limited to the group name corresponding to the language environment of the sales server 20.

Next, the sales server cooperation section 111 transmits the sales packages list information and the group list information to the product registration section 21 (step S19). The product registration section 21 functions to display a list screen of the sales packages and the groups (e.g., a screen including the sales package names and the group names) on the display device of the sales server 20 based on the received list of information of the sales packages and the groups (step S20). In the list screen, when any of the sales packages is selected, the product registration section 21 functions to display the product ID and the sales package name of the selected sales package in the text box 2113 and the text box 2115, respectively, in the product information edit screen 210; further, the product registration section 21 functions to display the "product ID" in the text box 2116 (step S21). The character string displayed in the text box 2116 indicates the product unit ID type of the ID displayed in the text box 2113. The product unit ID type indicates which of the product ID of the sales package and the group ID of the group is displayed in the text box 2113. Namely, the product information edit screen 210 can be used for editing product information of the group. In this case, the group ID and the group name are displayed in the text box 2113 and the text box 2115, respectively.

Next, in the product information edit screen 210, the rest of the product information is input by the manager (step S22). Specifically, information items such as the license type, the license expiration date (valid period), the volume number, the product type code, the product name and the like are input. The license type is the information indicating that the license of the product is the sold license, temporary license, trial license or the like. The sold license can be used for an unlimited period after being purchased. The temporary license can be used (is effective) for a predetermined period only. The trial license is used for a trial use purpose. The license type can be input by selecting using the list box 2117. The license expiration date (valid period) is an attribute effective when the temporary license or the trial license is selected as the license type, and indicates the period when the license is effective. The license expiration date (valid period) is input in the text box 2118. The volume number refers to the volume number of the license. The volume license is granted to a user who has purchased a product having the volume number two (2) or more, so that the user is allowed to use the same sales package at the same time within the range of the volume number. The volume number is input in the text box 2119.

The product type code is an identifier for uniquely identifying a product. The product type code is input in the text box 2120. Further, it is possible to define plural products having different license contents (license information) for a single sales package or group. Therefore, the relationship between the product ID of the sales package or the group ID and the product type code is a one-to-many relationship. The product name is the name of the product. The product name is input in the text box 2122. Otherwise, when the button 2121 is clicked, based on the sales package name or group name, the license type, and the license expiration date (valid period), the product registration section 21 automatically generates the product name and displays the generated product name in the text box 2122. Further, in the product information-edit screen 210, the product name in Japanese can be input in the text box 2123. The product name in other languages may be input to another screen.

After the product information is input to the product information edit screen 210, when the OK button 2131 is clicked, the product registration section 21 stores the input product information in the product master 23 (step S23).

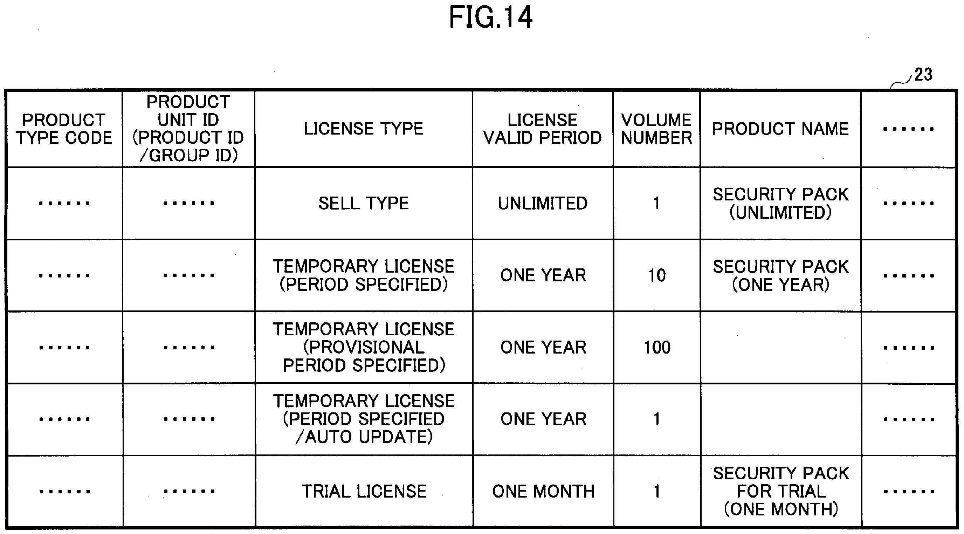

FIG. 14 shows an exemplary configuration of the product master 23 in the sales server 20. As shown in FIG. 14, the product master 23 is a table managing information items including the product type code, the product unit ID (product ID or group ID), the license type, the license expiration date (valid period), the volume number, the product name and the like for each product.

When the product information is registered in the product master 23 of a sales server 20, it becomes possible to sell (distribute) the product in the sales area to which the sales server 20 belongs.

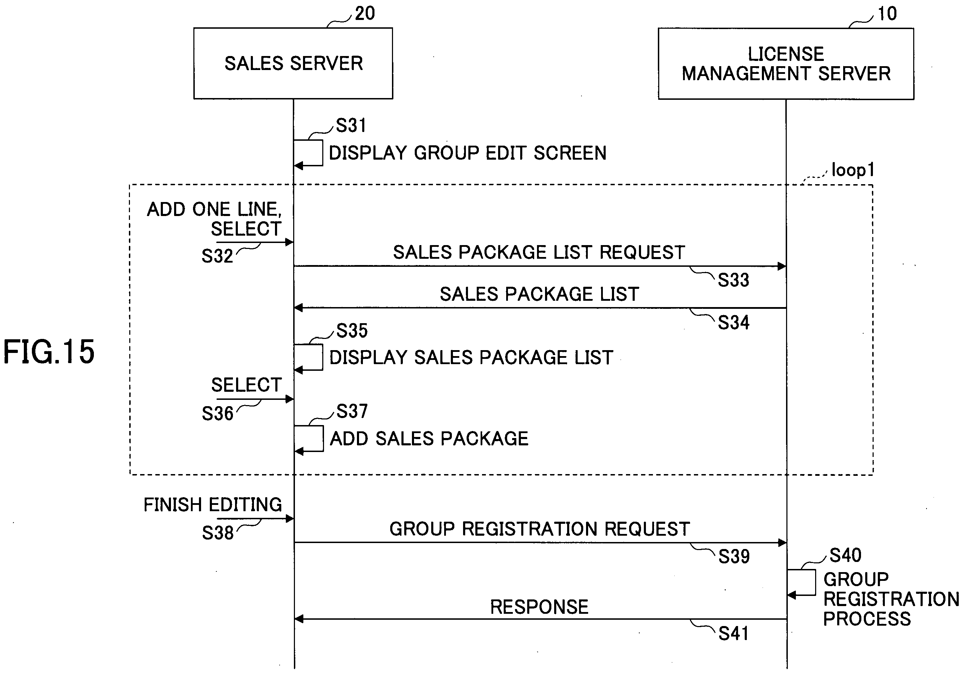

Next, a generating process of generating a group (i.e., a registration process of registering a group in the group ID master 120 and the group name master 122) is described. FIG. 15 is a sequence diagram illustrating a processing procedure of a group generating process. Generating a group (group generation) refers to the determination of the sales package included in a new group.

For example, when a group generation start instruction is input in the sale server 20 by a manager of the sales site, the product registration section 21 of the sales server 20 functions to display a group edit screen on the display device of the sales server 20 (step S31).

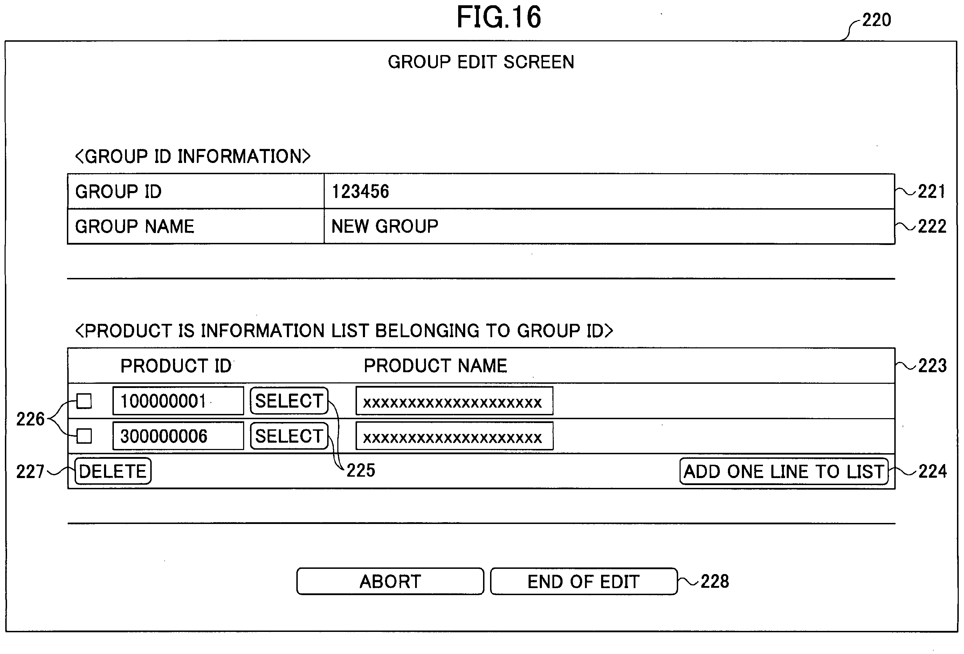

FIG. 16 shows an example of the group edit screen 220. As shown in FIG. 16, in the group edit screen 220, it is possible to input the group ID and the group name of the group to be generated (added). The group ID is input in the area 221. The group name is input in the area 222.

Further, in a table 223 of the group edit screen 220, it is possible to specify (determine) the sales packages to be included in the newly generated group (i.e., it is possible to specify the combination of the sales packages included in the group). Specifically, when the button 224 is clicked, one new row is added in the table 223. In the example of FIG. 16, two rows are already added. Namely, in an initial condition, there are no rows (i.e., the number of rows is zero (0)) in the table 223. Next, when the selection button 225 of the added row is clicked (step S32), the product registration section 21 transmits an acquisition request for acquiring the list of information of the sales package to the sales server cooperation section 111 of the activation server section 11 (step S33). In response to the reception of the acquisition request for acquiring the list of information of the sales package, the sales server cooperation section 111 acquires the list of information of the sales package from the sales package master 119. Further, the sales server cooperation section 111 transmits the acquired list of information of the sales package to the product registration section 21.

Based on the received list of information of the sales package, the product registration section 21 functions to display a list screen of the sales packages (e.g., a screen displaying the list of the product IDs and the sales package names) on the display device of the sales server 20 (step S35). In the list screen, when any of the sales packages is selected (step S36), the product registration section 21 functions to display the product ID and the sales package name of the selected sales package in the row to be currently operated (i.e., the same row where the selection button 225 is clicked) in the table 223. By doing this, in terms of the display, the sales package is added as a member (element) of the new group. Further, steps S32 through S37 included in "loop 1" of FIG. 15 are repeatedly executed in accordance with the number of sales packages to be added to the group. Further, when any of the check buttons 226 of the added rows in the table 223 is checked, and then the delete button 227 is clicked, the sales package in the row is deleted from the group in terms of the display.

After the adding operation of the sales package is finished in the table 223, when the button 228 is clicked (step S38), the product registration section 21 transmits a registration request for registering the group to the sales server cooperation section 111 (step S39). The registration request for registering the group includes information items as parameters, the information items including the configuration information of the group (i.e., information items such as the group ID and the product ID of the sales package belonging to the group) input in the group edit screen 220 and the information items such as the domain name, the sales site ID, the password and the like stored in the storage device of the sales server 20. In response to the registration request for registering the group, the sales server cooperation section 111 performs a group registration process (step S40). Specifically, for a new group, the configuration information is registered in the group ID master 120, and the group name is registered in the group name master 122. After the execution of the group registration process, the sales server cooperation section 111 transmits the response indicating whether the registration process has been successful to the product registration section 21 (step S41).

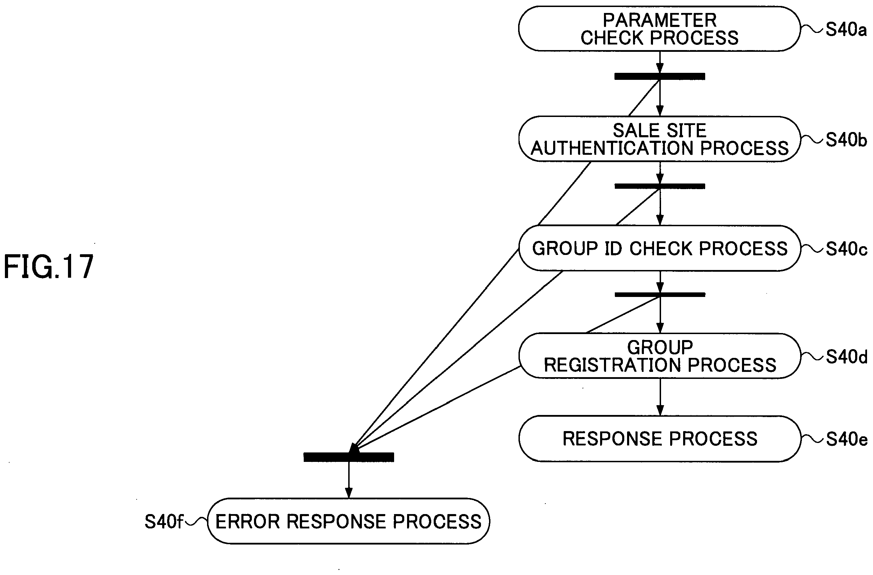

Next, details of step S40 are described. FIG. 17 shows a processing procedure of a group registration process.

As shown in FIG. 17, in step S40a, the sales server cooperation section 111 determines whether a necessary parameter is included in the received group registration request. When determining that the necessary parameter is included, the sales server cooperation section 111 causes the sales server authentication section 117 to authenticate the sales server 20 (sales site) (step S40b). The sales server authentication section 117 authenticates the sales server 20 by checking the domain name, the sales site ID, and the password in the group registration request and those in the sales site master 118.

When the sales server 20 is authenticated, the sales server cooperation section 111 determines whether the combination of the group ID and the sales site ID in the group registration request has already been registered in the group ID master 120 (step S40c). When determining that the combination of the group ID and the sales site ID has not been registered, the sales server cooperation section 111 registers the records in the group ID master 120, the records including the group ID, the sales site ID, the product ID of the sales package and the like in the group registration request (step S40d). The sales server cooperation section 111 sets the deletion flag to "ON".

Further, the sales server cooperation section 111 registers the records in the group name master 122, the records including the group ID and the group name and the like included in the group registration request. Further, in this embodiment, the group name registered when the group is generated is a group name in Japanese. Therefore, the language type of this record is "Japanese".

Next, the sales server cooperation section 111 transmits a response to the product registration section 21, the response indicating that the registration of the group has been successful (step S40e). On the other hand, when determining that the necessary parameter is missing in step S40a, when the authentication of the sales server 20 has failed in step S40b, or when determining that the combination of the group ID and the sales site ID has already been registered, the sales server cooperation section 111 transmits a response to the product registration section 21, the response indicating that the registration of the group has failed (step S40f).

As described above, regarding a group, the configuration information of the group (information associating the group with the sales package) is regarded as the target to be managed; and the entity of the group itself (e.g., an archive including a set of sales packages belonging to the group) is not generated. Because of this feature, it may become possible to reduce the consumption (amount) of the storage capacity used by generating the group.

Further, when the product information of the generated group is to be registered, a process as illustrated with reference to FIG. 8 may be performed on the group as a target (namely, by selecting the group in step S21).

As described above, the sales site may arbitrarily determine the configuration of the group. Therefore, it may become possible to more appropriately meet market needs in the sales area and determine the configuration of the group that can be commercialized to be effectively promoted.

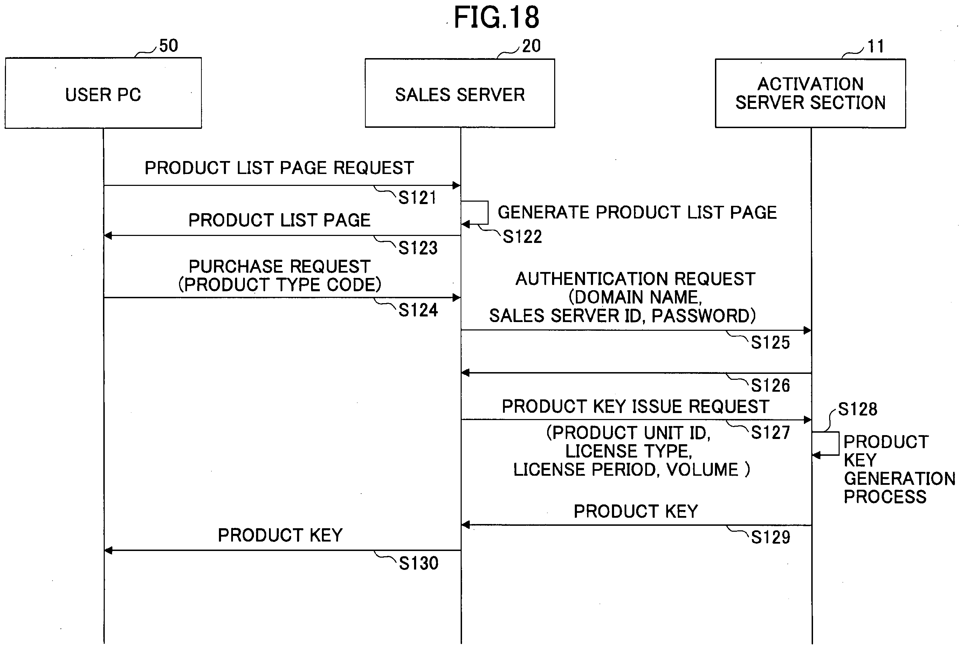

Next, FIG. 18 is a sequence diagram illustrating a processing procedure when the product is sold. The sales server 20 in FIG. 18 is provided for the sales area to which the user PC 50 in this figure belongs.

When a user in a certain user environment E1 inputs the URL corresponding to a Web page (product list page) displaying a list of products that can be purchased (to be purchased) via the Web browser 51 on the user PC 50, the Web browser 51 transmits an acquisition request for acquiring the product list page to the sales management section 22 of the sales server 20 (step S121).

Next, the sales management section 22 generates the product list page based on the product master 23 (step S122). Specifically, the sales management section 22 generates HTML data as the product list page displaying the product name, the license type, the license expiration date (valid period), the volume number and the check button for each of the products registered in the product master 22. Therefore, the products related to a group license are formed (displayed) via the product information edit screen 210, and when the product information of a product is registered in the product master 23, the-product related to the group license is also formed as an option in the product list page. Further, the check button is used to select the product to be purchased. Next, the sales management section 22 transmits the generated product list page to the Web browser 51 (step S123). The Web browser 51 displays the received product list page on the display device of the user PC 50.

On the product list page, when a user selects the check button of a product to purchase the product, and presses the purchase button, the Web browser 51 transmits a purchase request including the product type code of the product to be purchased to the sales management section 22 (step S124). Namely, the product list page is defined so that the selected product type code is transmitted upon the purchase button being pressed. Further, in the product list page, plural products may be selected. Therefore, in step S124, the purchase request may include plural product type codes.

Next, the sales management section 22 specifies the domain name, the sales site ID, and the password, and transmits an authentication request to the activation server section 11 of the license management server 10 (step S125). The sales server authentication section 117 of the activation server section 11 authenticates the sales server 20 by checking (comparing) the domain name, the sales site ID, and the password in the authentication request with the domain name, the sales site ID, and the password in the sales site master 118. When determining that the authentication is successful, the sales server authentication section 117 establishes a session, and transmits the session ID to the sales management section 22 (step S126). After that, the communications between the sales management section 22 and the activation server section 11 are performed based on the session ID.

Next, the sales management section 22' acquires information items from the product master 23, the information items being the product unit ID (product ID or group ID), the license type, the license expiration date (valid period), and the volume number which are registered corresponding to the product type code included in the purchase request. Further, the sales management section 22 transmits an issue request for issuing the product key to the product key issue section 112 of the activation server section 11 by specifying the acquired product unit ID (product ID or group ID), the license type, the license expiration date (valid period), and the volume number (step S127). Further, the issue request for issuing the product key corresponds to a notice of purchasing the product.

In response to the issue request for issuing the product key, the product key issue section 112 generates the product key (step S128). The product key issue section 112 transmits the generated product key to the sales management section 22 (step S129). Further, when the product keys for plural products are requested to be issued, the product keys for the respective products are generated. As for the product related to the group license, a single product key is generated for the product. By doing in this way, it may become possible to reduce the management load of the product keys on the user side when compared with a case where a product key is separately issued for each of the sales packages in a group.

Upon receiving the product key, the product key transmission section 24 of the sales server 20 transmits HTML data including the product key to the Web browser 51 (step S130). The Web browser 51 functions to display the HTML data on the display device of the user PC 50. By doing in this way, the user may recognize the product key issued in purchasing the product. Further, the product key transmission section 24 may distribute the product key by sending an e-mail describing the product key to the user PC 50.

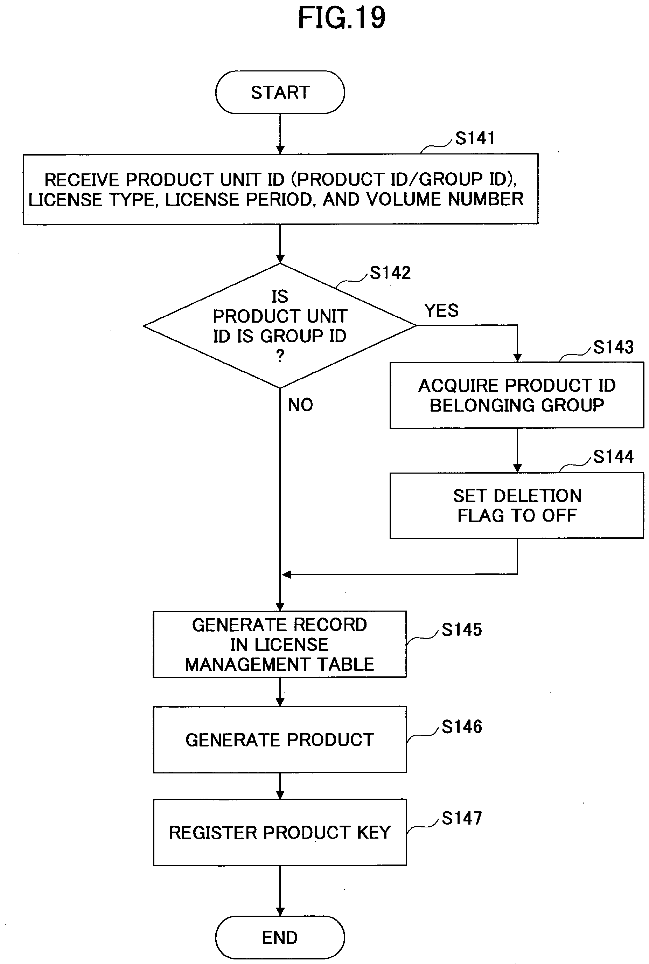

Next, details of step S128 are described. FIG. 19 is a flowchart illustrating a processing procedure of a product key generating process by the product key issue section 112.

In step S141, the product key issue section 112 receives information items including the product unit ID (product ID or group ID), the license type, the license expiration date (valid period), and the volume number. Next, the product key issue section 112 determines whether the received product unit ID is the group ID (step S142). Specifically, the group ID corresponding to the product unit ID is searched for in the group IDmaster 120. When the group ID corresponding to the product unit ID is searched for (detected) (YES in step S142), the product key issue section 112 acquires all the product IDs associated with the group ID (i.e., product IDs of the sales packages belonging to the group) from the group ID master 120 (step S143). Next, the product key issue section 112 sets the value of the deletion flags corresponding to the group ID to "OFF" (step S144). By doing this, the deletion of the group ID is prevented.

When negative determination is made in step S142 or after step S144, the product key issue section 112 generates records for registering the received product ID or the product ID acquired from the group ID master 120 into the license management table 121 (step S145). Therefore, when plural product IDs are acquired from the group ID master 120, plural records are generated. Further, the product key issue.section 112 generates the volume number of records for the same product ID. Therefore, when the volume value is two (2) or more, two (2) or more records are generated for the same product ID.

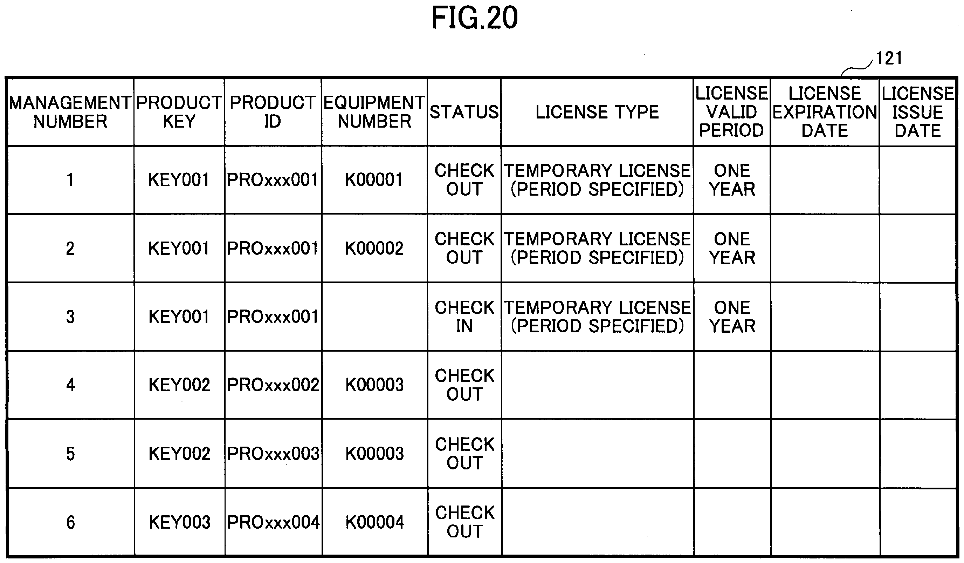

FIG. 20 shows an exemplary configuration of the license management table 121. As shown in FIG. 20, the license management table 121 includes information items such as a management number, the product key, the product ID, an equipment number, a status, the license type, the license expiration date (valid period), a license issue date and the like for each license issued for the sales package.

Among those information items, as the product ID, the license type, and the license expiration date (valid period), the values received in step S145 from the sales management section 22 are registered. When plural records are generated, the same values are recorded for each of the generated records. However, in case of the group license (when the product ID of the sales package is acquired based on the group ID), the acquired each product ID is registered in each relevant generated record.

The management number refers to an identifier (number) uniquely allocated to each record upon the generation of the record for the license management table 121. As the product key, the product key generated in a later step is registered. As the equipment number, the equipment number of the image forming apparatus 40 is specified as the equipment to use the sales package when the license file 90 is issued. The equipment number refers to identification information (equipment identifier) to uniquely identify each image forming apparatus 40. The status is an information item indicating the status of the license. In this embodiment, the status of the license includes "no license", "check out", and "check in". The "no license" is a status where the license is not issued. The "check out" is a status where the license is being used. The "check in" is a status where the license is released (and is capable of being used). As the status, no value is registered in step S145. The license expiration date (valid period) refers to an expiration date (valid period) of the license (license file 90) calculated based on the license expiration date (valid period) when the license file 90 is issued. The license issue date refers to the issue date of the license (license file 90) registered when the license file 90 is issued.

Next, the product key issue section 112 generates one product key (step S146). The number of product keys to be generated is one (1) even when the product unit ID received in step S141 is a group ID or when the volume number is two (2) or more.

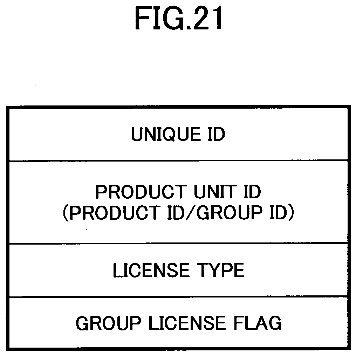

FIG. 21 shows an exemplary configuration of the product key. As shown in FIG. 21, the product key is data including a unique ID, a product unit ID, a license type, a group license flag and the like.

The unique ID refers to a unique ID generated when the product key is generated. The uniqueness of the product key is ensured by the unique ID. The product unit ID refers to the product ID or the group ID received in step S141, in other words, any one of the product ID and the group ID of either the sales package or the group of the purchased products. The license type refers to the license type received in step S141. The group license flag refers to a parameter indicating whether the product unit ID in the product key is the group ID (true) or not (false). When determining that the received product unit ID is the group ID, the product key issue section 112 sets the group license flag to "true".

Next, the product key issue section 112 resisters the generated product key in the record generated in step S145, and updates the license management table 121 by setting the status to "check in" (step S147). When plural records are generated in step S145 (i.e., in case of the group license or when the volume number is two (2) or more (in case of the volume license)), the same product key is registered for each of the records.

Further, in the license management table 121 in FIG. 20, the records having the management numbers 1 through 3 correspond to the volume license. The records of the volume license have the same product key and the same product ID. On the other hand, the records having the management numbers 4 and 5 correspond to the group license (license for the group). The records of the group license have the same product key. However, the records of the group license correspond to different sales packages. Therefore, the product IDs of the records are different from each other.

The product key generated as described above is transmitted to the sales management section 22 of the sales server 20 in step S129 in FIG. 18, and is further transmitted from the sales management section 22 to the Web browser 51 of the user PC 50.

Next, the sales package of the product having the issued product key is installed.

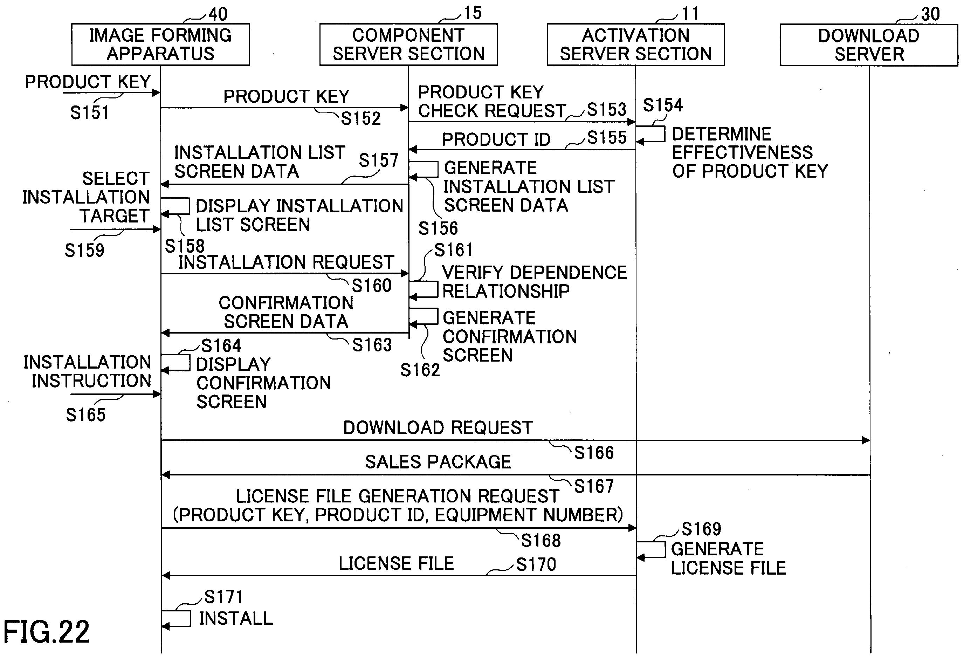

FIG. 22 is a sequence diagram illustrating a processing procedure of the installation of the sales package.

The user having acquired the product key inputs the product key in the image forming apparatus where the sales package corresponding to the product key is to be used (step S151). For example, the product key is input via the below-described function expansion setting menu screen to be displayed on the operation panel 45.

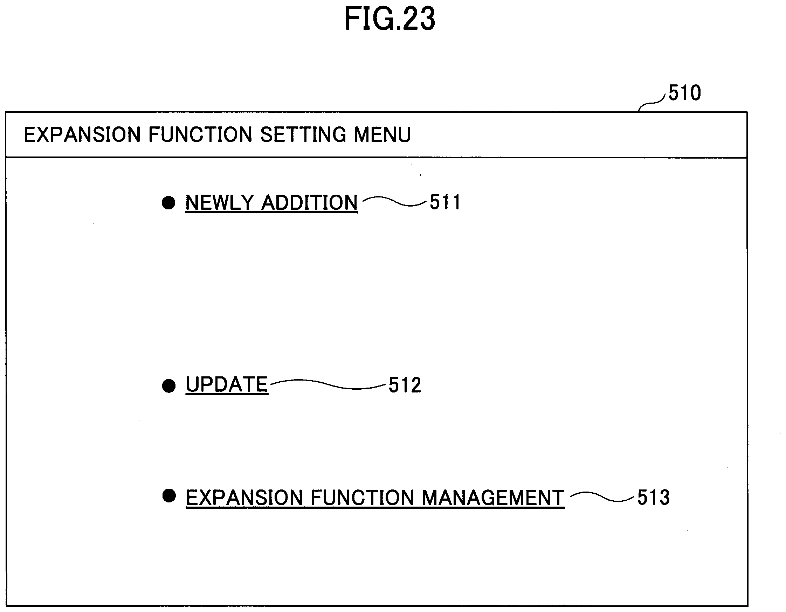

FIG. 23 shows a display example of the function expansion setting menu screen. The function expansion setting menu screen 510 displays various menus for expanding the functions of the image forming apparatus 40. In response to a predetermined input, the UI control section 426 controls to display the function expansion setting menu screen 510 on the operation panel 45. In the function expansion setting menu screen 510, when a newly addition menu 511 is selected, the UI control section 426 controls to display a product key input screen on the operation panel 45.

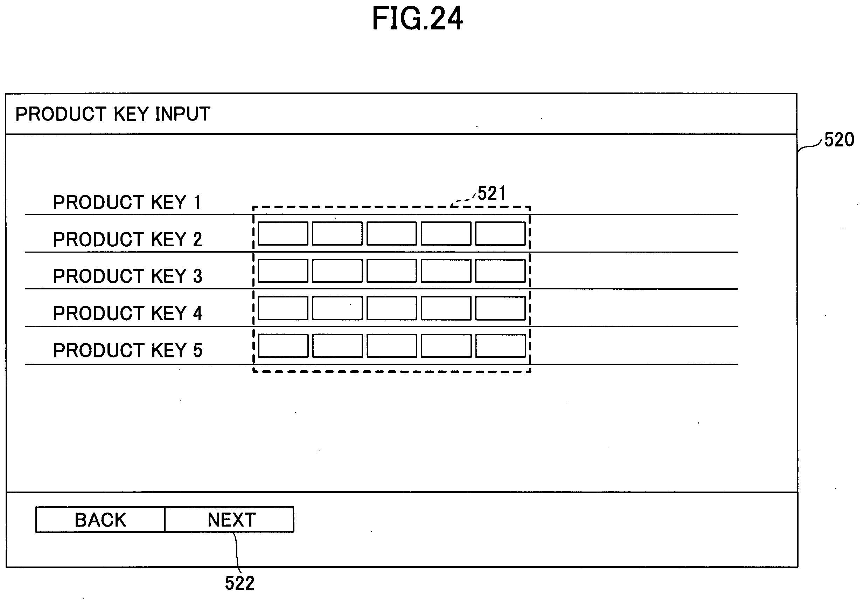

FIG. 24 shows a display example of the product key input screen. The product key input screen 520 includes a product key input row 521. In step S151, the product key is input in the product key input row 521.

After the product key is input in the product key input row 521, when the next button 522 is selected, the installation section 421 specifies the input product key and transmits a generation request for generating an installation list screen for the sales package related to the product key to the installation support section 152 of the component server section 15 (step S152).

Next, upon receiving the generation request for generating an installation list screen, the installation support section 152 transmits a verification request for verifying the effectiveness of the product key specified in the generation request to the product key verification section 113 of the activation server section 11 (step S153). The product key verification section 113 determines (verifies) the effectiveness of the product key by referring to the license management table 121 (step S154). Specifically, the record including the product key and having a status value other than "check out" is searched for in the license management table 121. When the record is searched for (detected), it is determined that the product key is effective. On the other hand, when the record is not detected, it is determined that the product key is not valid. In this determination method, in a case where the product key is related to a group license product, when the license of at least a part of the sales packages belonging to the group is not being used (but can be used), it is determined that the product key is effective.

When determining that the product key is effective, the product key verification section 113 transmits the product ID associated with the product key in the license management table 121 (i.e., the product ID of the sales package) to the installation support section 152 (step S155). Therefore, in terms of the product key related to the group license or the volume license, plural product IDs are transmitted. Further, in case of the group license, an information item is transmitted to the installation support section 152, the information item indicating whether the license for each product ID (for each sales package belonging to the group) is used. This is because, in case of the group license, some of the sales packages belonging to the group may not be used; therefore it becomes possible to distinguish the license (sales package) which is being used from the license (sales package) which is not being used.

On the other hand, when determining that the product key to be determined is not effective (invalid), the installation support section 152 transmits error screen data to display an error message indicating that the product key is invalid to the installation section 421. In response to the reception of the error screen data, the installation section 421 causes the UI control section 426 to control to display an error message based on the error screen data.

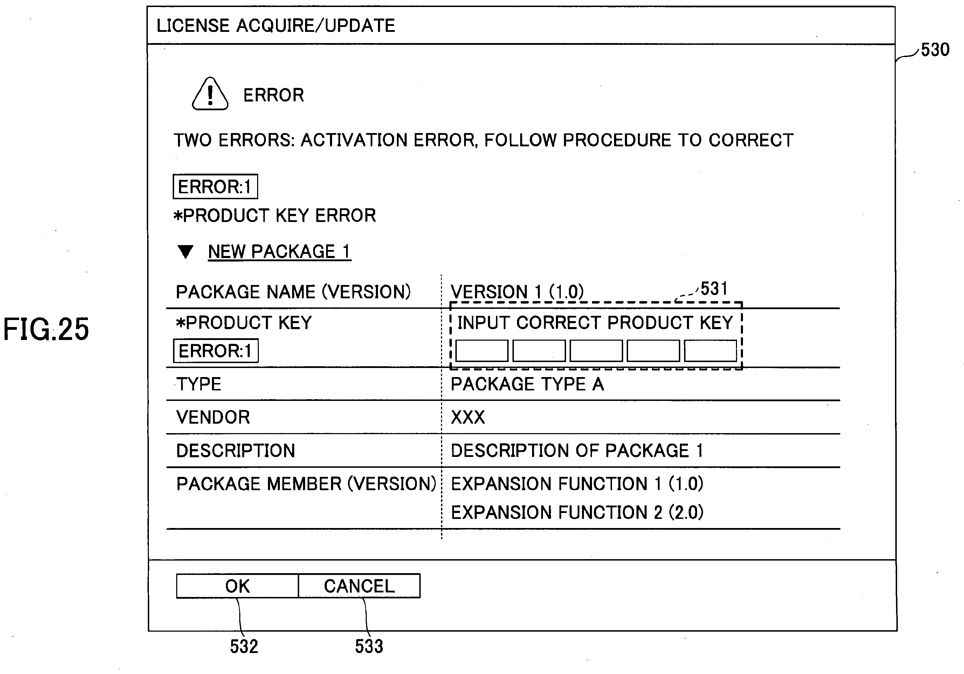

FIG. 25 shows a display example of the error screen when the product key is invalid. The error screen 530 displays a message of a product key error (indicating that the product key is invalid) and a product key input row 531 and the like. The user can input the correct product key in the product key input row 531. When the correct product key is input in the product key input row 531, and the OK button 532 is selected, the procedure from step S152 is executed again. On the other hand, when the cancel button 533 is selected, the installation of the sales package is cancelled (aborted).

In step S155, upon receiving the determination result indicating that the product key is determined to be effective, by referring to a component management table 155, the installation support section 152 generates an installation list screen data for the sales package corresponding to the product ID transmitted from the product key verification section 113 (step S156).

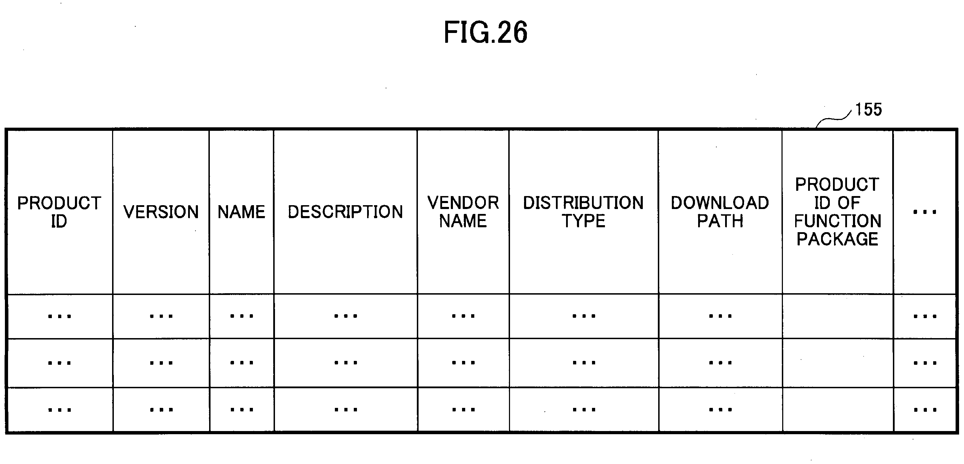

FIG. 26 shows an exemplary configuration of the component management table. As shown in FIG. 26, the component management table 155 registers the product ID, the version, the name, the description, the vendor name, a distribution type, a download path, the product ID of function package and the like for each sales package. The version refers to the version of the sales package. The name refers to the name of the sales package. The description refers to the description of the sales package. The vendor name refers to the name of the vendor of the sales package. The distribution type refers to the distribution type of the sales package. The download path refers to the positional information of the sales package in the sales package management section 32 of the download server 30. In this embodiment, as the positional information, the URL (Uniform Resource Locator) is used. The product ID of the function package is the list of the product ID of the function package belonging to the sales package.

Further, the contents of the component management table 155 are registered by periodically acquiring the sales package from the download server 30 by the component management section 154 and by analyzing the contents of the sales package. Specifically, as the information items of the product ID, the version, the name, the description, the vendor name, and the distribution type, the information items of the product ID, the version, the name description, the vendor name, and the distribution type that are recorded in the sales package information file stored in the sales package are registered. Therefore, the information items of the name, the description, and the vendor name are registered for each language type. As the product ID of the function package, the product ID recorded in the function package information file stored in each of the function packages included in the sales package is registered. Further, the download path is reported from the download server 30 when the sales package is acquired.

Next, the installation support section 152 transmits the generated installation list screen data to the installation section 421 of the image forming apparatus 40 (step S157). The installation section 421 inputs the received installation list screen data in the UI control section 426. The UI control section 426 controls to display the installation list screen on the operation panel 45 based on the installation list screen data (step S158).

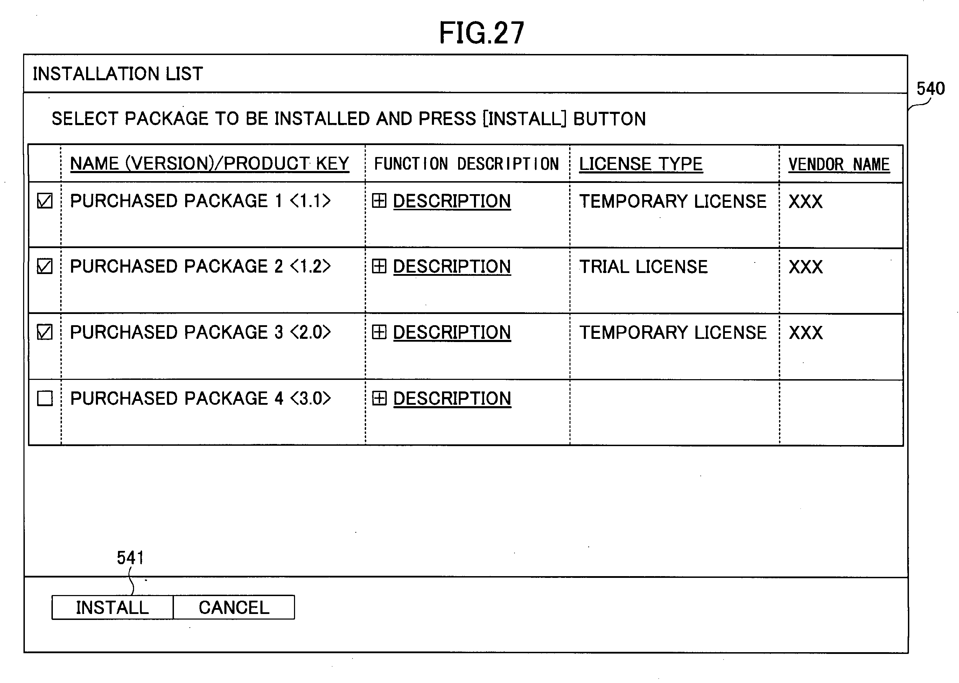

FIG. 27 shows a display example of the installation list screen. The installation list screen 540 displays a list of installation-target (installation candidates of) sales packages, and the check box is disposed for selecting whether installation of the corresponding sales package is required (i.e. use of the sales package is required). The user checks the check box of the sales package to be installed. In the example of FIG. 27, packages 1 through 4 are listed as installation candidates, and the packages 1 through 3 are selected as installation targets.

Further, as is obvious from the above described processing procedure, when the product key of the product related to the group license is input in the product key input screen 520, a list of the sales packages belonging to the group related to the group license is displayed in the installation list screen 540. Therefore, a user may selectively set some of the sales packages belonging to the group as the installation targets. In other words, it is possible to temporarily remove an unnecessary sales package belonging to the group so as not be set as the installation target. By selectively installing the sales packages belonging to the group, it may become possible to flexibly meet user's requirements in the products of the group license. Needless to say, it is possible to set all the sales packages belonging to the group as the installation targets.

Further, in the installation list screen 540, the name of the sales package is displayed in accordance with the language environment of the image forming apparatus 40. Namely, upon the generation of the installation list screen data, the installation support section 152 uses the name of the sales package registered based on the language type corresponding to the language environment of the image forming apparatus 40. The language environment of the image forming apparatus 40 is determined based on the information indicating the language environment of the image forming apparatus 40, the information being included in the generation request for generating the installation list screen data transmitted from the image forming apparatus in step S152. Further, this feature that the name of the sales package is displayed in a language type corresponding to the language environment of the image forming apparatus 40 is also applied to (supported in) various screens described below.

In the installation list screen 540, when the check box of the sales package to be installed is checked and the install button 541 is selected (S159), the installation section 421 specifies the product ID of the sales package checked (as an installation target) in the installation list screen 540 and the configuration information of the all the sales packages having been installed in the image forming apparatus 40, and transmits an installation request for installing the sales package to be installed to the installation support section 152 of the component server section 15 (step S160).

Further, the product ID of the sales package checked in the installation list screen 540 is acquired from the installation list screen data. Further, the configuration information of the all the sales packages having been installed in the image forming apparatus 40 is acquired from the installation information management table 427.

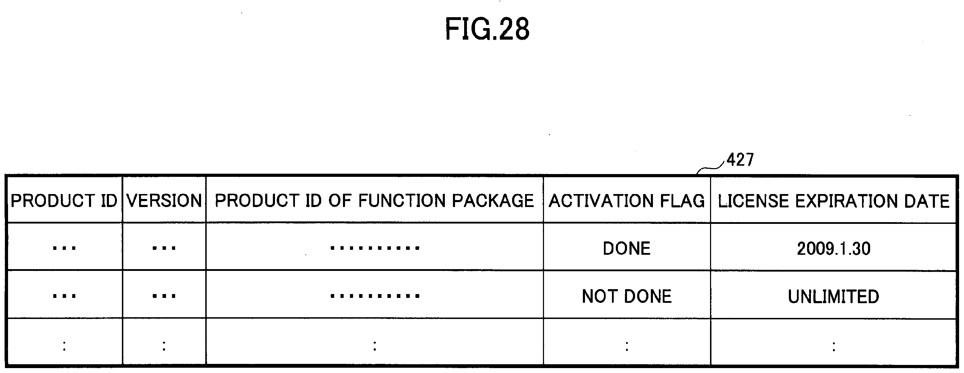

FIG. 28 shows an exemplary configuration of the installation information management table. As shown in FIG. 28, the installation information management table 427 registers information items such as the product ID, the version, the product ID of function package, an activation flag, the license expiration date (valid period) and the like for each sales package having been installed in the image forming apparatus 40.

The product ID of the function package is a list of the product IDs of the function packages belonging to the sales package. The activation flag indicates whether the sales package is activated (i.e., whether activation has been performed on the sales package). The license expiration date (valid period) is the expiration date (valid period) of the license issued for the sales package (e.g., expiration date of the license file 90). Further, the activation flag and the license expiration date (valid period) of the function package are the same as the activation flag and the license expiration date (valid period), respectively, of the sales package to which the function package belongs. Further, the contents of the installation information management table 427 are registered upon the installation of the sales package described below.

The configuration information transmitted in step S160 includes all the information items having been registered in the installation information management table 427.

Next, the installation support section 152 causes the dependence relationship determination section 151 to execute the verification of the dependence relationship of the sales package related to the product ID included in the installation request (step S161). Specifically, the dependence relationship determination section 151 determines whether the function package on which the function package included in the sales package related to the product ID depends (i.e., whether the function package used by the function package included in the sales package related to the product ID), has already been installed in the image forming apparatus 40.

Next, the installation support section 152 generates the HTML data (confirmation screen data) to display a confirmation screen in accordance with the verification result of the dependence relationship (confirmation screen) (step S162), and transmits the confirmation screen data to the installation section 421 (step S163). Details of steps S161 and S162 are described below.

Next, the installation section 421 inputs the received confirmation screen data into the UI control section 426. The UI control section 426 controls to display the confirmation screen on the operation panel 45 based on the confirmation screen data (step S164).

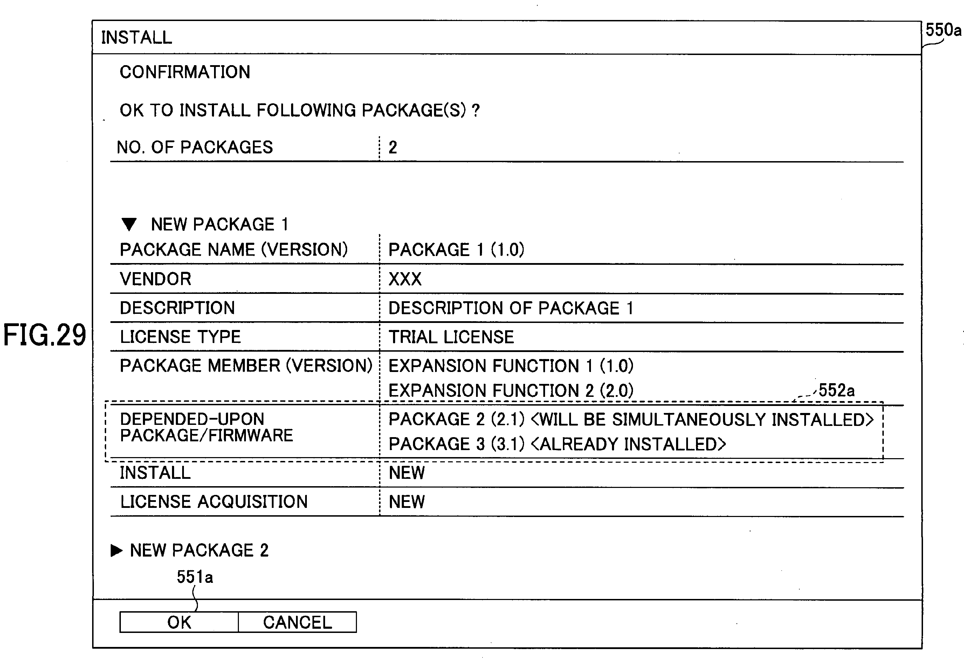

FIG. 29 shows a display example of the confirmation screen in a case where there is no problem (detected) in the dependence relationship. As shown in FIG. 29, the confirmation screen 550a indicates that there is no problem in the dependence relationship for the sales package (package 1) selected as an installation target. Specifically, the area 552a indicates that a sales package (depended-upon package) on which the package 1 depends is selected as an installation target or has already been installed in the image forming apparatus 40.

In the confirmation screen 550a, when the OK button 551a is selected (step S165), the installation section 421 specifies the URL corresponding to each sales package having been set as the installation target, and transmits a download request for downloading the each of the sales packages to the download processing section 31 of the download server 30 (step S166). Namely, the URL corresponding to each sales package and the transmission instruction of the download request are associated with the OK button 551a.

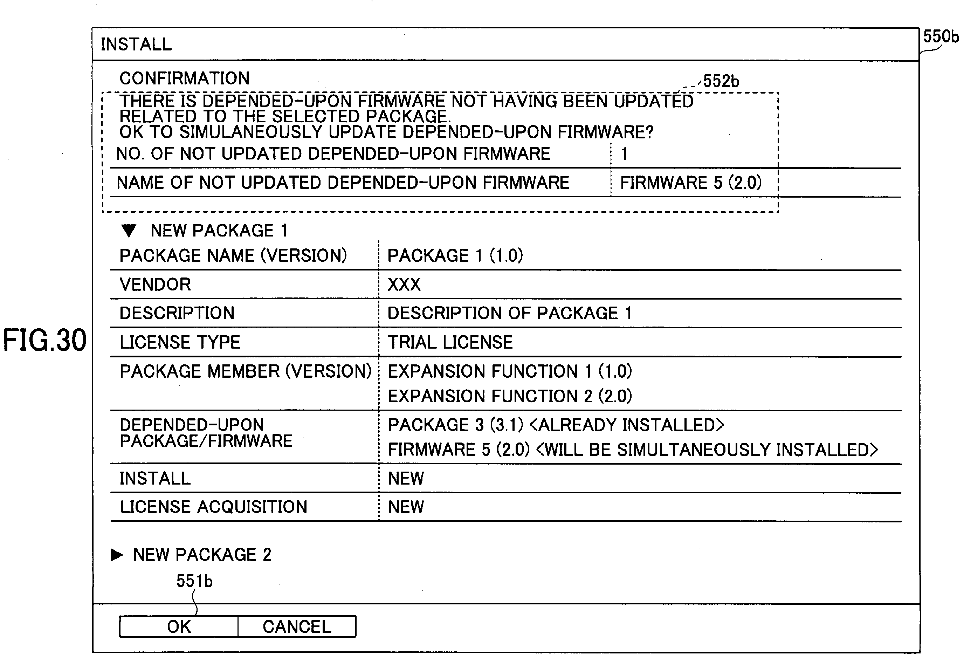

Further, FIG. 30 shows a display example of the confirmation screen in a case where the depended-upon package is capable of being simultaneously installed. As shown in FIG. 30, from among the depended-upon packages related to the sales package selected as the installation targets, the area 552b of the confirmation screen 550a indicates a depended-upon package is capable of being simultaneously installed, the depended-upon package not being installed in the image forming apparatus 40 and not set as the installation target, and further indicates whether it is necessary to simultaneously install the depended-upon package. In this case, whether it is possible to perform the simultaneous installation is determined based on the distribution type of the depended-upon package.

When the OK button 551b in the confirmation screen 550b is then selected (step S165), the installation section 421 specifies the URL of each of the sales packages set as the installation targets and the URL of the sales package (depended-upon package) to be simultaneously installed, and transmits the download request for downloading the sales packages to the download processing section 31 of the download server 30 (step S166). Namely, the URL of the sales package set as the installation target, the URL of the sales package (depended-upon package) to be simultaneously installed, and the transmission instruction of the download request are associated with the OK button 551b.

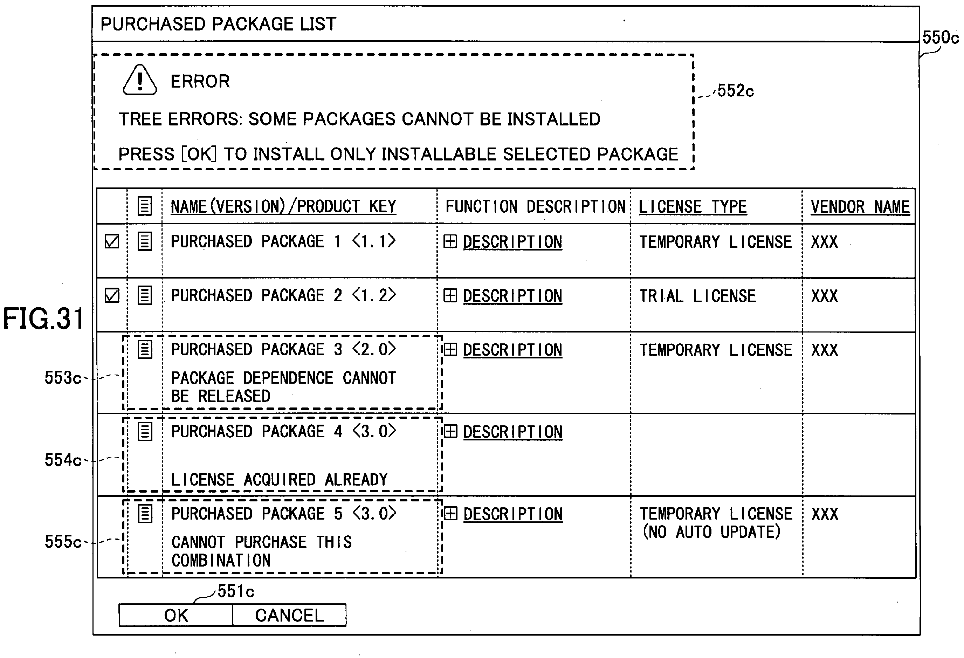

Further, FIG. 31 shows a display example of the confirmation screen in a case where the depended-upon package cannot be simultaneously installed. As shown in FIG. 31, the area 552c in the confirmation screen 550c indicates that there are three (3) sales packages that cannot be installed. In terms of those three (3) sales packages, more details are described in areas 553c, 554c, and 555c. The area 553c indicates that the dependence (relationship) of the package 3 cannot be cancelled (dissolved) (the dependence package cannot be simultaneously installed). The area 554c indicates that the license of the package 4 has already been acquired (used). The area 555c indicates that the package 5 cannot be simultaneously installed together with the other packages (packages 1 and 2 in the case of FIG. 31) set as the installation targets. Further, FIG. 31 shows a case where the packages 1 through 5 are selected as the installation targets.

When the OK button 551c in the confirmation screen 550c is then selected (step S165), the installation section 421 specifies the URL of each of the installable sales packages, and transmits a download request for downloading each of the sales packages to the download processing section 31 of the download server 30 (step S166). Namely, the URL of each of the installable sales package and the transmission instruction of the download request are associated with the OK button 551c.

In response to the download request in step S166, the download processing section 31 acquires the sales package from the sales package management section 32, the sales package being identified by the URL specified in the download request, and transmits the sales package to the installation section 421 (step S167). The installation section 421 stores the received sales package in a temporary storage area (e.g., a temporary folder) in the HDD 414.

When the download of the sales package is finished, the installation section 421 specifies the product key input in step S151, the product ID of the sales package set as the installation target, and the equipment number of the image forming apparatus 40 recorded in the ROM 413 or the HDD 414, and transmits a generation request for generating the license file 90 (a use request for using the license) to the license issue section 115 of the activation server section 11 (step S168). Next, the license issue section 115 generates the license file 90 based on the product key and the license management table 121 (step S169).

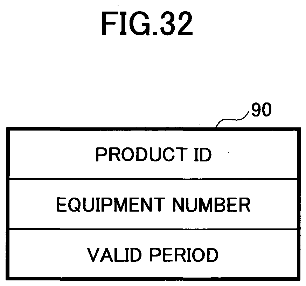

FIG. 32 shows an exemplary configuration of the license file 90. As shown in FIG. 32, the license file 90 includes information items of the product ID, the equipment number, and the expiration date (valid period). The product ID refers to the product ID of the sales package to which the license is granted (sales package set usable by the license) by the license file 90. The equipment number refers to the equipment number of the image forming apparatus 40 in which the use of the sales package related to the product ID is allowed by the license file 90. The expiration date (valid period) refers to the expiration date (valid period) of the license granted by the license file 90.

As the product ID of the license file 90, the product ID related to the product key included in the generation request for generating the license file 90 is registered. In this case, when the product key is related to the group license, that is, when the plural different product IDs for the product key are registered in the license management table 121, the license issue section 115 generates the license file 90 for each of the sales packages. Therefore, even in the case of the group license, as the product ID of the license file 90, the product ID of the sales package is registered.

As the equipment number in the license file 90, the equipment number included in the generation request for generating the license file 90 is registered. As the expiration date of the license file 90, the date (e.g., yy/mm/dd) obtained by adding the expiration date (valid period) to the current date is registered, the expiration date being registered in the license management table 121 corresponding to the product key and the product ID included in the generation request for generating the license file 90.

Next, the license issue section 115 transmits the generated license file 90 to the installation section 421 (step S170). The installation section 421 stores the received license file 90 in a temporary storage area (e.g., a temporary folder) in the HDD 141.

After the reception of the license file 90, the installation section 421 performs an installation process of the sales package (step S171). Details of the installation process are described below.

Further, in the above description, an example is described where an acquisition request for acquiring the sales package is transmitted to the image forming apparatus 40 by using the installation list screen data in step S157 or the confirmation screen data in step S163. However, at that timing, the sales package itself (i.e., the program main body) may be transmitted to the image forming apparatus 40. To that end, the component server 15 may download the sales package to be installed from the download server 30, and transfer the sales package to the image forming apparatus 40.

Further, when some of the sales packages belonging to the group are installed (that is, when some of the sales packages belonging to the group are selected in the installation list screen 540), the rest of the sales packages belonging to the group can be separately installed. When the rest of the sales packages are to be installed, the user may operate to display the product key input screen 520, and input the product key of the group again. In this case, the installation support section 152 generates the installation list screen data in a manner such that the check box is not provided for the sales package that is being used by issued license from among the sales packages belonging to the group. Therefore, the installation list screen 540 is displayed in which the sales package being used by the issued license cannot be selected as the installation target. The information indicating whether the license of the sales package is in use is determined based on the information that is transmitted by the product key verification section 113 in step S155 and that indicates whether the license is in use for each product ID belonging to the group.

Next, details are described of the processes performed in steps S161 and S162 of FIG. 22 by the component server section 15 of the license management server 10.

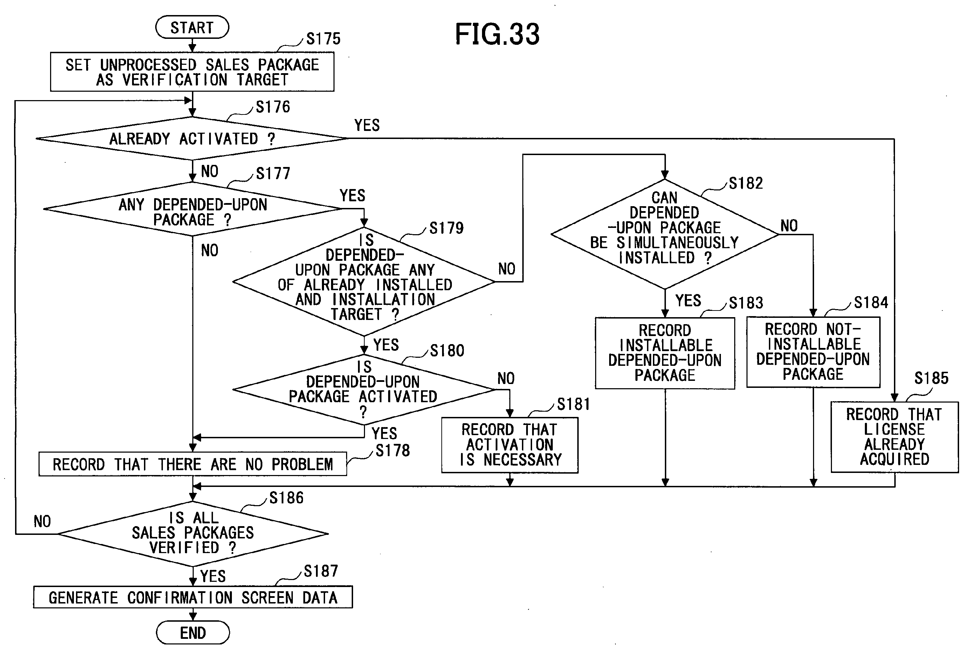

FIG. 33 is a flowchart illustrating a processing procedure of the verification process of verifying the dependence relationship and a generation process of generating the confirmation screen data by the component server section 15.

In step S175, the dependence relationship determination section 151 sets one product ID (i.e., sales package) as a target to be processed, the product ID being selected from among the product IDs received in the verification request for verifying the dependence relationship in step S160 of FIG. 22. Next, the dependence relationship determination section 151 determines whether the sales package to be processed (hereinafter referred to as "current sales package") has already been activated based on the activation flag included in the configuration information for the current sales package from among the configuration information items received for each of the sales packages in step S160 (step S176). When determining that the activation has not been performed (NO in step S176), the dependent relationship determination section 151 determines whether there is a sales package (depended-upon package) on which the current sales package depends based on the component management table 155 (see FIG. 28) and a dependence relationship management table 156 (step S177).

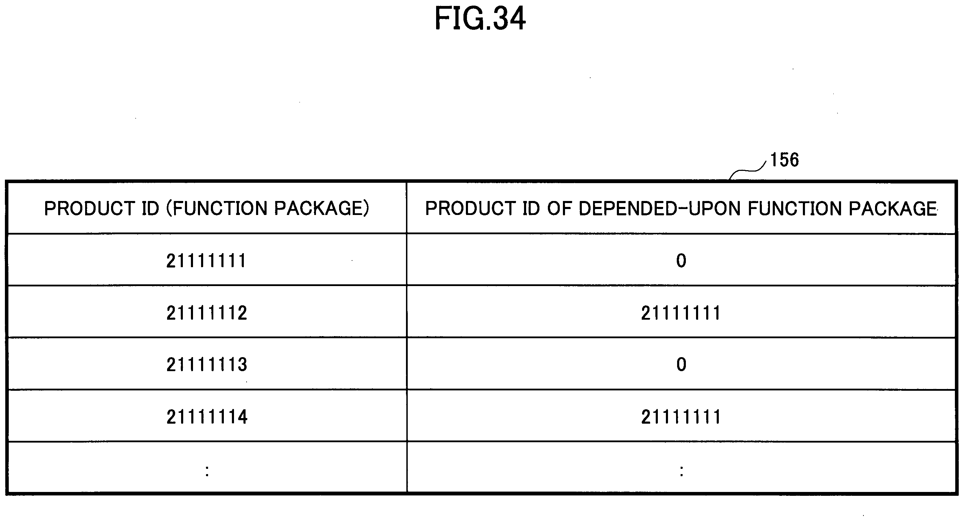

FIG. 34 shows an exemplary configuration of the dependence relationship management table. As shown in FIG. 34, the dependence relationship management table 156 registers information items of the product ID of the function package and the product ID of depended-upon function packages. In this table, a plurality of the product ID of the depended-upon function packages may be registered. Further, the number "0" in FIG. 34 indicates that there is no function package on which the function package depends.

Similar to the component management table 155, the contents of the dependence relationship management table 156 are registered by analyzing the contents of periodically acquired sales package by the component management section 154. Specifically, the contents of the package dependence information recorded in the function package information file of each of the function packages in the sales package are stored in the dependence relationship management table 156 as the product ID of depended-upon function packages.

In step S177, the dependent relationship determination section 151 acquires a list of the product ID of the function package registered for the product ID of the current sales package in the component management table 155. Next, the dependent relationship determination section 151 specifies another function package (hereinafter referred to as "depended-upon function package") on which the function package depends based on the product ID of the acquired function package and the dependence relationship management table 156. When determining that there is the depended-upon function package, the dependence relationship management table 156 specifies the sales package to which the depended-upon function package belongs by reversely referring to the dependence relationship management table 156. The specified sales package is the depended-upon package of the current sales package. Further, there may be plural depended-upon packages. Further, the search for the dependence relationship between the function packages is recursively performed.

When determining that there is no depended-upon package (NO in step S177), the dependent relationship determination section 151 associates and records the information indicating that there is no dependence relationship in the current sales package with the product ID of the current sales package into the memory device 103 (step S178). On the other hand, when determining that there is a depended-upon package (YES in step S177), the dependent relationship determination section 151 determines whether the depended-upon package has already been installed or is set as the installation target based on the configuration information received for each sales package in step S160 or the product ID of the sales package to be installed received in step S160 (step S179). Namely, when the configuration information corresponding to the depended-upon package is received, it is determined that the depended-upon package has already been installed in the image forming apparatus 40. Further, when the product ID of the depended-upon package is included in the product ID to be installed, it is determined that the depended-upon package is set to the installation target.

When the depended-upon package has already been installed (YES in step S179), the dependent relationship determination section 151 determines whether the depended-upon package has already been performed activation (activated) (i.e., whether the depended-upon package is in a status where the depended-upon package is usable) based on the configuration information received for each sales package (step S180). In this case, based on the activation flag included in the configuration information corresponding to the depended-upon package, it is determined whether the depended-upon package has already been activated.

When determining that the depended-upon package has already been activated or that the depended-upon package is set as the installation target (YES in step S180), the dependent relationship determination section 151 associates and records (stores) the information indicating that there is no problem in the depending relationship of the current sales package with the production ID of the current sales package into the memory device 103 (step S178). When determining that there is a depended-upon package that has not been activated (NO in step S180), the dependent relationship determination section 151 associates and records (stores) the information indicating that it is necessary to perform activation of the depended-upon package with the production ID of the current sales package into the memory device 103 (step S181).

Further, when determining that there is a depended-upon package that is not installed (NO in step S179), the dependent relationship determination section 151 determines whether it is possible to simultaneously install the depended-upon package based on the component management table 155 (step S182). Namely, in the component management table 155, when the distribution type corresponding to the product ID of the depended-upon package indicates that it is not necessary to perform activation, it is determined that the depended-upon package can be simultaneously installed. On the other hand, when the distribution type corresponding to the product ID of the depended-upon package indicates that it is necessary to perform activation, it is determined that the depended-upon package cannot be simultaneously installed.

When determining that there is a depended-upon package that can be simultaneously installed (YES in step S182), the dependent relationship determination section 151 associates and records the product ID of the depended-upon package as the product ID of the depended-upon package that can be simultaneously installed with the product ID of the sales package into the memory device 103 (step S183). When determining that there is a depended-upon package that cannot be simultaneously installed (NO in step S182), the dependent relationship determination section 151 associates and records the product ID of the depended-upon package as the product ID of the depended-upon package that cannot be simultaneously installed with the product ID of the sales package into the memory device 103 (step S184).

Further, when determining that the current sales package has been activated (YES in step S176), the dependent relationship determination section 151 associates and records the information indicating that the license has already been acquired with the product ID of the current sales package into the memory device 103 (step S185).

When the performance of the processes in steps S175 through S185 has been completed on each of the product IDs received in the verification request for verifying the dependence relationship in step S160 of FIG. 22 (YES in step 186), the installation support section 152 generates the confirmation screen data based on the information stored in the memory device 103 (step S187). For example, when there is no problem for all the sales packages, the confirmation screen data is generated so as to display the confirmation screen 550a as shown in FIG 29. Further, when the information as in step S183 is recorded, the confirmation screen data is generated so as to display the confirmation screen 550b as shown in FIG 30. Further, when the information as in step S181, S184, or S185 is recorded, the confirmation screen data is generated so as to display the confirmation screen 550c as shown in FIG 31.

Further, in each confirmation screen data, the URL of the installable sales package is associated with the OK button. The URL of the installable sales package is acquired from the download path of the component management table 155.

In the above description, a case is described where the depended-upon package is indicated (provided) for each sales package. However, the depended-upon package may be indicated (provided) for each function package. Further, in this embodiment, even in a case where the depended-upon package is indicated (provided) for each function package, since it is assumed that the sales package is treated as the distribution unit, what is to be treated as the installation target is the sales package that includes the function package.

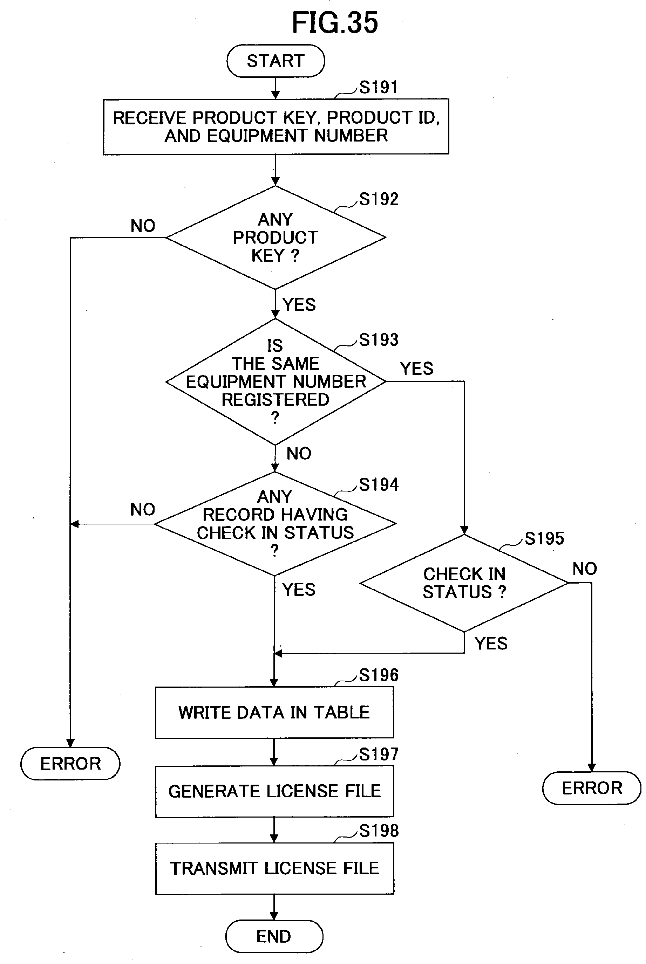

Next, details are described of the processes in steps S168 through S170 of FIG. 22 performed by the activation server section 11 of the license management server 10 are described. FIG. 35 is a flowchart illustrating a processing procedure of a generation process of generating the license file by the activation server section 11. Further, in FIG. 35, a case is described assuming that one product key is treated as a.processing target. Therefore, when plural product keys are received, processes from steps S192 are performed for each of the product keys.

In step S191, the license issue section 115 receives information items of the product key, the product ID, and the equipment number from the installation section 421 of the image forming apparatus 40. Next, the license issue section 115 determines whether the license of the product key is usable. Specifically, the license issue section 115 determines whether the received product key is registered in the license management table 121 (step S192). When determined that the product key is registered (YES in step S192), the license issue section 115 determines whether the equipment number same as the received equipment number is registered in the license management table 121 as the equipment number corresponding to the product key (step S193). When determining that the same equipment number is not registered (NO in step S193), the license issue section 115 determines whether there is a record having a status "check in" from among the records that corresponds to the product key and the received product ID in the license management table 121 (step S194). When determining that there is such a record (hereinafter referred to as the "target record") (YES in step S194), the license issue section 115 records the received equipment number in the target record, and sets (changes) the status of the target record to "check out" (step S196). Namely, the information indicating that the license corresponding to the product key is being used is recorded. Further, when the information item of "license expiration date (valid date)" is recorded in the target record (i.e., when the target record is the record corresponding to the temporary license), the license issue section 115 calculates a date by adding the license expiration date (valid period) to the current date, and records the calculated date (valid period) in the target record as the license expiration date (valid period).

Next, the license issue section 115 generates the license file 90 (see FIG. 32) including the information items of the product ID, equipment number, and license expiration date (valid period) in the target record (step S197). Further, in this case, the license file 90 is generated for each record in the license management table 121, that is, for each license corresponding to the sales package. Next, the license issue section 115 transmits the generated license file 90 to the installation section 421 of the image forming apparatus 40 (step S198).

On the other hand, when determining that there is a record registering the equipment number the same as the received equipment number corresponding to the product key (YES in step S193), the license issue section 115 determines whether the status of the record is "check in" (step S195). When determining that the status is "check in" (YES in step S195), the processes after step S196 are performed.

Further, when determining that there is no record corresponding to the product key (NO in step S192), when determining that there is a record having the status "check in" in the license management table 121 from among the records corresponding to the product key and the received product ID (NO in step S194), or when determining that the status of the record is not "check in", the record registering the equipment number the same as the received equipment number for the product key (NO in step S195), the license issue section 115 assumes that an error is detected, and does not generate the license file 90; that is, the license issue section 115 does not issue the license.

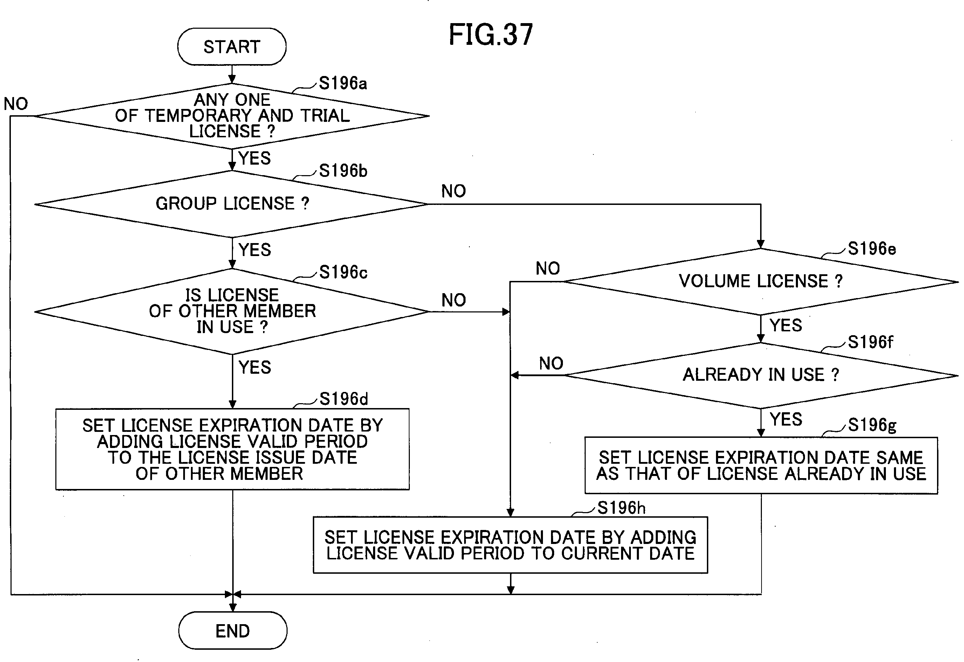

Next, details of the calculation process of calculating the license expiration date (valid period) performed in step S193 are described. FIG. 37 is a flowchart illustrating the calculation process of calculating the license expiration date (valid period).

First, in step S196a, the license issue section 115 determines whether the license type recorded in the target record is any of the temporary license and the trial license, that is, whether the license has an expiration date (valid period). When determining that the license type is neither the temporary license nor the trial license (NO in step S196a), the license issue section 115 does not calculate the license expiration date.

On the other hand, when determining that the license type is the temporary license or the trial license (YES in step S196a), the license issue section 151 determines whether the target record is related to the group license (step S196b). Specifically, the license issue section 115 searches for the other record having a product ID different from the product ID of the target record and having a product key the same as the product key of the target record. When the corresponding record is searched for (detected), it is determined that the target records is related to the group license. On the other hand, when the corresponding product key is not detected, it is determined that the target record is not related to the group license.

When determining that the target record is related to the group license (YES in step S196b), the license issue section 115 determines whether there is a record that belongs to the same group as the group of the target record and that the license thereof is in use (step S196c). Specifically, from among the other record searched for in the step S196b., it is determined that there is the record having the status "check out". When determining that there is the corresponding record (YES in step S196c), the license issue section 115 records the date calculated by adding the license expiration date (valid period) to the license issue date of the record to the license expiration date (valid period) of the target record (step S196d). Namely, the license expiration date (valid period) of the sales packages belonging to the same group become identical.

On the other hand, when determining that the target record is not related to the group license (NO in step S196b), the license issue section 115 determines whether the target record is related to the volume license (step S196e). Specifically, the license issue section 115 searches for the other record having the product ID same as the product ID of the target record and having the product key the same as the product key of the target record. When determining that the corresponding record is searched for (detected), it is determined that the target record is related to the volume license. On the other hand, when determining that the corresponding record is not detected, it is determined that the target record is not related to the volume license.

When determining that the target record is related to the volume license (YES in step S196e), the license issue section 115 determines whether the -use of the volume license has already started (step S196f). Specifically, it is determined whether there is a record having the status "check out" from among the records searched for (detected) in step S196e. When determining that there is the corresponding record (YES in step S196e), the license issue section 115 calculates a date by adding the license expiration date (valid period) of the target record to the license issue date of the record, and records the calculated date in the license expiration date of the target record (S196g). Namely, the license expiration date (valid period) of all the licenses belonging to the volume license become identical.

Further, when determining that the target record is related to the group license and that the license related to the group has not been used (NO in step S196c), when the target record is related to neither the group license nor the volume license (NO in step S196e), or when determining that the target record is related to the volume license and that the use of the license related to the group has not started (NO in step S196f), the license issue section 115 calculates a date obtained by adding the license expiration date (valid period) to the today's date, and records the calculated date in the license expiration date (valid period) of the target record (step S196h).

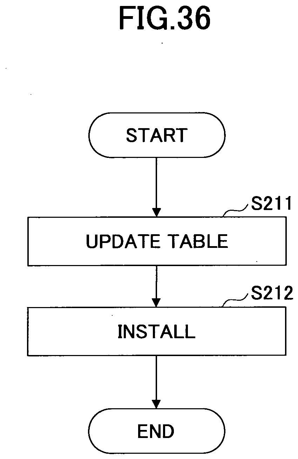

Next, details of the process of step S171 of FIG. 22 performed by the image forming apparatus 40 are described. FIG. 36 is a flowchart illustrating a processing procedure of installing the sales package performed by the image forming apparatus 40.

In step S211, the installation section 421 registers the information included in each sales package stored in the temporary storage area and the information included in each license file 90 into the installation information management table 427. Namely, the product ID and the version recorded in the sales package information file included in the sales package are registered in the product ID and the version, respectively, recorded in the installation information management table 427. As the product ID of the function package, the product ID recorded in the function package information file stored in each function package included in the sales package is registered. Further, the value indicating that the activation has already been performed is recorded in the activation flag. Further, as the license expiration date (valid period), the expiration date (valid period) recorded in the license file 50 is recorded.

Next, the installation section 421 sets the status of the sales package to usable by storing the license file 90 and the sales package into a predetermined storage area (folder), the license file 90 and the sales package having been stored in the temporary storage area.

Further, the license file 90 is used during the license check performed by the license check section 424 when the function package included in the sales package is started up. Namely, the license check section 424 permits the start of the function package when the following conditions are satisfied: there exists a license file 90 corresponding to the sales package to which the function package to be started belongs; the equipment number in the license file 90 is the same as that of the image forming apparatus 40 in which the function package is to be started; and the expiration date (valid period) of the license file 90 has not expired. Otherwise, the start up of the function package is not permitted. Further, the license check section 424 may perform the license check based on the component management table 425.

On the other hand, a charge for the installed sales package is made by, for example, the sales management section 22 of the sales server 20 based on the information of the license management table 121 periodically acquired by the activation server section 11. More specifically, when there exists a record in the license management table 121 that the license issue date thereof is after the latest charge date, the charge (operation) is made for the license corresponding to the record.

As described above, according to the first embodiment of the present invention, a user may easily perform a series of operations like the download, activation, and installation of the sales package by operating the screens sequentially displayed on the image forming apparatus 40 guided by the activation server section 11 or the component server section 15 of the license management server 10.

Further, the dependence relationship related to the sales package selected as the installation target is automatically verified, and the depended-upon package is also automatically included (set) as the installation target. Therefore, it may become possible for a user to easily install without being afraid of complicated dependence relationships between the sales packages.

Further, for a sales side of the products (manufacturer environment E2), it may become possible to appropriately manage the use status of the sales packages by the users. Specifically, based on the information of the license management table 121, it may become possible to understand (manage) which of the sales packages are being used based on the type of license type for each of the image forming apparatuses 40 (equipment numbers). Therefore, for example, when a bug is detected in a sales package or when a sales package is updated (for version update), it may become possible to specify the image forming apparatus using the sales package, thereby enabling proving appropriate service and the like.

Further, the expiration date of the license is not determined when the product is purchased (i.e., when the purchase application is sent to the sales server 20) but determined when the sales package is installed (i.e., when the license starts). Therefore, it may become possible to ensure the flexibility in handling the license. Namely, a user may install at any convenient timing after purchasing the product. Even in such a case, the user may not suffer a loss in terms of the license expiration date (valid period).

Further, in the product related to the group license, the product key is issued for each of the products. Therefore, a user may, for example, install all the sales packages belonging to the product. As a result, it may become easier to, for example, install the sales packages belonging to the group.

Next, the license update process is described. In a case of the temporary license, when a user uses a product related to the temporary license, the user may extend the license expiration date (valid period) of the product by performing the license update process.

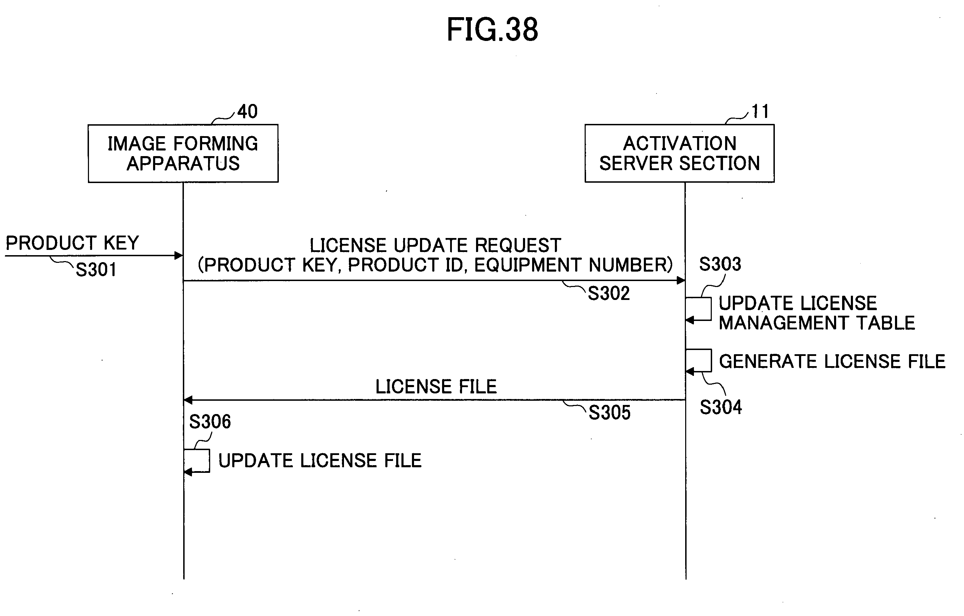

FIG. 38 is a sequence diagram illustrating a processing procedure of the license update process.

In the case of updating the license, while the function expansion setting menu screen 510 (see FIG. 23) is being displayed on the operation panel 45, the expansion function management menu 513 is selected by the user. In response to the selection of the expansion function management menu 513, the UI control section 426 controls to display an expansion function management screen on the operation panel 45.

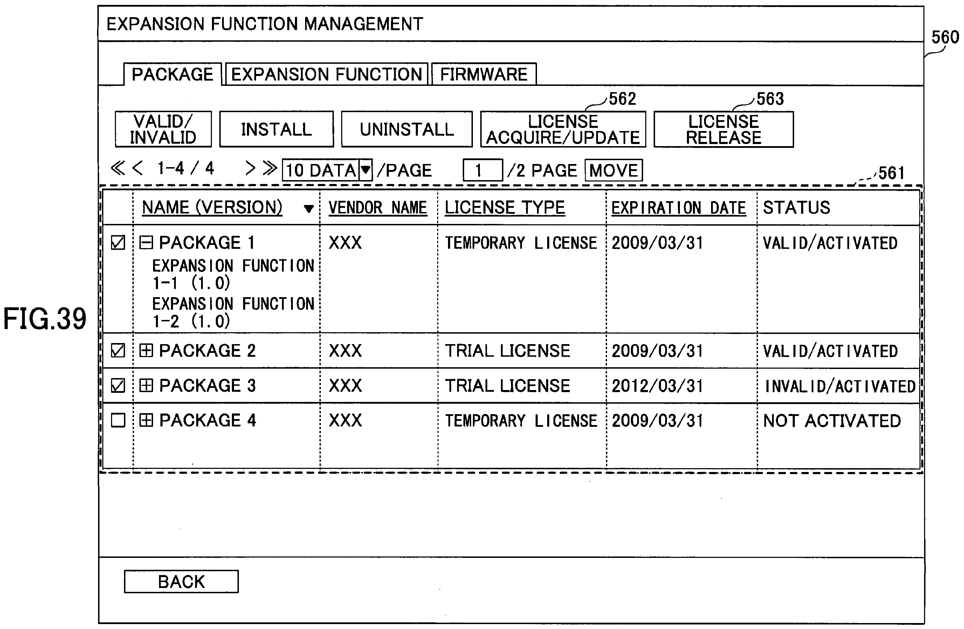

FIG. 39 shows a display example of the expansion function management screen. As shown in FIG. 39, the expansion function management screen 560 includes a sales package list display area 561. In the sales package list display area 561, a list of the sales packages installed in the image forming apparatus 40 is displayed. In this list, a check button is disposed for each of the sales packages. When the check button of the sales package corresponding to the license to be updated is checked and the license acquire/update button 562 is selected by a user, the UI control section 426 controls to display a license acquire/update screen on the operation panel 45.

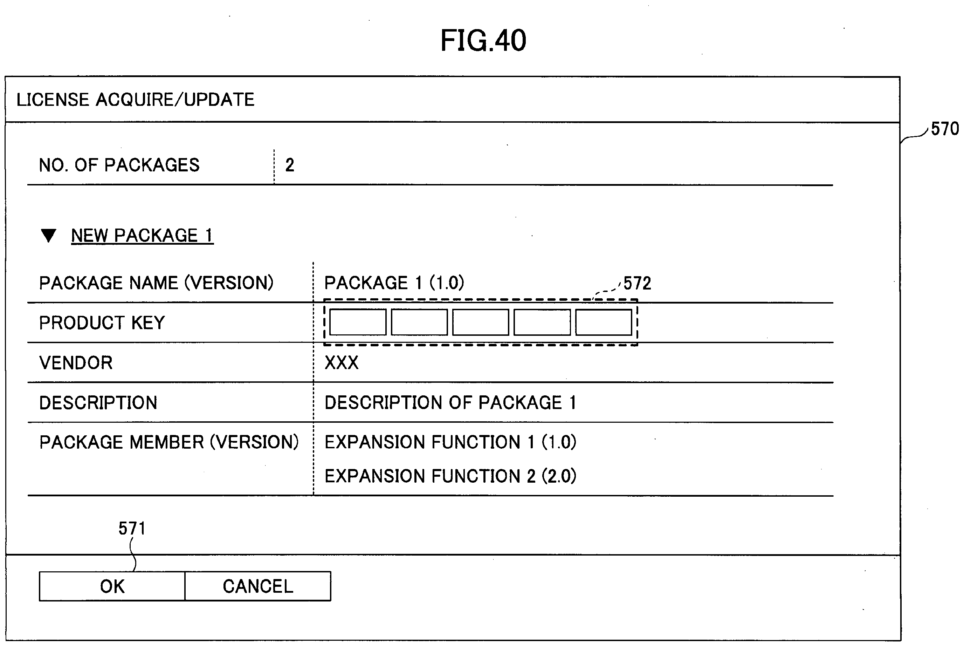

FIG. 40 shows a display example of the license acquire/update screen. As shown in FIG. 40, the license acquire/update screen 570 includes a product key input row 572 for the product key corresponding to the sales package checked in the expansion function management screen 560. When the product key is input in the product key input row 572 and the OK button 571 is selected by the user (step S301), the license update section 422 specifies the input product key, the product ID of the sales package corresponding to the license to be updated, and the equipment number of the image forming apparatus 40 recorded in the ROM 413 or the HDD 414, and transmits a license update request (a generation request for generating a new license file) to the license issue section 115 of the activation server section 11 (step S302).

In response to the reception of the license update request, the license issue section 115 updates the license management table 121 (step S303). Specifically, when the license type of the record corresponding to the product key, the product ID, and the equipment number specified in the update request is a temporary license, the license issue section 115 updates the license expiration date (valid period) and the license issue date of the record. Further, when the status of the record is "check in", the license issue section 115 updates the status by setting the status to "check out". In this case, as the new (updated) license expiration date (valid period), the date determined by adding the license valid period of the record to the license expiration date (valid period) registered so far or the current date whichever comes later is provided. Further, new (updated) license issue date is set to the current day in yy/mm/dd format. Further, when plural product IDs are specified, the update is performed on each of the plural records.

Next, the license issue section 115 generates the license file 90 (see FIG. 32) including the information items of the product ID, the equipment number, the expiration date (valid period) recorded in the record, for each of updated records in the license management table 121 (i.e., for each of the sales packages set to be updated) (step S304).

Next, the license issue section 115 transmits the generated license file 90 to the license update section 422 (step S305). The license update section 422 deletes the existing license file 90 of the sales package corresponding to the license to be updated, and stores the received license file 90 in a predetermined storage area of the HDD 414 (step S306). Further, the license update section 422 updates the installation information management table 427 based on the received license file 90. Specifically, the expiration date (valid period) of the record corresponding to the product ID recorded in the license file 90 is updated with the expiration date (valid period) recorded in the license file 90. Further, the license update section 422 sets the value of the activation flag of the record to the value indicating that the activation has already been performed.

By performing the above processes, the user may use the same sales package until the new (updated) expiration date.

Further, the charge for updating the license is made upon the installation. Namely, the charge is made by the sales management section 22 of the sales server 20 based on the information of the license management table 121 periodically acquired by the activation server section 11. More specifically, when there exists a record having the license issue date later than the latest charge date in the license management table 121, the charge is made for the license related to the record.

Next, the update process of the sales package (sales package update process) is described. As long as the license is valid, the user may update the sales package having an updated version.

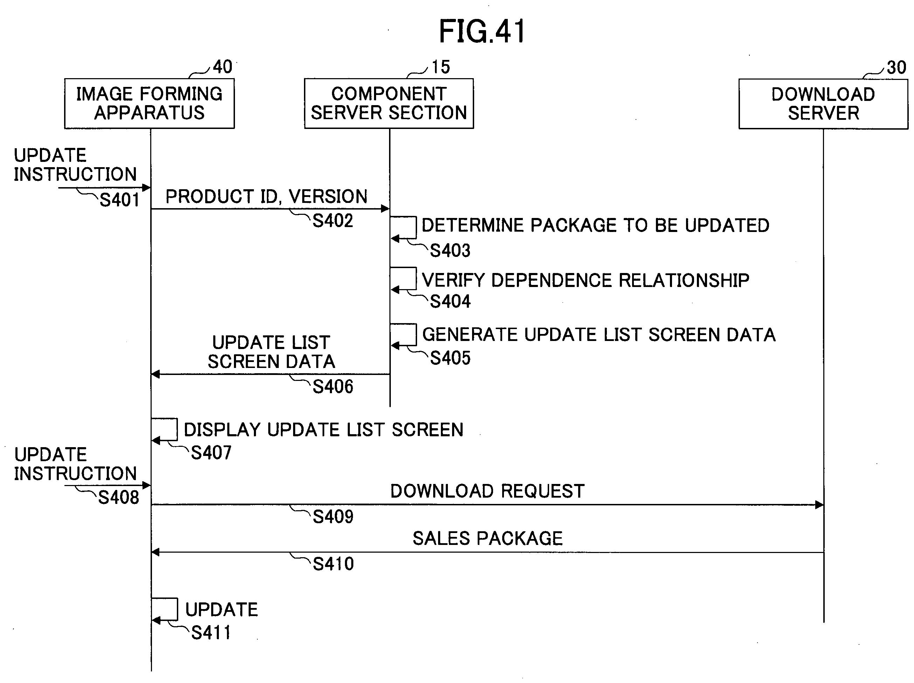

FIG. 41 is a sequence diagram illustrating a processing procedure of the sales package update process. As shown in FIG. 41, while the function expansion setting menu screen 510 is being displayed on the operation panel 45, when the update menu 512 is selected (step S401), the package update section 423 specifies the product ID and the version of each of the sales packages installed in the image forming apparatus 40, and transmits an update request for updating the sales package to the package update support section 153 of the component server section 15 (step S402). Further, the product ID and the version of each of the sales packages are acquired from the installation information management table 427.

The package update support section 153 determines the (update-target-candidate) sales package that can be an update target based on the product ID and the version specified in the received update request and the component management table 155. When there is a sales package having the version newer than the received version, which is the sales package registered in the component management table 155, the package update support section 153 recognizes the sales package as the update-target-candidate sales package.

Next, the package update support section 153 causes the dependence relationship determination section 151 to verify the dependence relationship of the update-target-candidate sales package (step S404). The reason why the verification of the dependence relationship is to be performed upon update even though the verification of the dependence relationship has already been performed upon installation is that there may be a possibility that the dependence relationship between the sales packages is changed due to the update (version update). Further, the verification process of verifying the dependence relationship in step 404 is the same as that performed upon installation (see FIG. 33) .

When there is no problem in the dependence relationship, the package update support section 153 generates update list screen data to display a screen (update list screen) for selecting the sales package to be updated from among the update-target-candidate sales packages (step S405). Next, the package update support section 153 transmits the generated update list screen data to the package update section 423 (step S406). On the other hand, when there is a problem in the dependence relationship, the confirmation screen data similar to that generated upon installation are generated for the update-target-candidate sales package, and the generated confirmation screen data are transmitted to the package update section 423.

Next, the package update section 423 inputs the received update list screen data to the UI control section 426. Based on the update screen data, the UI control section 426 controls to display the update list screen on the operation panel 45 (step S407) .

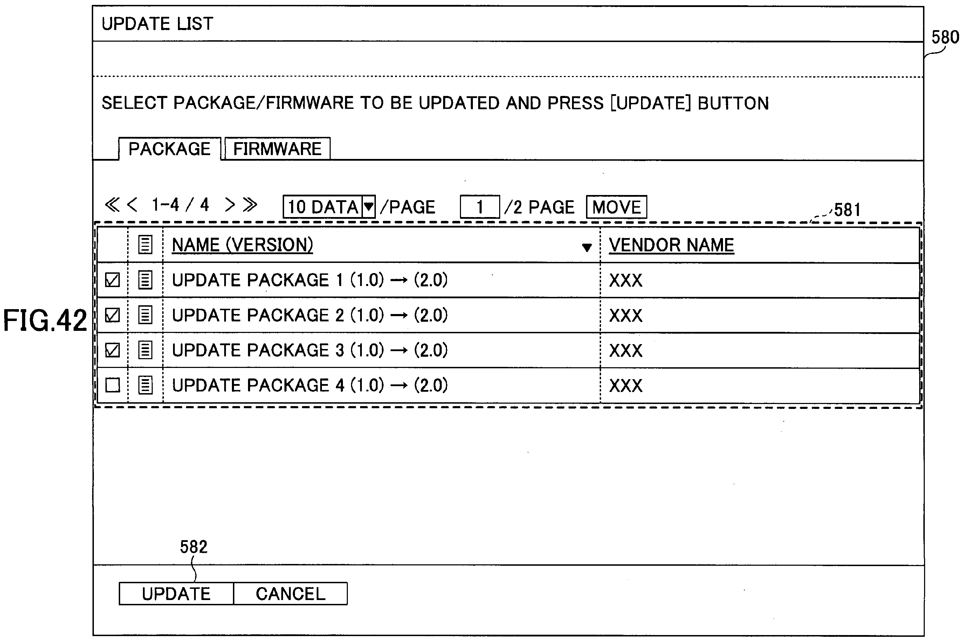

FIG. 42 shows a display example of the update list screen. As shown in FIG. 42, the update list screen 580 includes an update package list display area 581. In the update package list display area 581, there is a list of sales packages having the updated versions is displayed. Further, in the list, a check button is provided for each of the sales packages.

When the check button of the sales package to be updated and an update button 582 are pressed by the user (step S408), the package update section 423 specifies the URLs corresponding to the sales packages, and transmits a download request for downloading the sales packages to the download processing section 31 of the download server 30 (step S409) .

Namely, the update list screen data includes the information item of the respective URLs of the update-target-candidate sales packages. Further, a transmission instruction of the download request specifying the URL of the sales package checked (selected) in the update package list display area 581 is associated with the update button 582.

Next, the download processing section 31 acquires a sales package from the sales package management section 32, the sales package being identified by the URL specified in the received download request, and transmits the sales package to the package update section 423 (step S410). The package update section 423 updates the sales package having an old version by storing the received sales package into a predetermined storage area in the HDD 414. Further, the package update section 423 updates the package management table 425 (installation information management table 427) based on the information items of the product ID and the version recorded in the sales package information file stored in the received sales package. Specifically, in the installation information management table 427, a value indicating the version of the product ID is updated.

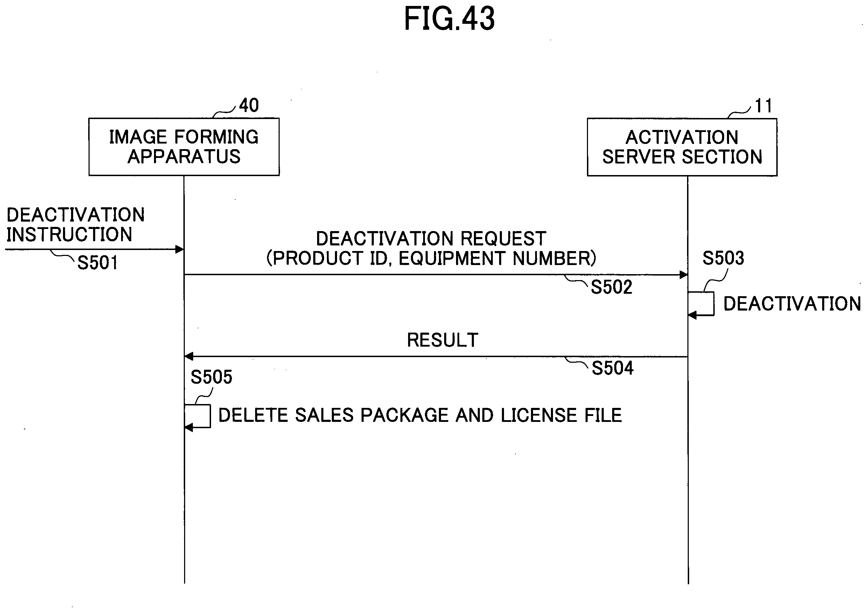

Next, the deactivation process is described. FIG. 43 is a sequence diagram illustrating a processing procedure of the deactivation process.

In step S501, the deactivation section 425 receives an input of a deactivation instruction from a user (step S501). The deactivation instruction is input via the expansion function management screen 560 (see FIG. 39). Namely, in the sales package list display area 561 of the expansion function management screen 560, when the sales package to be deactivated is checked and the license cancel button 563 is selected, so that the deactivation section 425 recognizes the checked sales package as the deactivation target.

Next, the deactivation section 425 specifies the product ID of the sales package selected as the deactivation target and the equipment number of the image forming apparatus 40, and transmits a deactivation request (license release request) to the deactivation section 116 of the activation server section 11 (step S502). The deactivation section 116 changes the status of the record related to the specified product ID and the equipment number from "check out" to "check in" in the license management table 121. Namely, the information is recorded indicating that the license is not being used. Further, the deactivation can be performed on the license having the status "check out". Therefore, when the status of the record to be a target is not "check out", the deactivation section 116 determines that the deactivation process has failed.

Next, the deactivation section 116 transmits a result of the deactivation process (whether the process has been successful) to the deactivation section 425 of the image forming apparatus 40 (step S504). When the deactivation process has been successful, the deactivation section 425 deletes the sales package set to the deactivation target and the license file 90 corresponding to the sales package from the HDD 414 (step S505). Further, the deactivation section 425 deletes the record corresponding to the sales package from the installation information management table 427.

By doing this, in the image forming apparatus 40, the function package included in the sales package cannot be used any more. On the other hand, since the license of the sales package is released, within the valid period (before the expiration date) of the license, the license may be used in another image forming apparatus 40 when it is necessary. Namely, the deactivation process may be especially effective (useful) when it is desirable that the license of the sales package in a first image forming apparatus 40 is to be moved to a second (another) image forming apparatus 40 so that the license of the sales package can be used in the second (another) image forming apparatus 40 due to, for example, expiration of the lease period of the first image forming apparatus 40.

The deactivation process may be automatically performed by the image forming apparatus 40 when an expired license is detected.

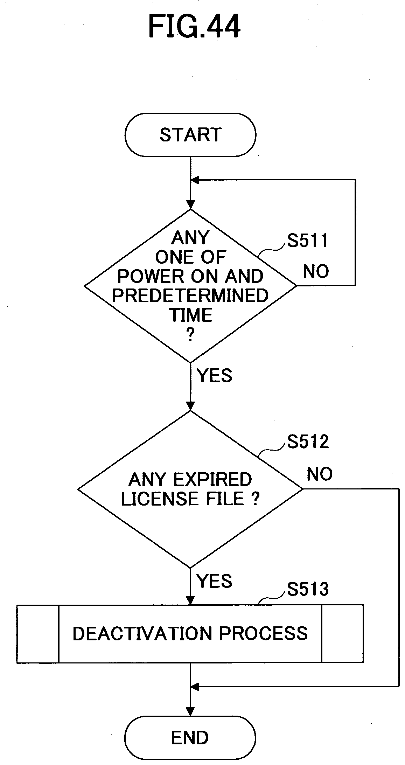

FIG. 44 is a flowchart illustrating a processing procedure of an automatic execution process of the deactivation in an image forming apparatus.

For example, when the image forming apparatus 40 starts up or at a predetermined time and the like (YES in step 511), the deactivation section 425 checks the expiration dates (valid periods) of all the license files 90 stored in the HDD 414 of the image forming apparatus 40 (step S512). Specifically, the deactivation section 425 compares the expiration date and the current date, and determines whether there is an expired license file 90. When determining that there is the expired license file 90 (YES in step S512), the deactivation section 425 performs the deactivation process described with reference to FIG. 43 on the product ID (sales package) recorded in the license file 90 (step S513).

As described above, according to the first embodiment of the present invention, a user may easily performs the license update process, the sales package update process, and the deactivation process based on screen guidance displayed on the image forming apparatus 40.

Further, the entity of the sales package and the license can be definitely separated (separately provided). Because of this feature, it may become possible to flexibly handle by, for example, updating the license only or updating (the version of) the sales package only.

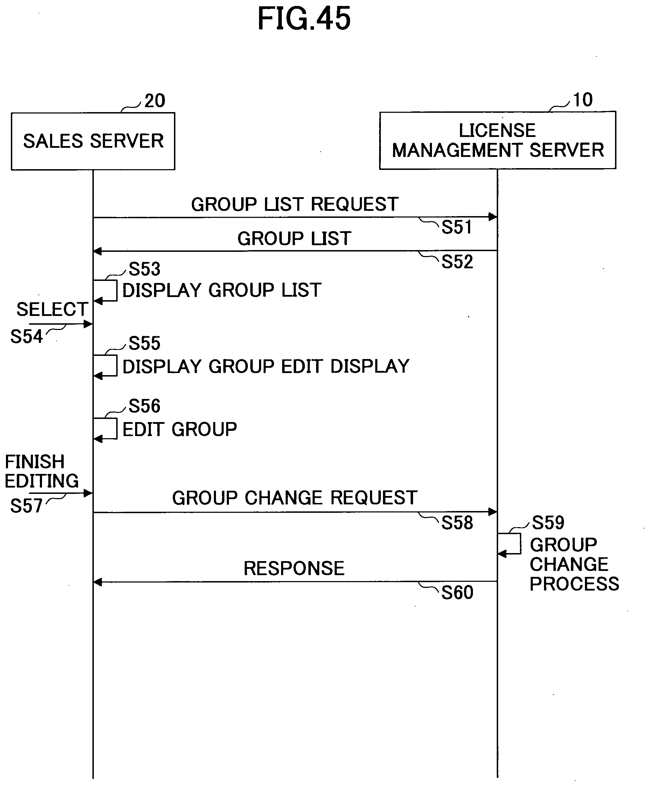

Next, editing of the registered group configuration is described. FIG. 45 is a sequence diagram illustrating the processing procedure of a group editing process.

For example, when a group change start instruction is input in the sales server 20 by a manager of the sales site, the product registration section 21 of the sales server 20 transmits an acquisition request for acquiring group list information to the sales server cooperation section 111 of the activation server section 11 (step S51). In response to the reception of the acquisition request for acquiring the group list information, the sales server cooperation section 111 acquires the group list information from the group ID master 120 and the group name master 122. The sales server cooperation section 111 transmits the acquired group list information to the product registration section 21 (step S52).

Based on the received group list information, the product registration section 21 functions to display a group list screen on the display device of the sales server 20 (step S53). In the group list screen, when any of the groups is selected and the editing is directed (step S54), the product registration section 21 functions to display the group edit screen 220 (see FIG. 16) in which the selected group is set as an edit target (step S55). Namely, in the areas 221 and 222 of the group edit screen 220, the group ID and the group name, respectively, of the selected group are displayed.

Next, in the group edit screen 220, an edit operation such as further adding a sales package to the group, removing a sales package from the group or the like is performed on the group configuration information (step S56). After the edit operation is finished, and the button 228 is clicked (step S57), the product registration section 21 transmits a change request for changing the group configuration to the sales server cooperation section 111 (step S58). The change request for changing the group configuration includes parameters such as the group ID and the group name of the group set as the edit target, the changed (updated) group configuration information (the product ID of the sales package belonging to the changed (updated) group), the domain name, the sales site ID, and the password stored in the storage device of the sales server 20. In response to the change request for changing the group configuration, the sales server cooperation section 111 performs the change process on the group configuration information (step S59). Specifically, for the group set as the edit target, the configuration information recorded in the group ID master 120 is updated based on the configuration information included in the change request. After the change process is performed for the group, the sales server cooperation section 111 transmits the response indicating whether the change process has been successful to the product registration section 21 (step S60).

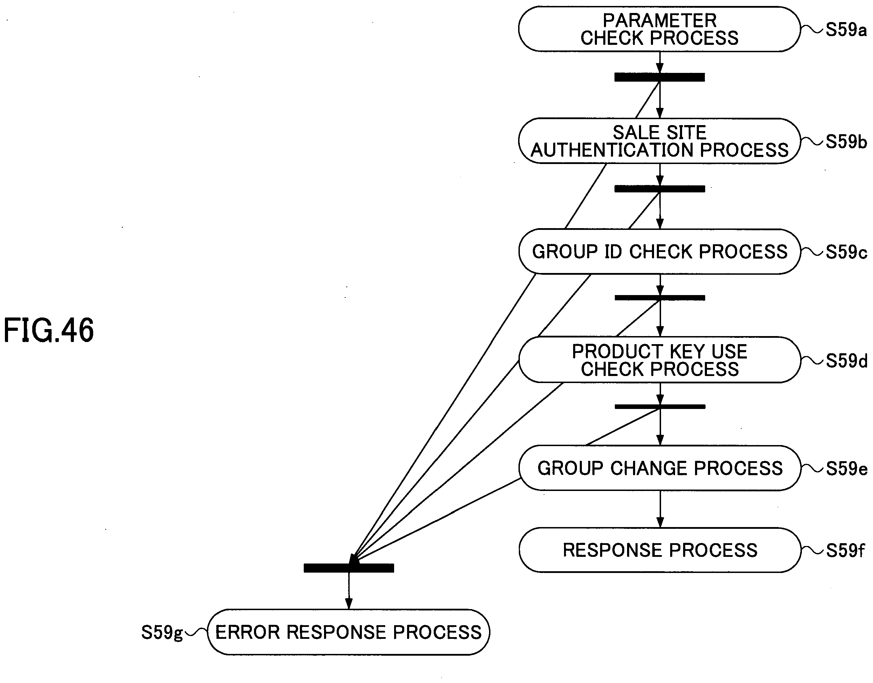

Next, details of step S59 are described. FIG. 46 shows a processing procedure of the group change process. As shown in FIG. 46, steps S59a and S59b are the same as steps 40a and S40b, respectively, in FIG. 17.

Next, the sales server cooperation section 111 determines whether a record is registered in the group ID master 120, the record including the group ID and the sales site ID included in the change request for changing the group configuration (step S59c). When determining that the record is registered, the sales server cooperation section 111 determines whether the product key (license) of any of the products related to this group is in use (step S59d). Specifically, the product ID of the sales package belonging to the group is acquired from the group ID master 120 based on the group ID included in the change request for changing the group configuration. Next, for the sales package related to the acquired product ID, it is checked whether the license is in use based on the license management table 121 (see FIG. 20). In this case, whether the license is in use means (refers to) whether the status is "check out". When determining that the license is not in use, the sales server cooperation section 111 performs an update (change) process on the group ID master, the update corresponding to the change request for changing the group configuration (step S59e). Specifically, the sales server cooperation section 111 deletes the existing product ID registered corresponding to the group ID and the sales site ID included in the change request for changing the group configuration, and registers the product ID included in the change request for the group ID and the sales site ID.

Next, the sales server cooperation section 111 transmits the response indicating that the change of the group configuration has been successful to the product registration section 21 (step S59f). On the other hand, when determining that there is no necessary parameter in step S59a, when determining that the authentication of the sales server has failed in step S59b, when determining that the group ID and the sales site ID are not registered in the group ID master 120 in step S59c, or when determining that the product key corresponding to the group ID has already been used in step S59d, the sales server cooperation section 111 transmits an error response indicating that the change of the group configuration has failed to the product registration section 21 (step S59g).

Further, for example, in a case where the license type of the sales package belonging to the group set as a target of the change request is registered as the trial license, even when any of the licenses of the sales packages belong to the group, the editing of the group (especially addition of the sales package to the group) may be permitted. The trial license is provided for a so-called "trial use". Therefore, even after the use of any of the sales packages belonging to the group has started, by increasing (adding) the sales package to be used for trial by the users, it may be expected to promote the sales of the products.

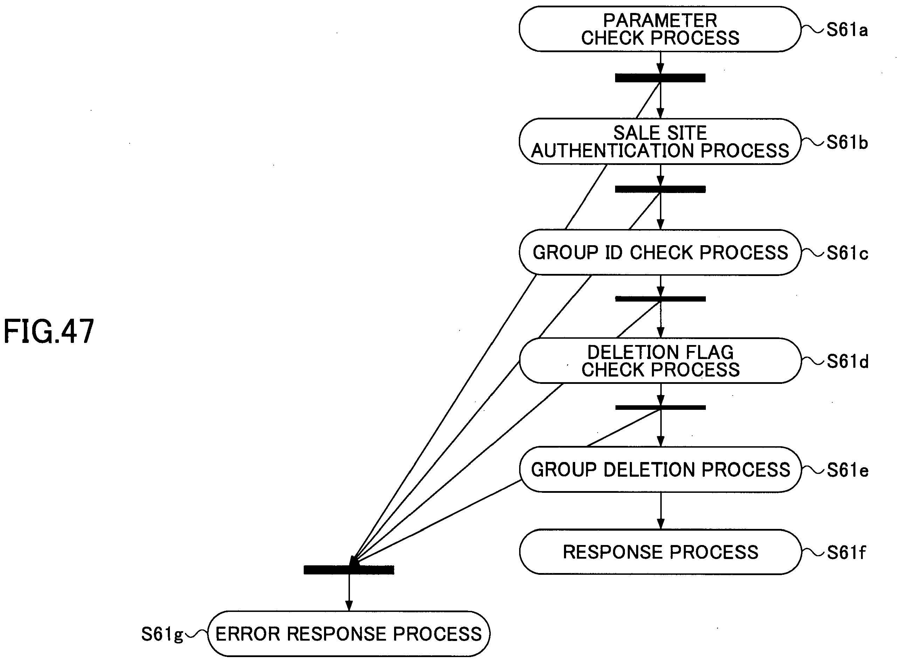

Next, the deletion of the group is described. In the group list screen displayed in step S53 of FIG. 45, when any of the groups is selected and the deletion is instructed, the product registration section 21 transmits a (group) deletion request for deleting a group including the group ID and the sales site ID corresponding to the selected group to the sales server cooperation section 111 of the license management server 10. In response to the deletion request, the sales server cooperation section 111 performs the process indicated in FIG. 47.

FIG. 47 illustrates the processing procedure of the group deletion process. In FIG. 47, steps S61a through S61c correspond to steps S59a through S59c, respectively, in FIG. 46.

In step S61d, the sales server cooperation section 111 determines whether the group can be deleted based on a deletion flag of the record including the group ID and the sales site ID included in the group deletion request. Specifically, when the value of the deletion flag is "ON", it is determined that the group can be deleted. On the other hand, when the value of the deletion flag is "OFF", it is determined that the group cannot be deleted.

When determining that the group can be deleted, the sales server cooperation section 111 performs the update (deletion) on the group ID master 120, the update (deletion) corresponding to the group deletion request (step S61e). Specifically, the sales server cooperation section 111 deletes a record from the group ID master 120, the record including the group ID and the sales site ID included in the group deletion request. Further, the sales server cooperation section 111 deletes the record corresponding to the group ID from the group name master 122. The processes in steps S61f and S61g are obvious from the those in steps S59f and S59g in FIG. 46, therefore, the description thereof is omitted.

As described above, after the registration of the group, the configuration of the group may be arbitrary changed in sales site. However, when the license of any of the sales packages belonging to the group is in use, the change of the group configuration is limited (prohibited). Therefore, it may become possible to have group management information appropriately consistent with the group status in the market.

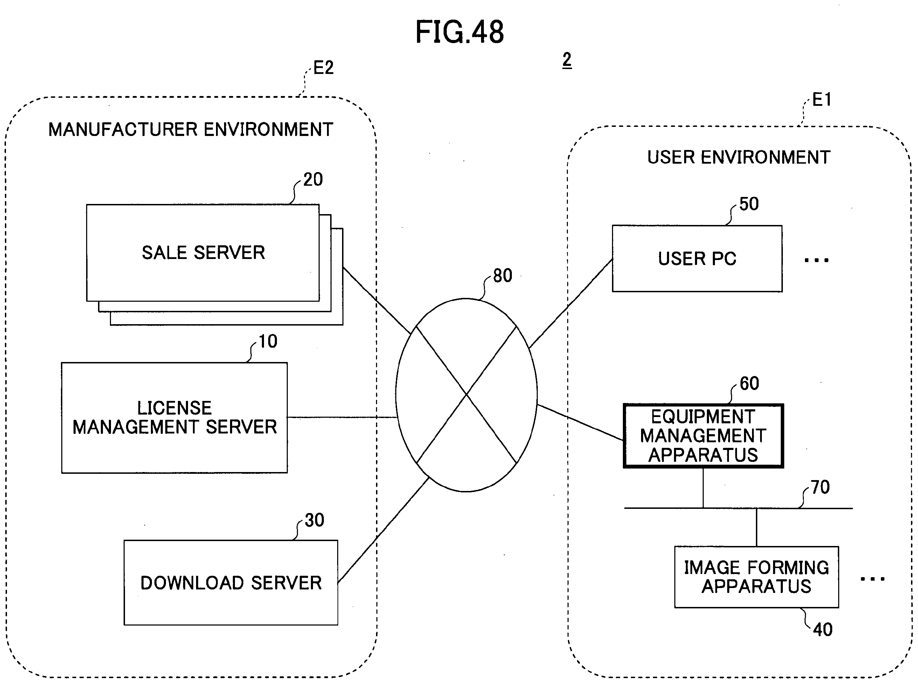

Next, a second embodiment of the present invention is described. FIG. 48 shows an exemplary configuration of an equipment management system according to the second embodiment of the present invention. In FIG. 48, the same symbols (reference numbers) are used for the same elements in FIG. 1, and the descriptions thereof are properly omitted.

As shown in FIG. 48, in the user environment E1, an equipment management apparatus 60 is further provided. The equipment management apparatus 60 is a computer such as a PC (Personal Computer) that, for example, collectively acquires and installs the components operating in the image forming apparatus 40 and the licenses (use authority) of the components. The hardware configuration of the equipment management apparatus 60 may be the same as that indicated in FIG. 6. However, the equipment management apparatus 60 includes a display device such as a liquid crystal display and an input device such as a keyboard, a mouse and the like. The equipment management apparatus 60 is connected to each of the image forming apparatuses 40 via a network 70 such as a LAN (Local Area Network) (wirelessly or via a wired connection). Further, the user PC 50 may be connected to the network 70. Further, the user PC 50 may serve as the equipment management apparatus 60 as well.

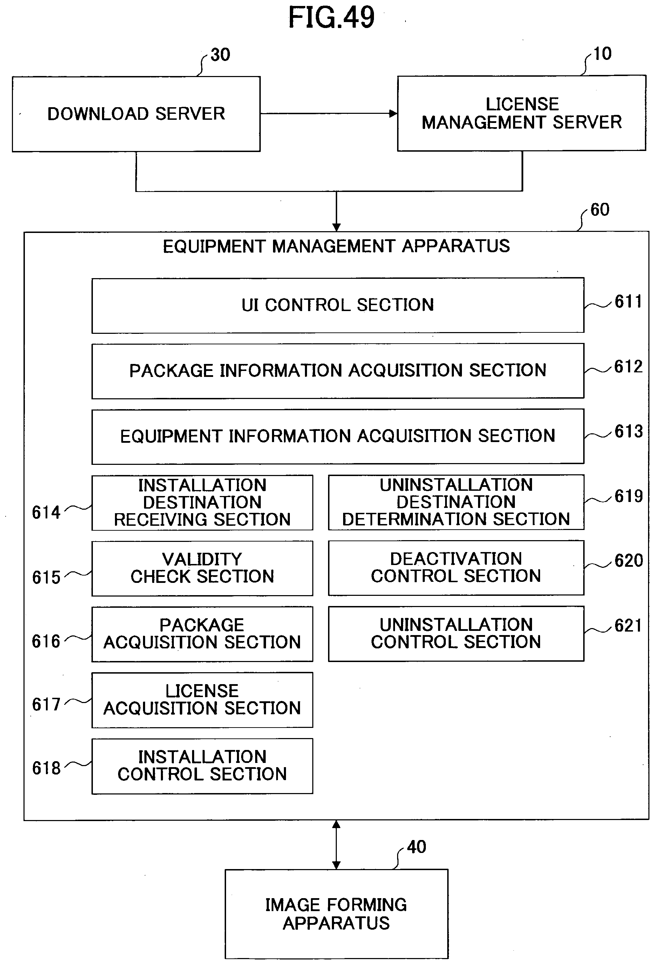

FIG. 49 shows an exemplary functional configuration of the equipment management apparatus 60 according to the second embodiment of the present invention.

As shown in FIG. 49, the equipment management apparatus 60 includes a UI control section 611, a package information acquisition section 612, an equipment information acquisition section 613, an installation destination receiving section 614, a validity check section 615, a package acquisition section 616, a license acquisition section 617, an installation control section 618, an uninstallation destination determination section 619, a deactivation control section 620, an uninstallation control section 621 and the like. Those sections are realized by a process causing the CPU of the equipment management apparatus 60 to execute a relevant program installed in the equipment management apparatus 60.

The UI control section 611 receives a user's instruction (e.g., an instruction to install or uninstall the sales package). The package information acquisition section 612 acquires configuration information of the sales package having been set as an installation target or an uninstallation target from the license management server 10. The equipment information acquisition section 613 acquires equipment information from the image forming apparatus 40. The equipment information includes the information of the sales package and the firmware installed in the image forming apparatus 40. The installation destination receiving section 614 receives an input from a user, the input specifying the image forming apparatus 40 as the installation destination of the sales package. The validity check section 615 causes the dependence relationship determination section 151 of the license management server 10 to execute the verification process of verifying the validity of the installation of the sales package set as the installation target to be installed in the image forming apparatus 40 set as the installation destination.

The package acquisition section 616 downloads (acquires) the sales package set as the installation target from the download server 30. The license acquisition section 617 acquires the license file 90 related to the sales package set as the installation target from the license management server 10. The installation control section 618 transmits the sales package and the license file 90 to the image forming apparatus 40.

The uninstallation destination determination section 619 determines the image forming apparatus 40 that the sales package set as an uninstallation target has been installed in. The deactivation control section 620 transmits a deletion request for deleting the license file 90 to the image forming apparatus 40, and transmits a license release request for releasing the license related to the license file 90 to the license management server 10. The uninstallation control section 621 transmits an uninstallation request for uninstalling the sales package to the image forming apparatus 40.

Further, the functional configurations of the other apparatuses such as the license management server 10, the download server 30, the image forming apparatus 40 and the like may be the same as those in the first embodiment of the present invention.

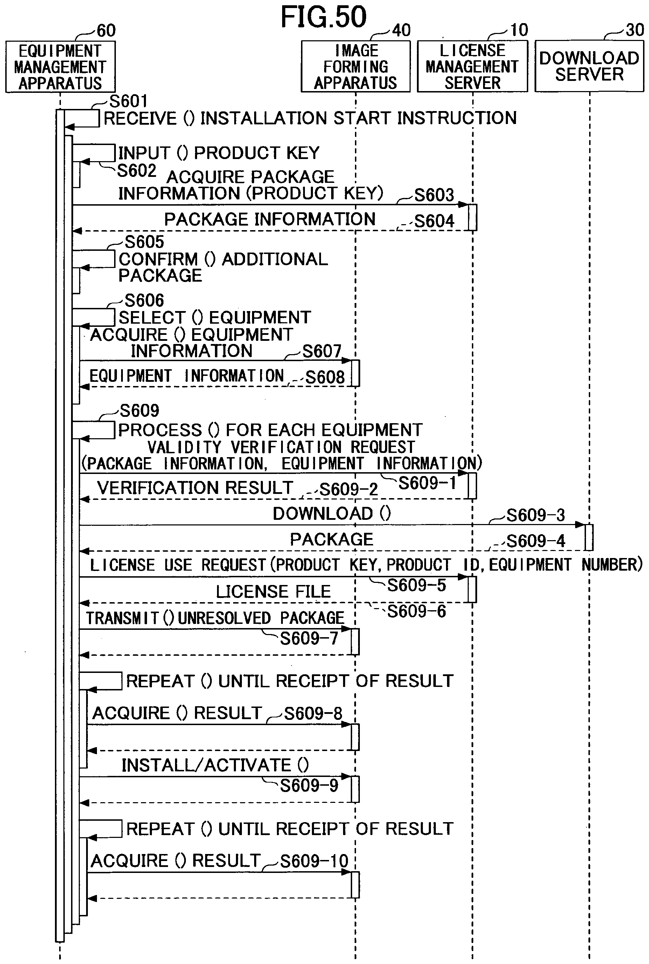

In the following, a processing procedure of an equipment management system 2 is described. FIG. 50 is a sequence diagram illustrating a processing procedure of the installation and activation of the sales package according to the second embodiment of the present invention. In FIG. 50, it is assumed that a user of the image forming apparatus 40 has purchased any of the products related to a sales package and has already acquired the product key of the (purchased) product. The purchasing method of the product and the acquiring method of the product key may be the same as the purchasing method and the acquiring method in the first embodiment of the present invention. Further, it is assumed that the equipment management apparatus 60 is an operation target.

Upon receiving a start instruction to start the installation of the sales package via an initial screen displayed on the display device, the UI control section 611 of the equipment management apparatus 60 controls to display the product key input screen on the display device (step S601). When the product key of the sales package to be installed (hereinafter referred to as a "current sales package") is input via the product key input screen by a user (step S602), the package information acquisition section 612 specifies the input product key, and transmits an acquisition request for acquiring the package information of the product key to the installation support section 152 of the license management server 10 (step S603).

In response to the reception of the acquisition request for acquiring the package information, the installation support section 152 of the license management server 10 causes the product key verification section 113 to verify the effectiveness of the product key by performing the processing procedure the same as that in steps S153 through S155 of FIG. 22.

When determining that the product key is effective, the installation support section 152 acquires the information registered corresponding to the received product key from the component management table 155 (see FIG. 22), and transmits the acquired information to the package information acquisition section 612 as the package information (step S604). Therefore, the package information includes the product ID associated with at least the product key (i.e., the product ID of the current sales package). Further, when the product key is related to the group license or the volume license, the information related to the plural product IDs (plural records) is included in the package information.

When the package information is received by the package information acquisition section 612, the UI control section 611 of the equipment management apparatus 60 controls to display a screen (confirmation screen) including the received package information, so that the user can check the contents of the current sales package as well as the contents of the corresponding license (step S605).

When a continuation instruction to continue the installation operation is input by the user (e.g., when the OK button on the confirmation screen is pressed), the installation destination receiving section 614 functions to display an equipment selection screen including a list of the image forming apparatuses 40 on the display device, so that the user can select the image forming apparatus in which the current sales package is to be installed (step S606). In the equipment selection screen, plural image forming apparatuses 40 may be selected. Further, in the equipment selection screen, it is assumed.that an image forming apparatus 40 is set as a display target when the information items such as the IP address and the host name of the image forming apparatus 40 are stored in the storage apparatus. Otherwise, the equipment information acquisition section 613 may issue a broadcast signal or the like to the network 70 to dynamically search for (detect) the image forming apparatus 40 connected to the network 75, so that the host name or the like of the detected image forming apparatus 40 may be displayed in the equipment selection screen.

Next, the equipment information acquisition section 613 transmits an acquisition request for acquiring equipment information to each image forming apparatus 40 selected in the equipment selection screen (step S607). The installation section 421 of each of the image forming apparatuses 40 having received the acquisition request for acquiring the equipment information acquires the information recorded in the own installation information management table 427 (see FIG. 28), and transmits the information including the acquired information and the equipment number of the own image forming apparatus 40 to the equipment information acquisition section 613 as the equipment information (step S608).

Next, in step S609, a loop process is performed for each of the image forming apparatuses 40 that the equipment information thereof is acquired (i.e., that is selected in the equipment selection screen). In the following, an image forming apparatus 40 on which the loop process is to be performed is called "current equipment".

In step S609-1, the validity check section 615 transmits a validity verification request to the license management server 10, the validity verification request including the equipment information of the current equipment and the package information acquired by the package information acquisition section 612. Herein, the "validity" refers to the validity in terms of the installation of the function package into the current equipment, the function package being included in the current sales package. In response to the reception of the validity verification request, the dependence relationship determination section 151 of the license management server 10 verifies the dependence relationship of the current sales package by performing a process similar to the process described with reference to FIG. 33 above. When determining that there is no problem in the dependence relationship, the dependence relationship determination section 151 determines that there is validity. On the other hand, when determining that there is no problem in the dependence relationship, the dependence relationship determination section 151 determines that there is no validity.

Next, the dependence relationship determination section 151 transmits the validity verification result to the validity check section 615 (step S609-2). When determining that there is validity and that a depended-upon package is not installed in the current equipment, the verification result includes the information recorded in the component management table 155 for the depended-upon package (hereinafter such depended-upon package is called a "not-introduced depended-upon package"). This information corresponds to the acquisition instruction to acquire the not-introduced depended-upon package.

Upon receiving the verification result indicating that there is validity, the package acquisition section 616 transmits a download request for downloading the current sales package based on the download path (URL) included in the package information of the current sales package (step S609-3). In response to the download request, the download processing section 31 acquires the sales package from the sales package management section 32, the sales package being identified by the URL specified in the download request, and transmits the sales package (step S-609-4). When there are plural current sales packages, the download process (steps S609-3 and S609-4) is repeated plural times. Further, when the verification result including the package information of the not-introduced depended-upon package is received in step S609-2, the download for the not-introduced depended-upon package is also executed. Further, the case where there are plural current packages refers to the case where the product key input in step S601 is related to the group license, where the plural product keys are input or the like.

Next, the license acquisition section 617 specifies the product key input in step S601, the product ID of the current sales package, and the equipment number of the current equipment, and transmits a license use request to the license management server 10 (step S609-5).

The license issue section 115 of the license management server 10 generates the license file 90 by performing a process similar to that in FIG. 35, and transmits the generated license file 90 to the license acquisition section 617 (step S609-6).

Further, when the acquisition (download) of the sales package by the package acquisition section 616 has been successful, the license acquisition section 617 performs the process of step S609-5. Namely, when the sales package has not been acquired normally, the license acquisition section 617 does not acquire the license file 90. When the sales package cannot be acquired, it is not possible to install the sales package. In spite of this, if the license related to the sales package is acquired, the use of the license may start for the sales package that is not actually being used. In this case the user may have to suffer unreasonable loss.

Next, when the not-introduced depended-upon package is acquired in step S609-4, the installation control section 618 transmits the not-introduced depended-upon package to the current equipment, and transmits a request to install the not-introduced depended-upon package to the current equipment (step S609-7). The installation section 421 of the current equipment installs the not-introduced depended-upon package, and records the information (e.g., product ID) of the not-introduced depended-upon package in the installation information management table 427.

Next, the installation control section 618 inquires of the current equipment about the installation result of the not-introduced package (step S609-8). This inquiry (polling) is repeated until the installation is completed in the current equipment, and the installation result is transmitted.

The reason why the not-introduced depended-upon package is installed first is to avoid the case where the installation of the sales package has failed because the depending component of the sales package is not installed (cannot be detected by the sales package).

Next, the installation control section 618 transmits the sales package (current sales package) acquired in step S609-4 and the license file 90 acquired in step S 604-6 to the current equipment, and transmits a request to the installation and the activate the sales package to the current equipment (step S609-9). The installation section 421 of the current equipment performs the process on the received sales package and the license file 90, the process being described with reference to FIG. 22. As a result, the sales package can be used in the current equipment.

Next, the installation control section 618 inquires of the current equipment about the installation result of the sales package (step S609-10). This inquiry (polling) is repeated until the installation is completed in the current equipment, and the installation result is transmitted.

Next, the uninstallation and the deactivation (license release) processes of the sales package are described.

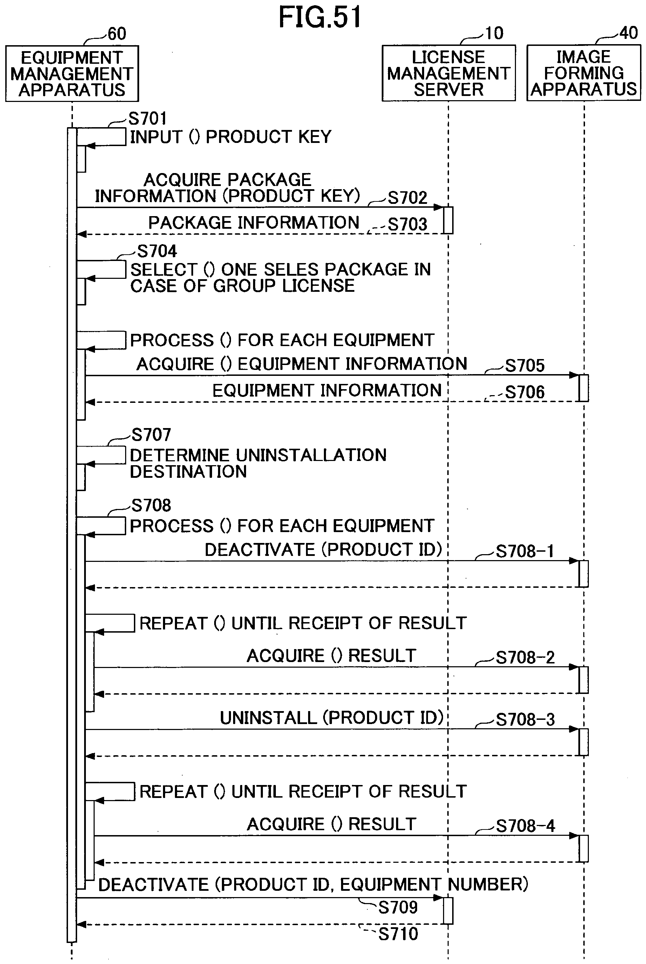

FIG. 51 is a sequence diagram illustrating a processing procedure of the uninstallation and deactivation processes according to the second embodiment of the present invention.

In step S701, the UI control section 611 of the equipment management apparatus 60 receives the input of the product key to be uninstalled via the uninstallation screen displayed on the display device by a user. Next, the package information acquisition section 612 specifies the input product key, and transmits an acquisition request for acquiring the package information related to the product key to the license management server 10 (step S702).

Next, the component management section 154 of the license management server 10 performs the process similar to that executed in response to step S603 of FIG. 50, and transmits the package information of the sales package related to the received product key to the package information acquisition section 612 (step S703). When the product key is related to the group license, the package information of the plural sales packages is transmitted.

When the product key is related to the group license, namely when the package information related to the plural sales packages is received, the UI control section 611 controls to display a sales package selection screen including a list of sales packages on the display device, so that the user can select the sales package to be uninstalled (step S704). In the following, the selected sales package refers to a "current sales package".

Next, the equipment information acquisition section 612 transmits an acquisition request for acquiring the equipment information to each of the image forming apparatuses 40 (step S705). In response to the acquisition request for acquiring the equipment information, the deactivation section 425 of each of the image forming apparatuses 40 acquires the information recorded in the installation information management table 427, and transmits the acquired information and the information including the equipment number of the own image forming apparatus 40 to the equipment information acquisition section 613 as the equipment information (step S706).

Next, the uninstallation destination determination section 619 compares (checks) the package information acquired in step S703 with the equipment information of the image forming apparatus 40 acquired in step S706, and determines the image forming apparatus 40 that the sales package related to the package information is installed in (step S707). Specifically, the image forming apparatus 40 related to the equipment information including the product ID included in the package information (product ID of the sales package) is determined as the image forming apparatus 40 that the sales package is installed in (i.e., the image forming apparatus 40 from which the sales package is to be uninstalled).

Next, in step S708, a loop process is performed for each of the image forming apparatuses 40 from which the sales package is to be uninstalled. In the following, the image forming apparatus 40 to be processed in the loop process is called "current equipment".

In step S708-1, the deactivation control section 620 specifies the product ID of the current sales package, and transmits a deactivation request (a deletion request for deleting the license file 90) to the current equipment. In response to the request, the deactivation section 425 of the current equipment deletes the license file 90 related to the specified product ID.

Next, the deactivation control section 620 inquires of the current equipment about the deletion process of the license file 90 (step S708-2). This inquiry (polling) is repeated until the deletion process of the license file 90 is completed in the current equipment, and the deletion process result is transmitted.

Next, the uninstallation control section 621 specifies the product ID of the current sales package, and transmits an uninstallation request (a deletion request for deleting the sales package) to the current equipment (step S708-3). In response to the request, the deactivation section 425 uninstalls (deletes) the sales package related to the specified product ID.

Next, the deactivation control section 620 inquires of the current equipment about the uninstallation result of the current sales package. This inquiry (polling) is repeated until the uninstallation process of the license file 90 is completed in the current equipment and the uninstallation result is transmitted.

After step S708 is performed for all the image forming apparatuses 40 from which the sales package is to be uninstalled, the deactivation control section 620 specifies the product ID of the current sales package and the equipment numbers of all the image forming apparatuses 40, and transmits a deactivation request (license release request) to the deactivation section 116 of the license management server 10 (step S709). The deactivation section 116 performs the same process as that of step S503 described with reference to FIG. 43. As a result, the status of the licenses related to the specified product ID and the equipment number is change to "check in". Next, the deactivation section 116 transmits the deactivation process result (whether successful) to the deactivation control section 620 of the equipment management apparatus 60 (step S710).

As described above, in the equipment management apparatus 60 according to the second embodiment of the present invention, for example, the installation process and the activation (start using license) process may be collectively performed on plural image forming apparatuses 40. Therefore, especially, in the user environment E1 where there are many image forming apparatuses 40, it may become possible to remarkably reduce the operational load of the user.

Further, in this embodiment of the present invention, the image forming apparatus 40 is described as an example of equipment. However, the scope of the present invention is not limited to the image forming apparatus 40. For example, the present invention may further be effectively applied to any apparatus (equipment) where a program can be added (installed).

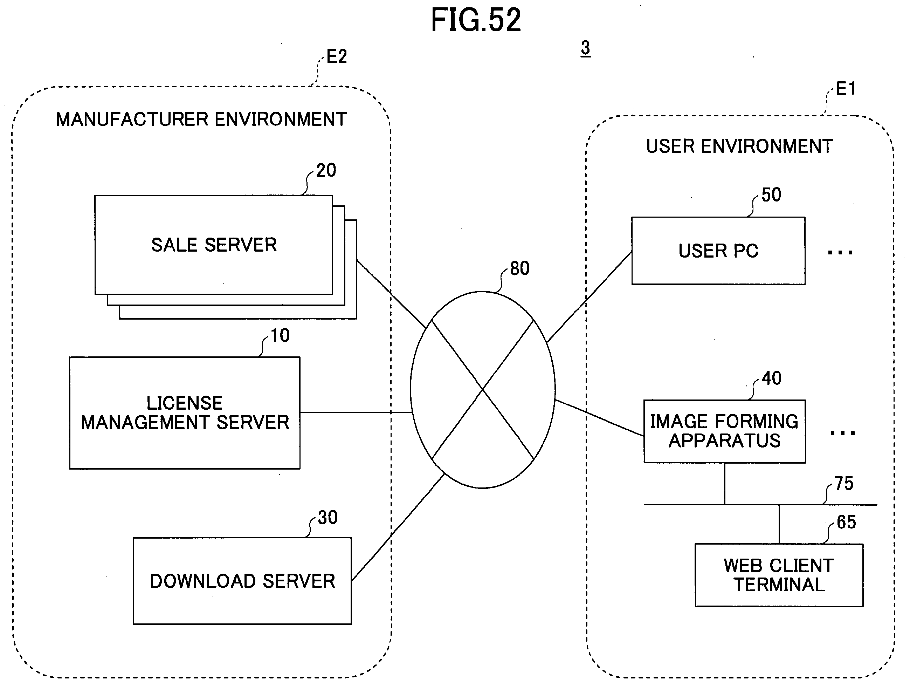

Next, a third embodiment of the present invention is described. FIG. 52 shows an exemplary configuration of an equipment management system according to the third embodiment of the present invention. In FIG. 52, the same symbols (reference numbers) are used for the same elements in FIG. 1, and the descriptions thereof are properly omitted.

As shown in FIG. 52, in the user environment E1, a Web client terminal 65 is further provided (added). The Web client terminal 65 may be a computer or an electronic device such as a PC (Personal Computer) having a Web browser. For example, a hardware configuration of the Web client terminal 65 may be similar to that of FIG. 6. However, the Web client terminal 65 includes a display device such as a liquid crystal display and an input device such as a keyboard, a mouse and the like. The Web client terminal 65 is connected to each of the image forming apparatuses 40 via a network 75 such as a LAN (Local Area Network) (wirelessly or via a wired connection). Further, the user PC 50 may be connected to the network 75. Further, the user PC 50 may serve as the Web client terminal 65.

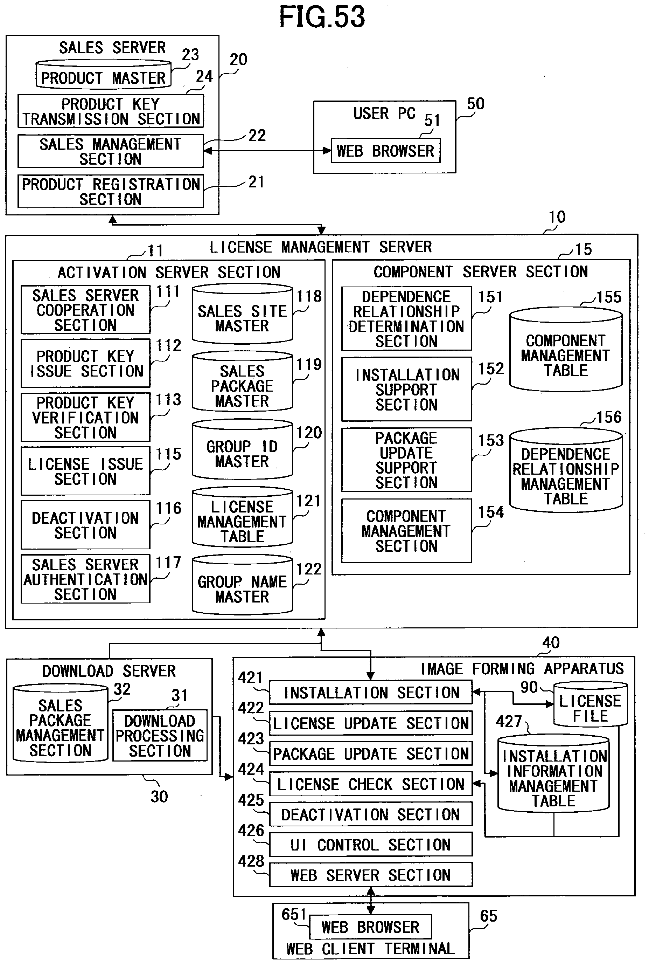

FIG. 53 shows an exemplary functional configuration of an equipment management apparatus according to the third embodiment of the present invention. In FIG. 53, the same symbols (reference numbers) are used for the same elements in FIG. 5, and the descriptions thereof are properly omitted.

As shown in FIG. 53, the image forming apparatus 40 further includes a Web server section 428. The Web server section 428 performs a process of displaying the screens on the Web client terminal 65, the screens being displayed on the operation panel 45 by the UI control section 426. Specifically, the Web server section 428 transmits each HTML data of the screens to the Web client terminal 65.

On the other hand, the Web client terminal 65 includes a Web browser 651. The Web browser 651 receives the transmitted HTML data from the Web server section 428, and displays various screens based on the HTML data on the display device of the Web client terminal 651.

Namely, in the equipment management system 3 according to the third embodiment of the present invention, a user may remotely perform operations via Web client terminal 65, the operations being the same as those performed by using the operation panel 45 as described in the first embodiment of the present invention. Specifically, the user may perform the instruction inputs in steps S151, S159, and S165 of the sequence diagram of FIG. 22 via the screen displayed by the Web browser 651. Therefore, in this third embodiment, the Web server section 428 corresponds to one example of an input means that receives the input of the license key.

Further, in each of the above embodiments, the license management server 10, the sales server 20, and the download server 30 are described as separate apparatuses. However, for example, the license server 10 may include at least any one of the sales server 20 and the download server 30.

According to a fourth embodiment of the present invention, a license management method is performed by a sales management apparatus and a license management apparatus that manages a license of a program sold by the sales management apparatus, the method including:
a group registration request step where the sales management apparatus displays a list of information of one or more programs, and transmits a registration request to the license management apparatus, the registration request including configuration information of a group including a combination of plural of the programs selected from the programs on the list of information;
a product registration step where the sales management apparatus receives an input of license information corresponding to the group, associates the license information with the group, and stores the associated license information together with the group into a product information storage unit as product information;
a sales management step where the sales management apparatus transmits a list of the product information in response to a reception of a purchase request for purchasing the program, the product information being stored in the product information storage unit; and
a group information storage step where the license management apparatus stores the configuration information included in the registration request.

According to a fifth embodiment of the present invention, there is provided a program encoded and stored in a computer readable format to cause a sales management apparatus and a license management apparatus managing a license of a program sold by the sales management apparatus to execute a method including:
a group registration request step where the sales management apparatus displays a list of information of one or more programs, and transmits a registration request to the license management apparatus, the registration request including configuration information of a group including a combination of plural of the programs selected from the programs on the list of information;
a product registration step where the sales management apparatus receives an input of license information corresponding to the group, associates the license information with the group, and stores the associated license information together with the group into a product information storage unit as product information;
a sales management step where the sales management apparatus transmits a list of the product information in response to a reception of a purchase request for purchasing the program, the product information being stored in the product information storage unit; and
a group information storage step that the license management apparatus stores the configuration information included in the registration request.

The present invention is described above by referring to specific embodiments. However, the present invention is not limited to the embodiments described above, and various modifications, transformations, alteration, exchanges, and the like may be made. The scope is defined by the appended claims.

The present application is based on and claims the benefit of priority of Japanese Patent Application No. 2009-253499, filed on November 4, 2009.

## Claims

1. A sales management apparatus configured for use in a license management system comprising a license management apparatus that manages a license of a program sold by the sales management apparatus, the license management apparatus including a group information storage unit for storing configuration information included in a registration request sent from the sales management apparatus, wherein
the sales management apparatus comprises:
a transmission unit that is configured to display a list of information of one or plural of the programs and to transmit the registration request to the license management apparatus, the configuration information in the registration request including information of a group including a combination of plural of the programs selected from the programs on the list of information;
a product information storage unit;
a product registration unit that is configured to receive an input of license information corresponding to the group, to associate the license information with the group, and to store the associated license information together with the group into the product information storage unit as product information; and
a sales management unit that is configured to transmit a list of the product information in response to a reception of a purchase request for purchasing the program, the product information being stored in the product information storage unit;
wherein
in response to a change instruction of a configuration of the group, the transmission unit is configured to transmit a change request of the group to the license management apparatus, the change request including the configuration information in accordance with the change instruction, and
the license management apparatus is configured to update the configuration information stored in the group information storage unit based on the configuration information included in the change request provided that a license of the program included in the group related to the change request is not in use.

2. The sales management apparatus according to claim 1, wherein
the product registration unit is configured to receive an input of different license information corresponding to a same group, and to store the product information corresponding to the same group into the product information storage unit.

3. The sales management apparatus according to claim 1 or 2, wherein
the sales management unit is configured to report the sales of the group to the license management apparatus, the group corresponding to the product information selected from the list of the product information,
in response to an input of a deletion instruction of the group, the transmission unit is configured to transmit a deletion request of the group to the license management apparatus, and
when the group related to the deletion request does not correspond to the group related to the sales of the group reported from the sales management unit, the license management apparatus is configured to delete the configuration information of the group related to the deletion request from the group information storage unit.

4. A license management apparatus configured for use in a license management system comprising a sales management apparatus, the license management apparatus managing a license of a program sold by the sales management apparatus, wherein
the sales management apparatus comprises:
a transmission unit that is configured to display a list of information of one or plural of the programs, and to transmit a registration request to the license management apparatus, the registration request including configuration information of a group including a combination of plural of the programs selected from the programs on the list of information;
a product information storage unit;
a product registration unit that is configured to receive an input of license information corresponding to the group, to associate the license information with the group, and to store the associated license information together with the group into the product information storage unit as product information; and
a sales management unit that is configured to transmit a list of the product information in response to a reception of a purchase request for purchasing the program, the product information being stored in the product information storage unit;
the license management apparatus including:
a group information storage unit configured to store the configuration information included in the registration request
wherein
in response to a change instruction of a configuration of the group, the transmission unit is configured to transmit a change request of the group to the license management apparatus, the change request including the configuration information in accordance with the change instruction, and
the license management apparatus is configured to update the configuration information stored in the group information storage unit based on the configuration information included in the change request provided that a license of the program included in the group related to the change request is not in use.

5. The license management apparatus according to claim 4, wherein
the product registration unit receives an input of different license information corresponding to a same group, and stores the product information corresponding to the same group into the product information storage unit.

6. The license management apparatus according claim 4 or 5, wherein
the sales management unit is configured to report the sales of the group to the license management apparatus, the group corresponding to the product information selected from the list of the product information,
in response to an input of a deletion instruction of the group, the transmission unit is configured to transmit a deletion request of the group to the license management apparatus, and
when the group related to the deletion request does not correspond to the group related to the sales of the group reported from the sales management unit, the license management apparatus is configured to delete the configuration information of the group related to the deletion request from the group information storage unit.

7. A license management system comprising:
a sales management apparatus according to any one of claims 1 to 3; and
a license management apparatus according to any one of claims 4 to 6 configured to manage a license of a program sold by the sales management apparatus.

## Patentansprüche

1. Verkaufsverwaltungsvorrichtung, die für die Verwendung in einem Lizenzverwaltungssystem konfiguriert ist, das eine Lizenzverwaltungsvorrichtung umfasst, die eine Lizenz eines durch die Verkaufsverwaltungsvorrichtung verkauften Programms verwaltet, wobei die Lizenzverwaltungsvorrichtung eine Gruppeninformationsspeichereinheit zum Speichern von Konfigurationsinformation beinhaltet, die in eine von der Verkaufsverwaltungsvorrichtung gesendeten Registrierungsanforderung eingeschlossen ist, worin
die Verkaufsverwaltungsvorrichtung umfasst:
eine Übertragungseinheit, die dafür konfiguriert ist, eine Informationsliste von einem oder mehreren der Programme anzuzeigen und die Registrierungsanforderung zur Lizenzverwaltungsvorrichtung zu übertragen, wobei die Konfigurationsinformation in der Registrierungsanforderung Information einer Gruppe einschließt, die eine Kombination von mehreren der Programme einschließt, die aus den Programmen auf der Informationsliste ausgewählt sind;
eine Produktinformationsspeichereinheit;
eine Produktregistrierungseinheit, die dafür konfiguriert ist, eine der Gruppe entsprechende Eingabe von Lizenzinformation zu empfangen, die Lizenzinformation der Gruppe zuzuordnen und die zugeordnete Lizenzinformation zusammen mit der Gruppe als Produktinformation in der Produktinformationsspeichereinheit zu speichern; und
eine Verkaufsverwaltungseinheit, die dafür konfiguriert ist, eine Liste der Produktinformation als Antwort auf einen Empfang einer Kaufanfrage zum Kaufen des Programms zu übertragen, wobei die Produktinformation in der Produktinformationsspeichereinheit gespeichert ist;
worin
die Übertragungseinheit dafür konfiguriert ist, als Antwort auf eine Änderungsanweisung einer Konfiguration der Gruppe eine Änderungsanforderung der Gruppe zur Lizenzverwaltungsvorrichtung zu übertragen, wobei die Änderungsanforderung die Konfigurationsinformation gemäß der Änderungsanweisung einschließt, und
die Lizenzverwaltungsvorrichtung dafür konfiguriert ist, die in der Gruppeninformationsspeichereinheit gespeicherte Konfigurationsinformation auf der Grundlage der in die Änderungsanforderung eingeschlossenen Konfigurationsinformation zu aktualisieren, vorausgesetzt, dass eine Lizenz des in die mit der Änderungsanforderung verknüpfte Gruppe eingeschlossenen Programms nicht in Verwendung ist.

2. Verkaufsverwaltungsvorrichtung nach Anspruch 1, worin
die Produktregistrierungseinheit dafür konfiguriert ist, eine Eingabe unterschiedlicher Lizenzinformation zu empfangen, die einer gleichen Gruppe entspricht, und die der gleichen Gruppe entsprechende Produktinformation in der Produktinformationsspeichereinheit zu speichern.

3. Verkaufsverwaltungsvorrichtung nach Anspruch 1 oder 2, worin
die Verkaufsverwaltungseinheit dafür konfiguriert ist, die Verkäufe der Gruppe an die Lizenzverwaltungsvorrichtung zu melden, wobei die Gruppe der aus der Liste der Produktinformation ausgewählten Produktinformation entspricht,
die Übertragungseinheit dafür konfiguriert ist, als Antwort auf eine Eingabe einer Löschungsanweisung der Gruppe eine Löschungsanforderung der Gruppe zur Lizenzverwaltungsvorrichtung zu übertragen, und
wenn die mit der Löschungsanforderung verknüpfte Gruppe nicht der Gruppe entspricht, die mit den von der Verkaufsverwaltungseinheit gemeldeten Verkäufen verknüpft ist, die Lizenzverwaltungsvorrichtung dafür konfiguriert ist, die Konfigurationsinformation der mit der Löschungsanforderung verknüpften Gruppe aus der Gruppeninformationsspeichereinheit zu löschen.

4. Lizenzverwaltungsvorrichtung, die für die Verwendung in einem Lizenzverwaltungssystem konfiguriert ist, das eine Verkaufsverwaltungsvorrichtung umfasst, wobei die Lizenzverwaltungsvorrichtung eine durch die Verkaufsverwaltungsvorrichtung verkaufte Lizenz eines Programms verwaltet, worin
die Verkaufsverwaltungsvorrichtung umfasst:
eine Übertragungseinheit, die dafür konfiguriert ist, eine Informationsliste von einem oder mehreren der Programme anzuzeigen und eine Registrierungsanforderung zur Lizenzverwaltungsvorrichtung zu übertragen, wobei die Registrierungsanforderung Konfigurationsinformation einer Gruppe einschließt, die eine Kombination von mehreren der Programme einschließt, die aus den Programmen auf der Informationsliste ausgewählt sind;
eine Produktinformationsspeichereinheit;
eine Produktregistrierungseinheit, die dafür konfiguriert ist, eine der Gruppe entsprechende Eingabe von Lizenzinformation zu empfangen, die Lizenzinformation der Gruppe zuzuordnen und die zugeordnete Lizenzinformation zusammen mit der Gruppe als Produktinformation in der Produktinformationsspeichereinheit zu speichern; und
eine Verkaufsverwaltungseinheit, die dafür konfiguriert ist, eine Liste der Produktinformation als Antwort auf einen Empfang einer Kaufanfrage zum Kaufen des Programms zu übertragen, wobei die Produktinformation in der Produktinformationsspeichereinheit gespeichert ist;
wobei die Lizenzverwaltungsvorrichtung einschließt:
eine Gruppeninformationsspeichereinheit, die dafür konfiguriert ist, die in die Registrierungsanforderung eingeschlossene Konfigurationsinformation zu speichern.
worin
die Übertragungseinheit dafür konfiguriert ist, als Antwort auf eine Änderungsanweisung einer Konfiguration der Gruppe eine Änderungsanforderung der Gruppe zur Lizenzverwaltungsvorrichtung zu übertragen, wobei die Änderungsanforderung die Konfigurationsinformation gemäß der Änderungsanweisung enthält, und
die Lizenzverwaltungsvorrichtung dafür konfiguriert ist, die in der Gruppeninformationsspeichereinheit gespeicherte Konfigurationsinformation auf der Grundlage der in die Änderungsanforderung eingeschlossenen Konfigurationsinformation zu aktualisieren, vorausgesetzt, dass eine mit der Änderungsanforderung verknüpfte Lizenz des in die Gruppe eingeschlossenen Programms nicht in Verwendung ist.

5. Lizenzverwaltungsvorrichtung nach Anspruch 4, worin
die Produktregistrierungseinheit eine Eingabe von unterschiedlicher Lizenzinformation empfängt, die einer gleichen Gruppe entspricht, und die der gleichen Gruppe entsprechende Produktinformation in der Produktinformationsspeichereinheit speichert.

6. Lizenzverwaltungsvorrichtung nach Anspruch 4 oder 5, worin
die Verkaufsverwaltungseinheit dafür konfiguriert ist, die Verkäufe der Gruppe an die Lizenzverwaltungsvorrichtung zu melden, wobei die Gruppe der aus der Liste der Produktinformation ausgewählten Produktinformation entspricht,
die Übertragungseinheit dafür konfiguriert ist, als Antwort auf eine Eingabe einer Löschungsanweisung der Gruppe eine Löschungsanforderung der Gruppe zur Lizenzverwaltungsvorrichtung zu übertragen, und
wenn die mit der Löschungsanforderung verknüpfte Gruppe nicht der Gruppe entspricht, die mit den von der Verkaufsverwaltungseinheit gemeldeten Verkäufen verknüpft ist, die Lizenzverwaltungsvorrichtung dafür konfiguriert ist, die Konfigurationsinformation der mit der Löschungsanforderung verknüpften Gruppe aus der Gruppeninformationsspeichereinheit zu löschen.

7. Lizenzverwaltungssystem, umfassend:
eine Verkaufsverwaltungsvorrichtung nach einem der Ansprüche 1 bis 3; und
eine Lizenzverwaltungsvorrichtung nach einem der Ansprüche 4 bis 6, die dafür konfiguriert ist, eine Lizenz eines durch die Verkaufsverwaltungsvorrichtung verkauften Programms zu verwalten.

## Revendications

1. Appareil de gestion de ventes configuré pour une utilisation dans un système de gestion de licences qui comprend un appareil de gestion de licences qui gère une licence d'un programme qui est vendu au moyen de l'appareil de gestion de ventes, l'appareil de gestion de licences incluant une unité de stockage d'information de groupe pour stocker une information de configuration qui est incluse dans une requête d'enregistrement qui est envoyée depuis l'appareil de gestion de ventes, dans lequel :
l'appareil de gestion de ventes comprend :
une unité d'émission qui est configurée de manière à ce qu'elle affiche une liste de l'information d'un ou de plusieurs des programmes et de manière à ce qu'elle émette la requête d'enregistrement sur l'appareil de gestion de licences, l'information de configuration dans la requête d'enregistrement incluant une information d'un groupe incluant une combinaison de plusieurs des programmes qui sont sélectionnés parmi les programmes sur la liste de l'information ;
une unité de stockage d'information de produit ;
une unité d'enregistrement de produit qui est configurée de manière à ce qu'elle reçoive une entrée d'information de licence qui correspond au groupe, de manière à ce qu'elle associe l'information de licence avec le groupe et de manière à ce qu'elle stocke l'information de licence associée en association avec le groupe à l'intérieur de l'unité de stockage d'information de produit en tant qu'information de produit ; et
une unité de gestion de ventes qui est configurée de manière à ce qu'elle émette une liste de l'information de produit en réponse à une réception d'une requête d'achat pour acheter le programme, l'information de produit étant stockée dans l'unité de stockage d'information de produit ;
dans lequel en réponse à une instruction de modification d'une configuration du groupe, l'unité d'émission est configurée de manière à ce qu'elle émette une requête de modification du groupe sur l'appareil de gestion de licences, la requête de modification incluant l'information de configuration conformément à l'instruction de modification ; et
l'appareil de gestion de licences est configuré de manière à ce qu'il mette à jour l'information de configuration qui est stockée dans l'unité de stockage d'information de groupe sur la base de l'information de configuration qui est incluse dans la requête de modification pourvu qu'une licence du programme qui est inclus dans le groupe qui concerne la requête de modification ne soit pas en cours d'utilisation.

2. Appareil de gestion de ventes selon la revendication 1, dans lequel :
l'unité d'enregistrement de produit est configurée de manière à ce qu'elle reçoive une entrée d'information de licence différente qui correspond à un même groupe et de manière à ce qu'elle stocke l'information de produit qui correspond au même groupe à l'intérieur de l'unité de stockage d'information de produit.

3. Appareil de gestion de ventes selon la revendication 1 ou 2, dans lequel :
l'unité de gestion de ventes est configurée de manière à ce qu'elle rapporte les ventes du groupe à l'appareil de gestion de licences, le groupe correspondant à l'information de produit qui est sélectionnée à partir de la liste de l'information de produit ;
en réponse à une entrée d'une instruction de suppression du groupe, l'unité d'émission est configurée de manière à ce qu'elle émette une requête de suppression du groupe sur l'appareil de gestion de licences ; et
lorsque le groupe qui concerne la requête de suppression ne correspond pas au groupe qui concerne les ventes du groupe qui sont rapportées depuis l'unité de gestion de ventes, l'appareil de gestion de licences est configuré de manière à ce qu'il supprime, de l'unité de stockage d'information de groupe, l'information de configuration du groupe qui concerne la requête de suppression.

4. Appareil de gestion de licences configuré pour une utilisation dans un système de gestion de licences qui comprend un appareil de gestion de ventes, l'appareil de gestion de licences gérant une licence d'un programme qui est vendu au moyen de l'appareil de gestion de ventes, dans lequel :
l'appareil de gestion de ventes comprend :
une unité d'émission qui est configurée de manière à ce qu'elle affiche une liste de l'information d'un ou de plusieurs des programmes et de manière à ce qu'elle émette une requête d'enregistrement sur l'appareil de gestion de licences, la requête d'enregistrement incluant une information de configuration d'un groupe incluant une combinaison de plusieurs des programmes qui sont sélectionnés parmi les programmes sur la liste de l'information ;
une unité de stockage d'information de produit ;
une unité d'enregistrement de produit qui est configurée de manière à ce qu'elle reçoive une entrée d'information de licence qui correspond au groupe, de manière à ce qu'elle associe l'information de licence avec le groupe et de manière à ce qu'elle stocke l'information de licence associée en association avec le groupe à l'intérieur de l'unité de stockage d'information de produit en tant qu'information de produit ; et
une unité de gestion de ventes qui est configurée de manière à ce qu'elle émette une liste de l'information de produit en réponse à une réception d'une requête d'achat pour acheter le programme, l'information de produit étant stockée dans l'unité de stockage d'information de produit ;
l'appareil de gestion de licences incluant :
une unité de stockage d'information de groupe qui est configurée de manière à ce qu'elle stocke l'information de configuration qui est incluse dans la requête d'enregistrement ;
dans lequel en réponse à une instruction de modification d'une configuration du groupe, l'unité d'émission est configurée de manière à ce qu'elle émette une requête de modification du groupe sur l'appareil de gestion de licences, la requête de modification incluant l'information de configuration conformément à l'instruction de modification ; et
l'appareil de gestion de licences est configuré de manière à ce qu'il mette à jour l'information de configuration qui est stockée dans l'unité de stockage d'information de groupe sur la base de l'information de configuration qui est incluse dans la requête de modification pourvu qu'une licence du programme qui est inclus dans le groupe qui concerne la requête de modification ne soit pas en cours d'utilisation.

5. Appareil de gestion de licences selon la revendication 4, dans lequel :
l'unité d'enregistrement de produit reçoit une entrée d'une information de licence différente qui correspond à un même groupe, et elle stocke l'information de produit qui correspond au même groupe à l'intérieur de l'unité de stockage d'information de produit.

6. Appareil de gestion de licences selon la revendication 4 ou 5, dans lequel :
l'unité de gestion de ventes est configurée de manière à ce qu'elle rapporte les ventes du groupe à l'appareil de gestion de licences, le groupe correspondant à l'information de produit qui est sélectionnée à partir de la liste de l'information de produit ;
en réponse à une entrée d'une instruction de suppression du groupe, l'unité d'émission est configurée de manière à ce qu'elle émette une requête de suppression du groupe sur l'appareil de gestion de licences ; et
lorsque le groupe qui concerne la requête de suppression ne correspond pas au groupe qui concerne les ventes du groupe qui sont rapportées depuis l'unité de gestion de ventes, l'appareil de gestion de licences est configuré de manière à ce qu'il supprime, de l'unité de stockage d'information de groupe, l'information de configuration du groupe qui concerne la requête de suppression.

7. Système de gestion de licences comprenant :
un appareil de gestion de ventes selon l'une quelconque des revendications 1 à 3 ; et
un appareil de gestion de licences selon l'une quelconque des revendications 4 à 6 qui est configuré de manière à ce qu'il gère une licence d'un programme qui est vendu au moyen de l'appareil de gestion de ventes.
